# EUROPEAN PATENT SPECIFICATION

(11) **EP 1 740 628 B1**
(45) Date of publication and mention of the grant of the patent: **10.03.2010**
(21) Application number: 05735627.1
(22) Date of filing: 29.04.2005
(51) Int. Cl.: C08F 220/30, C08F 220/06, C08G 63/00, C08G 65/00, C08G 69/00, C08G 71/00, C08G 64/02, C08G 64/04, G02C 7/10, G02C 7/04, G02C 7/02

(54) **PHOTOCHROMIC COMPOSITIONS AND ARTICLES COMPRISING POLYETHER OLIGOMER**
PHOTOCHROME ZUSAMMENSETZUNGEN UND GEGENSTÄNDE MIT POLYETHEROLIGOMER
COMPOSITIONS ET ARTICLES PHOTOCHROMIQUES CONTENANT DES OLIGOMERES DE POLYETHER

(30) Priority: 30.04.2004 AU 2004902302
(43) Date of publication of application: 10.01.2007
(73) Proprietor: Advanced Polymerik Pty Ltd, Notting Hill VIC 3168 (AU)
(72) Inventor: EVANS, Richard, Alexander, Glen Waverley, Victoria 3158 (AU); SKIDMORE, Melissa, Ann, McKinnon, Victoria 3204 (AU); LEWIS, David, Andrew, Marion, South Australia 5043 (AU)
(74) Representative: Hübner, Gerd
(86) International application number: PCT/AU2005/000611
(87) International publication number: WO 2005/105874

(56) References cited:
- EP-A- 1 560 893
- WO-A1-00/15629
- WO-A1-97/05213
- WO-A1-2004/041961
- PATENT ABSTRACTS OF JAPAN & JP 03 091 578 A (TORAY IND INC) 17 April 1991

## Description

### Field

The present invention relates to a class of functionalised photochromic dyes, to compositions containing the functionalised dyes, and to a method for forming polymeric compositions and polymeric articles exhibiting photochromic response.

### Background

Photochromism is a property which has been used in the manufacture of light transmissible articles for many years. A compound is said to be photochromic if it changes colour when irradiated and reverts to its original colour when irradiation ceases. The use of photochromics in the manufacture of spectacle lenses is a particular benefit as it enables the efficiency with which radiation is filtered to be varied with the intensity of radiation. Photochromics also have potential for use in a range of other polymeric compositions in products or in applications such as windows, automotive windshields, automotive and aircraft transparencies, coating compositions, optical switches and data storage devices. Photochromics could also be used to improve the security of documents and currency, for example by providing a security check under UV light or by indicating exposure to light during photocopying.

Despite the use of photochromic compounds in applications such as lenses there have been a number of problems which reduce the versatility and potential of this technology.

It is advantageous to control the rate at which photochromic polymeric compositions colour when exposed to radiation and fade on cessation of this exposure. In many situations, it is important to provide rapid colouring and fading kinetics particularly for lenses and spectacles. In some, however, the rate of coloration and fade is slow so that a compromise needs to be made in the components and properties of the substrate to enhance the rate of coloration and fade. For example, many photochromics colour and fade more rapidly in soft materials and yet, for applications such as spectacles or structural panels, abrasion resistance and hardness are important. This trade off between rate of transformation and hardness produces a dilemma for manufacturers between toughness and photochromic efficiency. In polymeric lenses many photochromics exhibit a slower rate of fade than is desirable. It is desirable to be able to control the fade kinetics of photochromic compounds in a wide range of media.

Another problem of photochomic polymeric compositions is the tendency of photochromic dyes to migrate within the matrix or "bloom" to the substrate surface. This may result in loss or significant reduction in photochromism over time. In order to fix a photochromic into a matrix it is possible to functionalise a photochromic with an unsaturated group. This results in the photochromic dye being tethered to the matrix if the unsaturated group is involved in the polymerization reactions that form the matrix. However unless the resulting matrix is relatively soft the rate of fade is adversely effected. Hu et al Pure Appl. Chem. AA(6) pp 803-810 (1996) also reported that tethering of a photochromic leads to the decolouration rate remaining almost constant with increasing dye concentration. In contrast untethered dyes undergo a significant change of rate with concentration. Further the fade observed is significantly slower when this photochromic is tethered at concentrations less than 15 wt %. As commercial application will generally have dye concentrations below 15wt%, the tethering of a dye to a polymer matrix is expected to slow the fade speed.

A number of other workers have examined tethered photochromies.

International Publication No. 97/05213 (Sola International Holdings Ltd) describes a photochromic monomer which contains an organic spacer group which is in the preferred aspect a polyalkylene oxide of from 0 to 5 repeating units.

International Publication No. WO01/15629 (PPG Industries) discloses napthopyran photochromic compounds comprising a substituent

-A[(C2H₄O)ₓ(C₃H₆O)_{y}(C₄H₈O)Z]D

where the total of x, y and z is 1 to 50 and D is a polymerisable group.

The range of "contemplated napthopyrans" disclosed on page 3 is limited to compounds containing up to 4 ethylene oxide groups and result in a reduction in fade speed of up to 28%. The polyalkylene glycols are used to increase the compatibility of the dye resin with the matrix and the resins and oligomer are chosen for their compatibility. There is little reduction in fade speed as a result of varying the number of alkoxy units. Indeed 3 units provides the best fade speed of the exemplified 1 to 4 units. The application only measures fade speed in compositions in which the dye is not tethered and it is not reactive with the matrix.

In their subsequent application (US Pub. 2003/0141490) PPG Industries attempt to provide a photochromic which is less dependant on the matrix in which it is used. The application also has the aim of modifying the photochromic so it can be more compatible with the host matrix. In order to reduce the half Ilife, polymerisable photochoromic compounds of the type disclosed in International Application WO97/05213 (Sola) and polymerisable napthopyrans disclosed in the previous PPG Industries application are reacted with a copolymerisable material to form a polymer of a glass transition temperature less than 23°C. The subsequent incorporation of the low Tg photochromic copolymer (which is free of polymerisable groups), into a rigid polymer matrix is said to provide a fade speed which is less dependant on the nature of the matrix.

Another problem associated with photochromic compounds is their lifetime. Many photochromic compounds have a relatively short lifetime before they fatigue, due to chemical degradation, and either no longer undergo reversible colour change or become less efficient. This is a problem, for example, in more hostile chemical environments such as in high index lenses containing sulfur-containing polymers or the surface of paper.

Another example of cases where control of fade is desirable is with a mixture of photochromic compounds. It is sometimes necessary to use a mixture of photochromic compounds to achieve the desirable colour such as brown or grey. However, the different photochromic dyes used in combination to achieve these colours often differ slightly in the rate of fade so that the mixture undergoes an unattractive variation in colour during fade. In other cases it may be desirable to reduce the rate of fade so that colouration or fade is gradual and controlled. For example in optical switches it may be desirable for the photochromic article to undergo a very gradual change.

### Summary

We have now found that the photochromic properties of photochromic dyes in a polymeric substrate can be controlled by using polymerisable dye monomer which is reactive during the polymerization process wherein the dye monomer comprises a photochromic moiety and one or more pendant oligomer groups having a reactive group so that the photochromic dye becomes tethered to the host matrix during curing. We have found that by using a photochromic having certain polyether chain oligomer and/or choosing a test matrix of relatively low compatability with the polyether a dramatic improvement in fade characteristics can be obtained. This result is achieved even when the resulting cured polymer incorporating the dye monomer has a relatively high Tg. Without wishing to be bound by theory we believe that regulating the chain length and/or the compatibility provides a nanoenvironment for the photochromic moiety that produces a significant change in the rate of fade. This change is particularly significant when the host matrix and oligomer linking group are chemically different.

In one aspect the invention provides a polymerizable composition for forming a photochromic article of glass transition temperature of at least 50°C on curing, the composition comprising:
(a) a polymerizable composition comprising a monomer component; and
(b) a photochromic dye monomer comprising a photochromic moiety and at least one oligomeric group having at least one group reactive with the monomer component during curing wherein the oligomer group comprises at least seven polyether monomer units selected from alkyleneoxy and haloalkyleneoxy.

The polymerizable composition preferably comprises less than 20 mole percent of the predominant alkyleneoxy or halo alkyleneoxy monomer unit constituted at least one oligomer group.

The composition of the invention will typically, when used, provide at least a 30% reduction in the t_{½} of the photochromic when compared with the corresponding composition containing the electronically equivalent photochromic dye in the absence of the oligomer.

The polymerizable composition may be in the form of a coating composition or casting composition photochromic dye monomer of formula I:

(PC)_{q}-(LRₙ)ₘ I

wherein:
PC is a photochromic moiety;
R is an oligomer;
m and n are independently selected integers from 1 to 3;
q is 1 or 2;
R is independently selected from oligomers comprising at least 3 and more preferably at least 5 and more preferably at least 7 monomeric units selected from the group consisting of alkyleneoxy and fluorinated alkyleneoxy; and
wherein at least one oligomers R comprise at least one group reactive with the monomer component on curing of the polymerisable composition.

In a particularly preferred embodiment the invention provides a composition for forming a photochromic light transmissible article the composition comprising:
a polymerizable composition comprising a monomer component including a crosslinking monomer; and
a photochromic dye monomer of formula I reactive with the monomer component during curing.

The polymerizable composition may comprise one or more of monomers, prepolymers, crosslinking monomers and binders.

In a second aspect the invention provides a photochromic compound which is an adduct comprising a photochromic moiety and at least one pendant oligomers comprising a functional group reactive with a monomer composition for forming a photochromic polymeric article.

In a third aspect the invention provides a photochromic article having a Tg of at least 50°C. comprising a polymeric matrix formed by polymerization of a monomer composition comprising a photochromic monomer comprising a photochromic moiety which is tethered to a reactive group which has undergone reaction to become part of the polymer via a pendant oligomer comprising at least 3 and more preferably at least 5 and more preferably at least 7 monomeric units selected from the group consisting of alkeneoxy and haloalkeneoxy.

The polymeric substituent may be a homopolymer, a copolymer of two or more the ether or a copolymer comprising one or more of the ether units and additional monomeric units derived from optionally substituted olefinic compounds. Where the oligomer is a copolymer the monomers may be in blocks or randomly distributed. It may be preferred to use blocks of specific monomer at the end of the polymer chain remote from the photochromic to enhance nanoencapsulation. For example alkylene or substituted alkylene blocks may space the ether units from the photochromic moiety.

As a result of the oligomer tether the rate of fade of the photochromic is significantly increased compared with the corresponding composition comprising an electrically equivalent dye without the pendant oligomer. Generally the photochromic article is solid at ambient temperature and typically it has a Tg of at least 50°C, preferably at least 70°C, and most preferably at least 80°C.

In a fourth aspect the invention provides a process for preparing a photochromic article comprising:
(a) forming a polymerizable composition as hereinabove described;
(b) casting the photopolymerizable composition or applying it as a coating to a substrate;
(c) polymerizing the polymerizable composition to provide a polymeric matrix incorporating a photochromic monomeric unit comprising a photochromic moiety covalently tethered to the matrix polymer via an oligomer comprising at least 7 monomeric units selected from the group consisting of alkyleneoxy and fluorinated alkyleneoxy.

In the preferred embodiment of the invention the oligomer significantly increases the rate of fade so that the fade half life and/or the time taken to reach a ¾ reduction in absorbance is reduced by at least 30% compared with the corresponding composition containing electronically equivalent photochromic dye in absence of the oligomers and preferably at least 50%.

The advantage of the photochromic compound of the invention (comprising at least one oligomer having at least one reactive functional group) is that the oligomer chain may coil about or near the photochromic group to provide nanoencapsulation facilitating more rapid conversion between ring-open and ring-closed forms. The oligomer chains may provide a low Tg nanoenvironment or otherwise favourably alter the local environment. Accordingly for faster colouration and fade, it is preferred that the oligomer attached to the photochromic compound of the invention has a relatively low Tg. For example the Tg is preferably less than 25°C. More preferably the compounds of the invention are non-crystalline at room temperature and more preferably liquid at room temperature, this making them easier to disperse and dissolve in the monomeric composition.

A method of slowing the colouration and fade is to use high Tg oligomers. This will restrict switching by providing a local rigid nano-environment to give slower colouration and fade. This is in contrast to low Tg oligomers that provide a local soft, flexible environment that provide rapid switching.

Preferably the oligomer will be of sufficient length to provide a rate of fade for the photochromic which is significantly greater (that is, fade occurs more quickly) than the corresponding electronically equivalent photochromic dye without the oligomer.

The compatibility of the oligomer chain with the host matrix may also influence the rate of fade.

The trend in compatibility of an oligomer with the polymer matrix in many cases is consistent with polarity. Thus, an oligomer of similar polarity to the polymer matrix is regarded as compatible. For example polyalkylene glycol oligomer groups are compatible with polar polymeric hosts such as acrylate and polyalkylene and poly(arylalkylene) oligomers are compatible with non-polar resins such as polyolefins and styrenic polymers (eg polystyrene, SBR etc).

Contrary to what may be expected from the prior art we have found that the reduction in half-life is generally greater for oligomers when the constituent monomers are less compatible with the host matrix.

We have also found that the nanoenvironment provided by the presence of one or more oligomer chains significantly improves the photochromic life of compounds of the invention when compared with unsubstituted photochromic compounds.

### Detailed Description

The invention relates to dye monomers comprising a photochromic moiety and at least one pendant oligomer group selected from the group consisting of polyalkyleneoxy and halogenated polyalkenyleneoxy.

Examples of polyalkyleneoxy and fluorinated polyalkyleneoxy include polymers of one or more monomers selected from the group consisting of ethyleneoxide, propyleneoxide, perfluoroethylene oxide, perfluoropropyleneoxide and copolymers thereof.

The oligomer also may include monomeric units derived from monomers other than alkyleneoxy or fluorinated alkyleneoxy. For example the compound may include dialkylsiloxane units alkylene units and substituted alkylene units. There will, however, be at least seven units selected from alkyleneoxy and fluorinated alkyleneoxy.

The relative compatibility of the units and matrix will influence the number of units required to achieve a significant reduction in half-life. Where the monomers and relatively compatible longer chains may be required whereas when the monomers are relatively incompatible with the matrix shorter chains may be sufficient to achieve the same reduction.

At least one oligomer has at least one group reactive with the monomer composition for forming the polymer matrix. In this way the dye becomes tethered to the backbone of the polymer matrix via one or more reactive oligomer and yet has a rate of fade which is enhanced when compared with a corresponding composition containing the electronically equivalent photochromic compound without a oligomer between the dye and reactive group.

The dye may comprise additional non-reactive or reactive oligomer groups and may comprise one, two, three or more reactive groups in an oligomer chain. It is preferred that at least one reactive group is a terminal reactive group and to optimise nanoencapsulation in many instances it is preferred to use a single terminal reactive group.

The modified photochromics of the invention generally are of formula I

(PC)ᵥ-(L(R)ₙ)ₘ I

wherein
PC is the photochromic moiety;
L is a bond or linking group;
R is an oligomer chain comprising at least one group reactive with a monomer composition during curing;
n is an integer of from 1 to 3;
m is an integer of from 1 to 3; and
q is 1 or 2; and
wherein the total number of monomer units in the oligomer groups (R) is at least 7.

Preferably R is independently selected from oligomers comprising at least 7 monomeric units selected from the group consisting of alkyleneoxy, fluorinated alkyleneoxy; and wherein at least one oligomer R comprises at least one group for polymerizing with the monomer composition on curing of the polymerizable composition.

The nature of the polymerizable group may be chosen having regard to the nature of the polymer matrix and the monomers to be used in preparation of the polymer matrix. Preferably the group will be reactive with the monomer composition used to prepare the polymer matrix under the required curing conditions.

The reactive group may polymerize with the polymer matrix by any of a range of reaction types such as radical polymerization, ionic polymerization, step growth addition reactions, condensation polymerisation reactions or sol-gel type reactions.

The optimum reaction type and reactive group will depend on the host matrix and the matrix of the modified photochromics.

In some cases (particularly where stepwise addition polymerization is required) it is preferred that the photochromics monomer of the invention comprise a plurality of reactive groups. A plurality of reactive groups may enable a significant number of photochromic monomers to be copolymerized or reacted into the backbone without terminating polymer growth. For example, the terminal reactive groups may together provide a plurality of active hydrogen containing groups such as alcohol, thiol, amine or acid groups for allowing chain growth by addition or condensation polymerization to prepare polyamides, polyurethanes, polyesters, thiol-ene polymers, epoxide polymers and phenolic resins.

The photochromic monomer may be incorporated into an existing polymer, for example by reactive processing of the polymer during extrusion or other processing step. Examples of reactive processing include grafting and transesterification.

Examples of preferred polymerizable reactive groups may be selected from the group consisting of amino; alkylamino (including mono and di-alkylamino); hydroxyl; thio; mercapto; epoxy; carbamate; alkylhalo; unsaturated groups (such as acryloyl, methacryloyl, acryloyloxy and methacryloyloxy), maleimides; the group of formula -SiX¹X²X³ wherein X¹, X² and X³ are independently selected from the group consisting of hydrogen, halogen, hydrocarbyl and hydrocarbyloxy and wherein at least one of X¹, X² and X³ is selected from hydrogen, halogen and hydrocarbyloxy; dithioester (-S-C=S-R); trithiocarbonate (-S-C=S-S-R); dithiocarbamate (-S-C=S-NRR); xanthate (-S-C=S-O-R); carboxylic acids; carboxylic esters; and C₁ to C₆ alkyl substituted with a group selected from hydroxy, thio, amino, alkyl amino, carboxyl, (C₁ to C₆ alkoxy)carboxyl, acryloyl, methacryloyl, acryloyloxy and methacryloyloxy.

In one embodiment the reactive group is a radical capping group adapted to be reversibly cleaved from the compound under activating conditions to provide a reactive radical. Such radical groups will be known to those skilled in the art for use in living free radical polymerisation and include groups such as dithioester (-S-C=S-R); trithiocarbonate (-S-C=S-S-R); dithiocarbamate (-S-C=S-NRR); xanthate (-S-C=S-O-R); carboxylic acids; carboxylic esters and nitroxide.

Preferably halogen is chloro; preferred hydrocarbyl is C₁ to C₆ alkyl and phenyl; preferred hydrocarbyloxy is C₁ to C₆ alkoxy.

The reactive group may be an unsaturated group. Most preferably the unsaturated group is selected from the group consisting of (meth)acryloyl, (meth)acryloyloxy, allyl, allyloxy, maleimides, styryl and norbomenyl. The reactive group may also be of formula SiX¹X²X³ wherein X¹, X² and X³ are independently selected from the group consisting of hydrogen, C₁ to C₄ alkyl, halogen and C₁ to C₄ alkoxy and at least one of X¹, X² and X³ is selected from hydrogen, halogen and C₁ to C₄ alkoxy.

Examples of suitable oligomer groups R include groups of formula II:

-(X)ₚ(R¹)_{q}-X'(R²)_{w} II

wherein
X is selected from oxygen, sulfur, amino, substituted amino and C₁-C₄ alkylene;
X' is a bond or an attachment group for the one or more reactive groups; p is 0 or 1;
q is the number of monomer units;
R¹ which may be the same or different are selected from the group consisting of:
C₂ to C₄ alkyleneoxy; and
C₂ to C₄ haloalkyleneoxy such as perfluoroalkyleneoxy;
R² is selected from the group consisting of hydroxy, mercapto, optionally substituted amino, (meth)acryl, (meth)acryloxy, allyl, allyloxy, epoxy and isocyanato, ketone, aldehyde, carboxylic acid, trithiocarbonates, xanthates, dithiocarbamates, dithioesters, ortho esters, (mono, di and tri) alkoxy silane, (mono, di and tri) halo silanes, (mono, di and tri) hydro silanes, alkyl halide, maleimido and other unsaturated C=C containing groups; and
w is the number of reactive terminal groups and is preferably from 1 to 3.

The oligomer may comprise alkylene groups. Examples of preferred optionally substituted C2 to C4 alkylene include units of formula III: 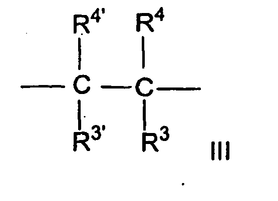 wherein
R⁴ is selected from the group consisting of hydrogen, halogen, alkyl, hydroxy, hydroxy alkyl, nitrile and alkoxy;
R³ is selected from the group consisting of hydrogen, halogen, hydroxy, alkoxy, aryl, aryloxy, heterocyclic, arylalkyl, alkylaryl, carboxyl, nitrile, alkoxycarbonyl, substituted alkoxycarbonyl, carbamoyl, N-alkylcarbamoyl, N, N-dialkylcarbamoyl, carbaniloyl, alkylphenylaminocarbonyl, alkoxyphenylaminocarbonyl, acyl, substituted acyl and the groups of formula:

   -L'-(O)_{q}-(Z-O)ₚ-ZY';

   and 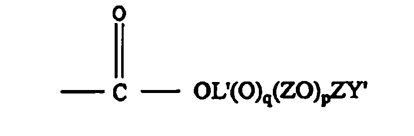
wherein
p is the number of (ZO) units and is preferably from 1 to 20 and more preferably 2 to 15, q is 0 or 1, Z Is selected from the group consisting of C₂ - C₄ alkylene, dialkylsilyl, diarylsilyl and diaryloxysilyl; L' is a bond or a linking group such as C₁ to C₆ alkylene, aryl, alkaryl and aralkyl; and Y' is a terminal group selected from the group consisting of hydrogen, alkyl, hydroxyl and alkoxy, alkoxyalkoxy, hydroxyalkoxy and aryloxy, tri-(C₁ to C₆ alkyl)silane, di(C₁ to C₆ alkyl)phenyl silane;
R³ is hydrogen halogen and R² and R^{2'} may together form a group of formula 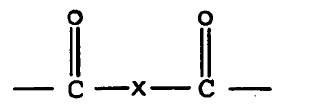 wherein
   X is selected from the group consisting of oxygen and the group NR⁷R⁸ wherein R⁷ and R⁸ are independently selected from the group of hydrogen, alkyl, aryl, substituted alkyl and substituted aryl.
   R^{4'} is selected from hydrogen and halogen.

The polymer comprising the monomeric unit of formula Ib may be a homopolymer or copolymer. It may be a copolymer of two or more units of formula Ib or a copolymer of at least one unit of formula Ib and one or more comonomer units derived from unsaturated compounds.

Where the polymer is a copolymer suitable comonomer units may include one or more distinct units of formula III or comonomers of formula 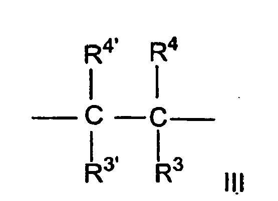 wherein R³, R⁴, R⁵ and R⁶ are independently selected from the group consisting of hydrogen, halogen, alkyl and haloalkyl. The copolymer may be a random or block copolymer.

The compounds of the invention can be designed to tailor the photochromic properties for specific applications. The length, population and distribution of monomer types (in particular the type, population and distribution of function substituents) can be used to control one or more properties of the photochromic article selected from fatigue resistance, fade, activation speed and temperature sensitivity.

The type and properties of the polymeric substituent may also be used to protect the photochromic from adverse chemical environments encountered during formation or processing of the host matrix. For example, the initiator systems used in curing polymerizable compositions to form photochromic articles such as spectacles and glazing panels typically have an adverse effect on a photochromic dye, in some cases even destroying photochromism. It may be possible to reduce this deleterious effect by choosing a polymeric substituent which protects the photochromic moiety under such conditions.

Without wishing to be bound by theory, the use of a tether with known properties can be thought of as providing a statistical or probabilistic encapsulation (SoPE) in contrast to a guaranteed encapsulation process. It is thought the protection of the dye or dye aggregates from the host matrix relies on the coiling of the attached oligomer/polymer to create a free volume or a localised matrix of controlled properties. This of course means that the efficiency of the SoPE is likely to vary with the dye's steric requirements for switching, the length of the oligomer, the compatibility of the oligomers with the matrix and the matrix itself.

The oligomer's compatibility is likely to influence the efficiency of the process. At one extreme, a highly incompatible oligomer would maximise the SoPE effect but the risk of gross phase separation increases. At the other extreme, if the oligomer is highly compatible with the matrix, then it may be less localised near the dye and thus a longer chain length of oligomer may be needed to provide the same protection or effect obtained by a shorter but less compatible oligomer. Thus the choice of oligomer and its size must be chosen taking such factors into account. Typically when faster switching speeds are required thus oligomer/polymer tethers with low Tg's (< room temperature) are needed.

The method is an "add-on" type modification and has the flexibility to accommodate the steric requirements of different classes of the photochromics. A particularly sterically demanding dye may need longer oligomers or ones of different geometry. Typically, the size of the oligomer should be as small as possible to maximize the photochromic content while still providing the desired photochromic switching speed and minimizing any effect on the mechanical properties of the host matrix.

Particularly preferred examples of the dye monomer are of formula IA to IF:

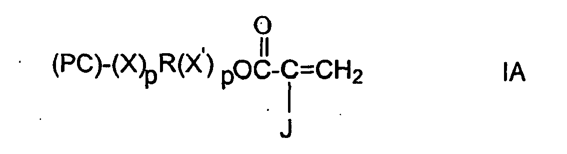

(PC)-(X)ₚR(X')ₚ-CH=CH₂ IB

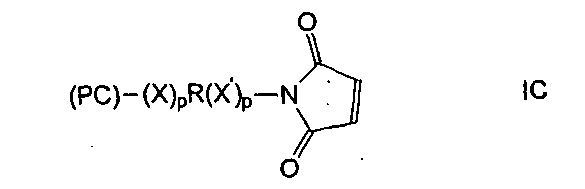

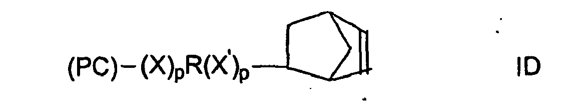

(PC)-(X)ₚR(X')ₚ(YH)_{w} IE

(PC)-XₚR(X')ₚ(NR'R")_{w} IF

wherein:
X is a linking group for the oligomer;
X' is bond or attachment group for the one more reactive groups and is preferably selected from the group consisting of C₁ to C₄ alkylene;
where Y is oxygen or sulphur;
w is the number of hydroxy or thiol groups at the terminal end of the oligomer and is preferably 1 to 3;
p is independently selected from 0 and 1;
PC is a photochromic moiety;
J is hydrogen or C₁ to C₄ alkyl (preferably hydrogen or methyl);
R is an oligomer as defined;
R' is hydrogen, C₁ to C₆ alkyl or substituted (C₁ to C₆) alkyl; and
R" is hydrogen (C₁ to C₆) alkyl or substituted C₁ to C₆) alkyl.

Preferably L is selected from the group consisting of a bond or the polyradical selected from the group of formula IIa through to IIp 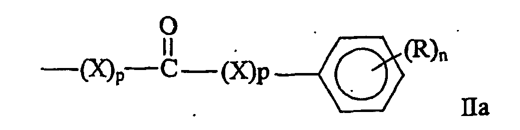 wherein n is from 1 to 3;

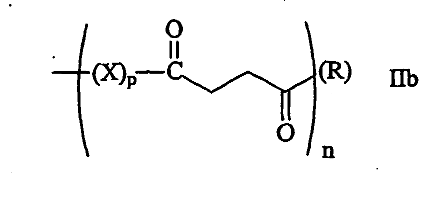

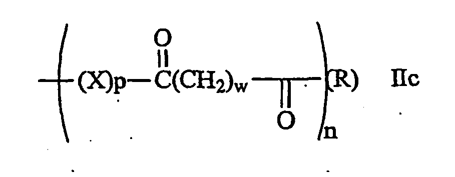

-(X)ₚ(CH₂)ₙCHR⁴(R) IId

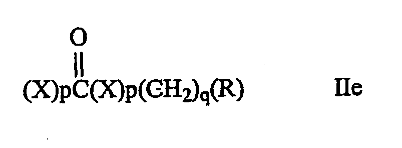

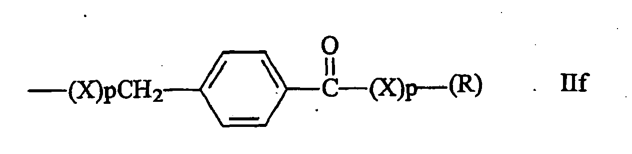

-(X)ₚ(C₂ to C₆ alkylene)-(X)ₚ-(R) IIg

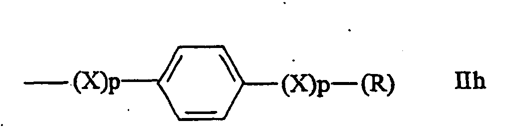

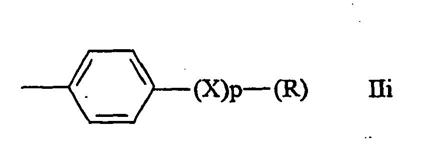

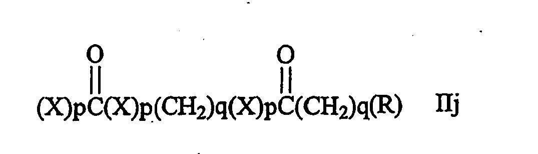

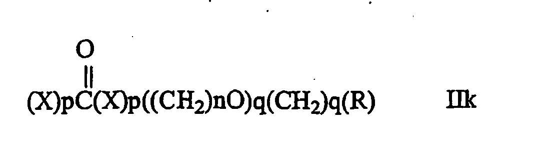

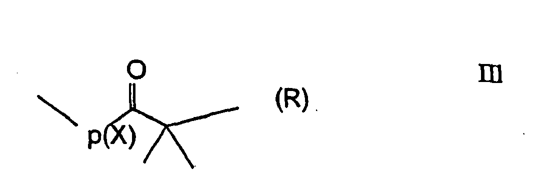

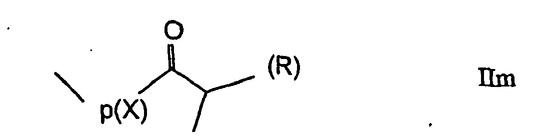

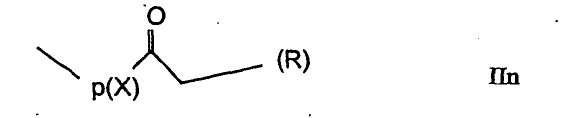

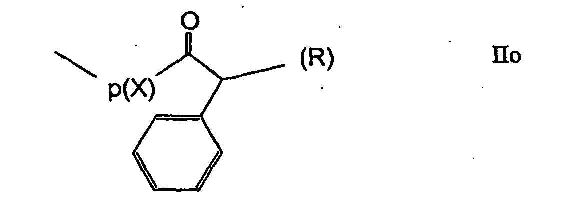

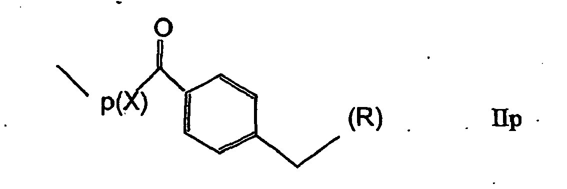

wherein in the formula IIa to IIp:
X which may be the same or different is as hereinbefore defined;
R⁴ is selected from the group consisting of hydroxy, alkoxy, amino and substituted amino such as alkyl amino;
n is an integer from 1 to 3;
w is an integer from 1 to 4;
q is an integer from 0 to 15;
p which when there is more than one may be the same or different is 0 or 1; and
(R) shows the radial for attachment of oligomer R.

The purpose of the linking group is to join the oligomer(s) to the photochromic moiety. A linking group may be needed when the oligomer has a functional group that cannot be used directly to join to the dye. For example polyethylene glycol methacrylate can be converted to an acid by reaction with succinic anhydride. This could then be readily joined to the hydroxy group on a photochromic moiety such as 9'-hydroxy-1,3,3-trimethylspiro[indoline-2,3'-93H]naphtha[2,1-b][1,4]oxazine].

The linking group may in some cases be available as part of the oligomer.

Specific examples of linker groups L include:
(i) a bond
(ii) 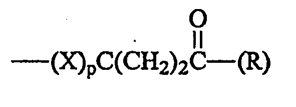
(iii) 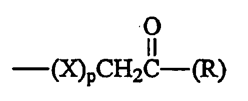
(iv) 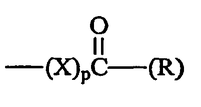
(v) 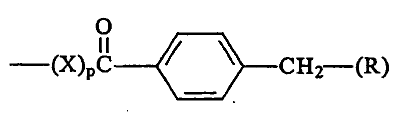
(vi) 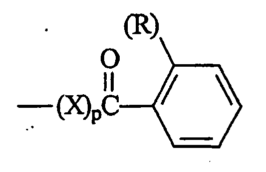
(vii) 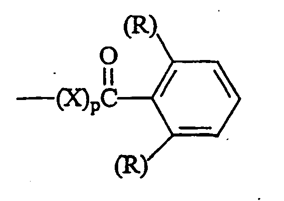
(viii) 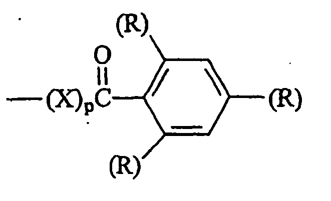
(ix) 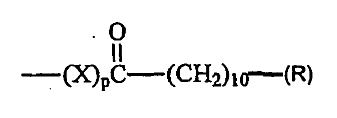
(x) 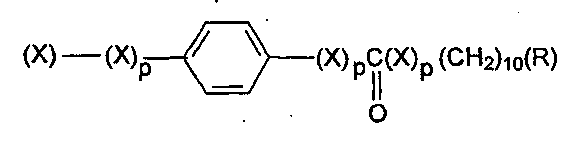
(xi) 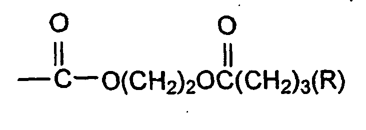
(xii)

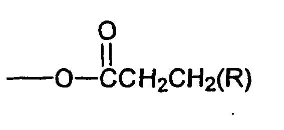

The compounds of the present invention comprise oligomer groups wherein the total number of monomeric units is as least 5, preferably at least 7, and most preferably at least 9.

The oligomer(s) may be in the form of linear chains, branched chains, copolymers including block or random copolymers; however, it is particularly preferred that each oligomer comprise at east 5 monomer units of the same type, and more preferably at least 7 and most preferably at least 9.

Preferably, the monomer units are selected from the groups consisting of alkyleneoxy, haloalkyleneoxy such as perfluoroalyleneoxy. More preferred monomer units are alkyleneoxy, and even more preferred are ethyleneoxy, propyleneoxy and random and block copolymers thereof. The oligomer will comprise at least seven groups selected from haloalkyleneoxy, and alkyleneoxy.

The photochromic compound of the invention of formula I includes up to three groups each of which may include one, two or three oligomer groups R.

Examples of preferred oligomer groups include:

(i) -(X)ₚ(CH₂CH₂O)ₓX'R²

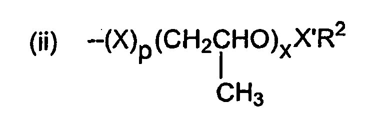

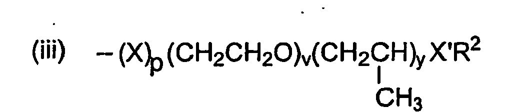

(iv) -(X)ₚCH₂(OCF₂CF₂)ₓX'R²

wherein the monomer units are distributed randomly or in block form

(v) -Xₚ(CF₂CF₂O)ₓ-(CF₂)ₙX'R²

wherein X, X' and R² and p are hereinbefore defined and x, v and y are the number of repeating units, and alkyl is C₁ to C₂₀ alkyl, preferably C₁ to C₁₀ alkyl such as methyl, ethyl, propyl, butyl, pentyl or hexyl. Preferably the compounds of the invention include at least one oligomer group wherein the number of monomer units (x or y+v in the above examples) is at least 7 and are most preferably at least 9.

The most preferred oligomer groups contain at least 9 monomer units. The monomer units may be up to thirty or more units in length but we have found the range of from 9 to 30 to be particularly suitable.

It will be appreciated by those skilled in the art that the presence and nature of the group X is dependent on the linker group. When the linker group is a bond and the oligomer is linked to a heteroatom such as nitrogen, then p is preferably zero.

However, when the group L-(R)ₙ is attached to a carbon radical of the photochromic moiety, or a linker of formula IIa to Ilk then in the oligomer group R the integer, p is preferably 1.

In one embodiment of the invention the oligomer substituents generally comprise a plurality of monomer units of formula I.

Preferably in the monomeric group of formula I, the group R¹ is selected from the group consisting of hydrogen, halogen, C₁ to C₆ alkyl, C₁ to C₆ alkoxy, C₁ to C₆ hydroxyalkyl and C₁ to C₆ alkoxy. More preferably R¹ is hydrogen or C₁ to C₆ alkyl and most preferably R¹ is hydrogen or methyl.

Preferably in the monomeric group of formula I the substituent R² is selected from the group consisting of hydroxy, C₁ to C₆ alkoxy, carboxydecayl, heterocyclic aryl, aryloxy heterocyclic comprising from 5 to 10 ring members and one or two rings and from one to three heteroatoms selected from nitrogen, oxygen and sulfur and optionally substituted by C₁ to C₆ alkyl, aryl (C₁ to C₆), (C₁ to C₆ alkyl)aryl, caroboxyl, nitrile, C₁ to C₁₀ alkoxycarbonyl, alkoxycarbonyl substituted with a substituted selected from halogen, C₁ to C₆ alkoxy akoxy, hydroxy, carbamoyl, N-(C₁ to C₆ alkyl)carbamoyl, N,N-di(C₁ to C₆ alkyl)carbamenyl, carbaniloyl (C₁ to C₆ alkyl)phenylaminocarbonyl, (C₁ to C₆ alkoxy)phenylaminocarbonyl, formyl aroyl, (C₁ to C₆ alkoxy)carbonyl substituted by a substituent selected from the group of hydroxy and C₁ to C₆ alkoxy; and the groups of formula:

-L'-(O)_{q}-(Z-O)ₚ-ZY;

and 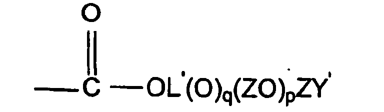 wherein
q is 0 or 1, Z is selected from the group consisting of ethylene, propylene and dimethylsilyl and p is an integer from 2 to 20; L is a bond on a linking group selected from C₁ to C₈ and Y is selected from the group consisting of C₁ to C₈ alkyl, C₁ to C₆ alkyl substituted with a group selected from hydroxy, C₁ to C₆ alkoxy carboxyl, and (C₁ to C₆ alkoxy)carboxyl (C₁ to C₆ alkyl)dimethylsilyl and phenyldimethylsilyl.

More preferably R² is selected from the group consisting of carboxyl, heterocyclic of from 5 to 10 ring members comprising one or two rings and from one to three ring members optionally substituted by C₁ to C₆ alkyl, C₁ to C₆ alkoxy carbonyl, (C₁ to C₆ alkoxy) substituted (C₁ to C₆ alkoxy)carbonyl, carbamoyl, (C₁ to C₆ alkyl)carbamoyl, formyl, (C₁ to C₆ alkyl)carbanyl and the group of formula:

-L'-(O)_{q}-(Z-O)ₚ-ZY';

and 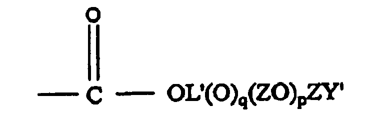 wherein
p is from 2 to 20, q is 0 or 1, Z is ethylene, propylene, dimethylsilyl and dimethoxysilyl; L' is a bond or C₁ to C₄ alkyl; and Y' is selected from the group consisting of hydrogen, C₁ to C₆ alkyl, C₁ to C₆ haloalkyl, aryl, and C₁ to C₆ alkyl substituted with a substituent selected from C₁ to C₆ alkoxy, carboxyl, (C₁ to C₆ alkoxy)carbonyl, (C₁ to C₆ alkyl)dimethylsilyl and phenyldimethylsilyl; R^{2'} is hydrogen or methyl; and
R² and R^{2'} may together form a bridging group of formula: 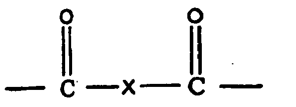 where X is selected from oxygen and NR⁷, wherein R⁷ is selected from C₁ to C₆ alkyl, C₁ to C₆ alkoxy, (C₁ to C₆ alkyl).

In one embodiment the compound of the invention comprises a polymeric substituent R of formula I wherein R² is a substituent of formula:

-L'-(O)_{q}-(Z-O)ₚ-ZY';

and

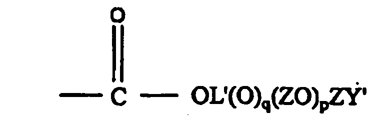

Examples of monomers which may be used to provide such monomeric units include:
Monomers of formula
   (iv) The oligomers may include additional monomer units such as 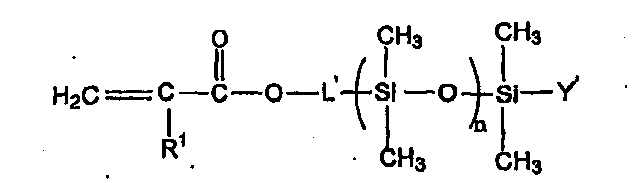 wherein R¹ is hydrogen C₁ to C₆ alkyl such as methyl, L' is C₁ to C₆ alkylene, Y is C₁ to C₆ alkyl and n is an integer from 2 to 30 preferably from 4 to 20; monomers of the type such as monomethacryloxypropyl terminated polydimethylsiloxone are commercially available; and/or 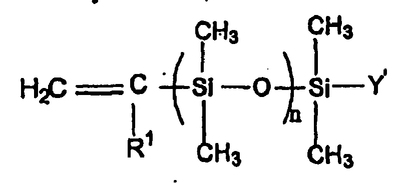 wherein R¹ is hydrogen or C₁ to C₆ alkyl such as methyl, Y' is C₁ to C₆ alkyl and n is from 2 to 30 and preferably 4 to 20; 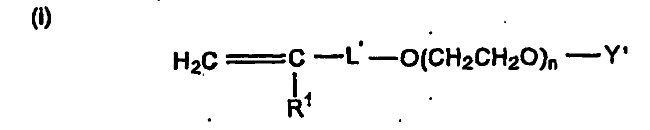 wherein R¹ is hydrogen or C₁ to C₆ alkyl such as methyl, L' is C₁ to C₆ alkylene and Y' is C₁ to C₆ alkyldimethylsilyl. Specific examples of such compounds include monoalkylmonotrimethylsiloxy-terminated polyethylenenoxide. 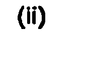 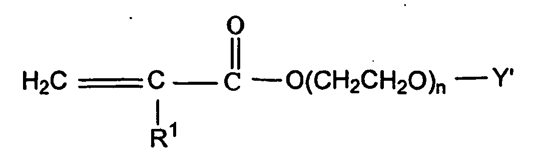 wherein R¹ is hydrogen or C₁ to C₆ alkyl such as methyl, n is from 2 to 30 and preferably 4 to 20 and Y is C₁ to C₆ alkyl or (C₁ to C₆ alkyl)dimethylsilyl. Specific examples of suitable monomers of this type include monomethacryloxy,monomethylsiloxy-terminated polyethyloxide;

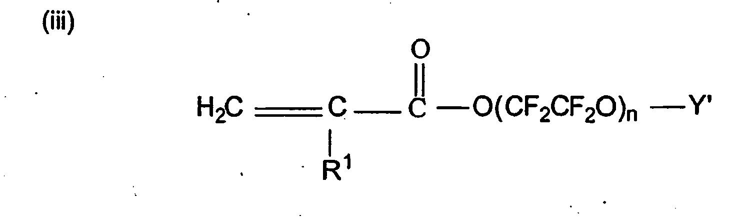

The oligomer may comprise additional monomers other than alkyleneoxy and fluoroalkyleneoxy. Specific examples of monomers that may be used to preside additional monoamine groups that may comprise the polymeric substituent in addition to the alkyleneoxy and fluoroalkyleneoxy monomer may be selected from the group consisting of acrylic acid, methyl acrylate, ethyl acrylate, propyl acrylate, butyl acrylate, hexyl acrylate, isohexyl acrylate, cyclohexyl acrylate, isobornyl acrylate, ethoxyethyl acrylate, allyl acrylate, acrolein, acrylamide, acryloyl chloride, poly(ethylenegylcol) acrylate, methacrylic acid, methyl methacrylate, ethyl methacrylate, propyl methacrylate, butyl methacrylate, hexyl methacrylate, isohexyl methacrylate, cyclohexyl methacrylate, isobornyl methacrylate, ethoxyethyl methacrylate, methacrylamide, methacryloyl chloride, allyl methacrylate, 1H,1H,2H,2H-perfluorodecyl methacrylate (and other fluorinated alkyl methacrylates), 1H,1H,2H,2H-perfluorodecyl methacrylate, 4,4,5,5,6,6,7,7,8,9,9,9-dodecafluoro-2-hydroxy-8-(trifluoromethyl)nonyl methacrylate, 3,3,4,4,5,5,6,6,7,8,8,8-dodecafluoro-7-(trifluoromethyl)octyl methacrylate, 3,3,4,4,5,5,6,6,7,7,8,8,9,9,- 10,10,11,12,12,12-eicosafluoro-11-(trifluoromethyl)- dodecyl methacrylate, benzyl methacrylate, 2-butoxyethyl methacrylate, 2-(tert-Butylamino)ethyl methacrylate, butyl 3-butoxymethylacrylate, 9*H*-carbazole-9-ethylmethacrylate, 3-chloro-2-hydroxypropyl methacrylate, dyclohexyl methacrylate, decyl methacrylate, 3-(diethoxymethylsilyl)propyl methacrylate, 2-(diethylamino)ethyl methacrylate, 2-(dimethylamino)ethyl methacrylate, 3-(dimethylchlorosilyl)propyl methacrylate, Disperse Red 1 methacrylate, Disperse Red 13 methacrylate, Disperse yellow 7 methacrylate, ethylene glycol dicyclopentenyl ether methacrylate, ethylene glycol methacrylate phosphate, ethylene glycol methyl ether methacrylate, ethylene glycol monoacetoacetate monomethacrylate, fluoflesceinO-methacrylate, glycidyl methacrylate, 3-[(3,5,7,9,11,13,15-heptacyclopentylpentacyclo[9.5.1.1^{3,9}.1^{5,15}.1^{7,13}]octasiloxan-1-yloxy)-dimethylsilyl]propyl methacrylateylate (dimethylsilyloxy(propyl)methacrylate-POSS), hexyl methacrylate, 2-hydroxyethyl methacrylate, hydroxypropyl methacrylate, Isobomyl methacrylate, Isodecyl methacrylate, lauryl methacrylate, 2-(methacryloyloxy)ethyl acetoacetate, [2-(methacryloyloxy)ethyl]dimethyl-(3-sulfopropyl)ammonium hydroxide, 2-naphthyl methacrylate, 2-(4-Nitrophenoxy)ethyl methacrylate, pentabromobenzyl methacrylate, 2,2,3,3,3-Pentafluoropropyl methacrylate, 3-sulfopropyl methacrylate potassium salt, 2-(tert-butylamino)ethyl methacrylate, tetrahydrofurfuryl methacrylate, 2,4,6-tribromophenyl methacrylate, tridecyl methacrylate, 3-(trimethoxysilyl)propyl methacrylate, 3,3,5-trimethylcyclohexyl methacrylate, trimethylsilyl methacrylate, 3-[tris(trimethylsiloxy)silyl]propyl methacrylate, 3-[tris(trimethylsiloxy)silyl]propyl methacrylate, ZONYL^{®}TM fluoromonomer, 2-methylacrylamide methacrolein, vinyl methyl ketone, 3-methyl-3-buten-2-one, 2-methylacryloyl chloride, polyethyleneglycol) behenyl ether methacrylate , polyethyleneglycol) mhacrylate, polyethyleneglycol) methyl ether, malaimides, styrene, styrenics, acrylonitrile, methacrylonitrile, acrylamide, methacrylamide, dimethylacrylamide, maleic anhydride.

Examples of preferred classes of monomers include alkylacrylates, alkylmethacrylates, hydroxyalkylacrylates, hydroxyalkylmethacylates, haloalkylacrylates, haloalkylmethacrylates, alkoxyalkylacrylates, alkoxyalkylmeth acrylates, optionally mono N-substituted or di-N-substituted aminoalkylmethacrylates, cycloalkylaerylates, cycloalkylmethacrylates, phenoxyacrylate, phenoxymethacylate, alkylene glycolacrylate, alkylene glycol methacrylate, polyalkyleneglycolacrylate, polyalkyleneglycolmethacrylate, acrylamides, methacrylamides, derivatives of acrylamides and methacylamides, esters of fumaric acid, maleic acid and maleic acid anhydride and esters of maleic acid, N-vinyl carbazole, N-vinylpyrrolidone, vinyl pyridine, benzyl acrylate and benzyl methacrylate.

The polymeric substituent can be made in at least three different ways. The polymeric substituent may be grown from photochromic dye possessing a suitable initiation group. Another method is that the polymer substituent is grown or added to a precursor molecule of the photochromic moiety and the photochromic moiety is subsequently made. In another method the polymeric substituent is formed and is joined to the photochromic dye by any appropriate suitable organic synthetic procedure.

The polymeric substituent is synthesised (either from the photochromic dye or independently) by a chain growth or ring-opening polymerization method. This includes but not limited to
Radical polymerization (non-living, living)
Ionic polymerization (cationic and anionic)
Group transfer polymerization.

If the polymeric substituent is prepared separately then it will preferably possess at least one reactive functional group to allow it to be coupled to a photochromic dye. The functional group may include such groups such as hydroxy, thiol, ketone, aldehyde, amino (primary or secondary), carboxylic acid, carboxylic acid chloride, isocyanate, isothiocyanate, alkyl halo, vinyl, allyl, silyl hydride, silyl chloride etc. Typically one or two suitable functional groups may be present but there can be more. The reactive functional group(s) is preferred to be at the end or middle of the substituent polymer but may be at other points along the chain.

The polymeric substituent may be grown from the photochromic dye using dye as a point of initiation either directly or as part of a chain transfer mechanism. In this case the dye will act as an initiator or chain transfer agent. The dye may act as a termination agent. The dye is not a monomer and will not possess a conventional polymerizable group such as a methacryl or triakoxy silyl group that is utilized as a polymerizable group. (Note the group may be used in a non-polymerizable way to allow the attachment of the polymeric substituent. For example, the dye may have a methacrylate group that is reacted with a thiol (ie thiolene reaction)).

The photochromic compound of the invention comprising a polymeric substituent may posses a reactive group (for example at the free end of the polymeric substituent) that will allow it to react into a subsequent polymerization reaction. This group may arise directly from the polymeric substituent preparation process. (i.e. when an polymeric substituent is grown from the dye.) or may be attached in a separate process. Typically this reactive group will be at the end of the polymeric substituent away from the photochromic dye. This group may be a RAFT or iniferter type group such as dithioester, trithiocarbonate, dithiocarbamate or xanthate, an ATRP group such as a halogen or alkoxyamine for the polymeric substituent grown by a living free radical method. These groups may themselves be converted to other groups using standard chemistry. RAFT agents can be converted to thiols or hydrogen and ATRP end groups may be converted to hydrogen and amines etc.

The preparation of blockers by RAFT and ATRP is described in our copending PCT application claiming priority from US Application 60/60664 and Australian Application 2004902305.

The polymeric substituent may be a homopolymer, block, radom or gradient copolymer. A portion of the polymeric substituent such as polyalkylene or substituted polyalkylene may be made by a radical polymerisation. Of the free radical methods it is preferred that living radical and chain transfer methods of radical polymer synthesis are used.

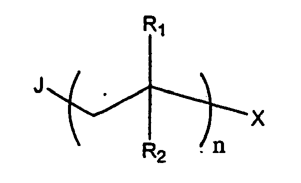

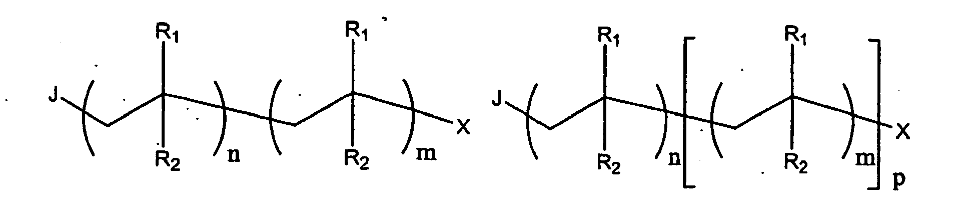

The polymeric substituent is generally derived from one or more types of radical polymerizable monomer. Typical monomers may be selected from acrylates, methacrylates, acrylamides, methacrylamides, vinyl esters, vinyl ethers, n-vinyl monomers, styrenes, cyanoacrylates, maleimides and maleic anhydride.

In a particularly preferred embodiment:
R¹ may be selected from hydrogen, methyl alkyl, aryl, nitrile, carboxylic acid, carboxylic esters, halogen, H, CH₃, alkyl, aryl-COOR³CN, etc.
R² = -OR³, -COOR³, phenyl, CN, halogen, amides (-CONRR, where R is independently selected from hydrogen, alkyl, aryl)
R³ = H, alkyl, aryl 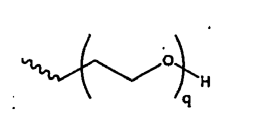 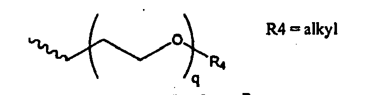 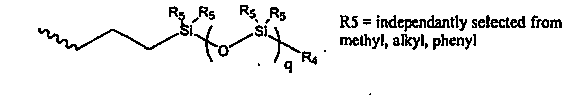
J is a selected from photochromic compounds, derivatives of photochromic compounds and reactive groups for subsequent attachment of a photochromic group;
X is the terminal group and may be selected from hydrogen, methyl, butyl, alkyl, halogen, dithioester (-S-C=S-R), trithiocarbonate (-S-C=S-S-R), dithiocarbamate (-S-C=S-NRR), xanthate (-S-C=S-O-R), carboxylic acids, carboxylic esters, hydroxy, alkoxyamine etc.

Another embodiment of ATRP is described in Macromolecules, 1995,28,7970 and Macromolecules, 1996,29,3665. These references report on the formation of "living" polymers using a combination of an arylsulfonyl chloride and a transition metal compound.

Photochromic oligomer adducts in accordance with the invention may comprise a photochromic moiety selected from the group consisting of:
chromenes such as those selected from the group consisting of naphthopyrans, benzopyrans, indenonaphthopyrans and phenanthropyrans;
spiropyrans such as those selected from the group consisting of spiro(benzindoline) naphthopyrans, spiro(indoline)benzopyrans, spiro(indoline)-naphthopyrans, spiroquinopyrans, spiro(indoline)pyrans and spirodihydroindolizines;
spiro-oxazines such as those selected from the group consisting of spiro(indoline)naphthoxazines, spiro(indoline)pyridobenzoxazines, spiro(benzindoline)pyridobenzoxazines, spiro(benzindoline)naphthoxazines and spiro(indoline)- benzoxazines;
fulgidies, fulgimides;
anils;
perimidinespirocyctohexadienones;
stilbenes;
thioindigoids;
azo dyes;
diarylethenes; and
diarylperfluorocyclopentenes.

Examples of photochromic moieties may be selected from the group consisting of fulgide photochromic compounds, chromene photochromic compounds and spiro-oxazine photochromic compounds. A wide range of photochromic compounds of each of the classes referred to above have been described in the prior art and having regard to the teaching herein the skilled addressee will have no difficulty in preparing a wide range of photochromic oligomer adducts. Examples of chromene photochromic compounds, fulgide photochromic compounds and spiro-oxazine photochromic compounds are described in US Patent No. 5776376.

The most preferred photochromic compounds are the chromenes and spiro-oxazines, specifically spiroindolene aroxazines.

Sprio-oxazines such as sprioindoline naphthoxazines depicted below are clear but in the presence of light undergo ring opening to give a coloured form as shown:

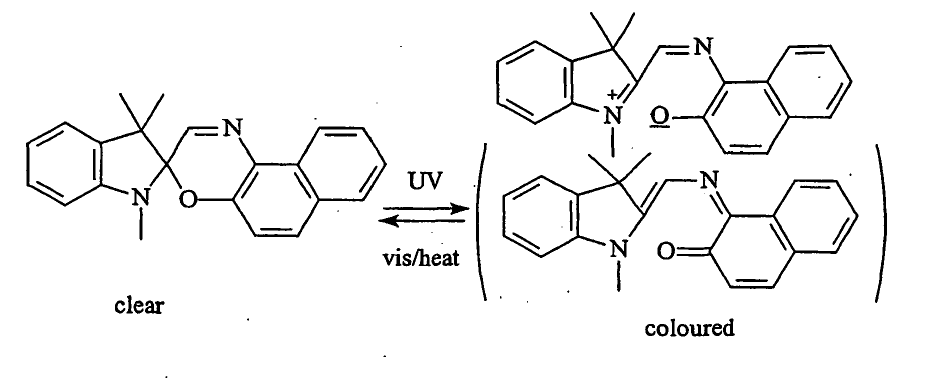

A further embodiment of the invention is a photochromic compound of formula

(PC)-(X)ₚL(R)ₙ

wherein PC is a photochromic moiety particularly a spirooxazine of formula III, chromene of formula XX, fulgide/fulgamide of formula XXX or an azo dye of formula XL and L, R, X and n and p are as hereinbefore defined.

Preferred spiro-oxazines of the general formula III can be suitably used.

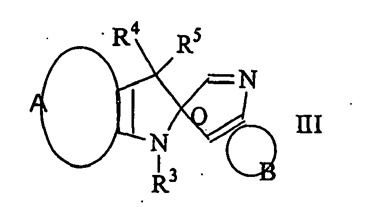

In the general formula III, R³, R⁴ and R⁵ may be the same or different and are each an alkyl group, a cycloalkyl group, a cycloarylalkyl group, an alkoxy group, an alklyleneoxyalkyl group, an alkoxycarbonyl group, a cyano, an alkoxycarbonylalkyl group, an aryl group, an arylalkyl group, an aryloxy group, an alkylenethioalkyl group, an acyl group, an acyloxy group or an amino group, R⁴ and R⁵ may together form a ring, and R³, R⁴ and R⁵ may optionally each have a substituent(s). The substituent(s) can include, besides the above-mentioned groups, halogen atom, nitro group, heterocyclic group, etc. The group represented by moiety IIIa 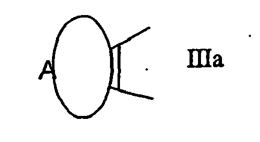 is a substituted or unsubstituted bivalent aromatic hydrocarbon group or a substituted or unsubstituted bivalent unsaturated heterocyclic group. The group represented by moiety IIIb 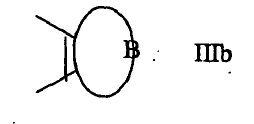 is a substituted or unsubstituted bivalent aromatic hydrocarbon group or a substituted or unsubstituted bivalent unsaturated heterocyclic group. Specific examples of the bivalent aromatic hydrocarbon group are groups of 6 to 14 carbon atoms derived from benzene ring, naphthalene ring, phenanthrene ring, anthracene ring or the like. Specific examples of the bivalent unsaturated heterocyclic group are groups of 4 to 9 carbon atoms derived from furan ring, benzofuran ring, pyridine ring, quinoline ring, isoquinoline ring, pyrrole ring, thiophene ring, thiophene ring, benzothiophene ring or the like.

The substituents can be the same groups as mentioned above with respect to R³, R⁴ and R⁵. In particular, a group represented by

-NR⁶R⁷

(wherein R⁶, and R⁷ are each an alkyl group, an alkoxy group, an allyl group or the like, each of which may be substituted; and R⁶ and R⁷ may be bonded and cyclized with each other to form a nitrogen-containing heterocyclic ring) is preferable from the standpoint of high density of its developed colour in the initial photochromic performance.

In a particularly preferred embodiment the photochromic compounds of the invention are of formula IV 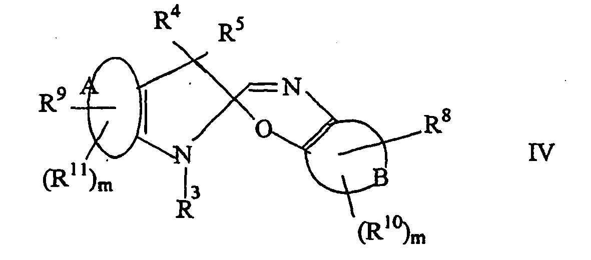 wherein R³, R⁴, R⁵, R⁸ R⁹, R¹⁰ and R¹¹ are independently selected from the group consisting of hydrogen, alkyl, halo, haloalkyl, cycloalkyl, cycloarylalkyl, hydroxy, alkoxy, alkyleneoxyalkyl, alkoxycarbonyl, aryl, arylalkyl, aryloxy, alkylenethioalkyl, acyl, acyloxy, amino, NR⁶R⁷, cyano and the group L(R)ₙ wherein at least one of R³, R⁸ and R⁹ is the oligomer group of formula L(R)ₙ wherein L, R and n are hereinbefore defined and wherein there is more than one L(R)ₙ group in the groups R⁸, R³, R⁴ and R⁵ and one or more R groups may optionally be linked together to form one or more bridging oligomers. The subscript m is an integer and may be 0, 1 or 2 wherein m is 2 the groups may be independently selected.

In the compound of formula IV the total of the number of monomer units in oligomer substituents, (R)ₙ, is at least 7, more preferably at least 9 and most preferably at least 12.

More preferably, the substituents R³ is selected from the group consisting of alkyl, cycloalkyl, cycloarylalkyl, alkyleneoxyalkyl, aryl, arylalkyl alkylenethioalkyl, and the group L(R)ₙ and more preferably R³ is selected from alkyl, cycloalkyl, cycloarylalkyl, alkenyloxyalkyl, aryl, arylalkyl, and the group L(R)ₙ and preferably R⁴ and R⁵ are independently selected from alkyl, cycloalkyl and aryl.

R⁸ and R⁹ are independently selected from hydrogen and L(R)ₙ; R¹⁰ and R¹¹ are independently selected from the group consisting alkyl, cycloalkyl, cycloarylalkyl, alkoxy, -NR⁶R⁷, cyano, alkyleneoxyalkyl, alkoxycarbonyl, aryl, arylalkyl, aryloxy, alkylenethioalkyl, aryl aryloxy and amino and most preferably R¹⁰ and R¹¹ are independently selected from alkyl, cycloalkyl, alkoxy, NR⁶R⁷ and cyano; and

m is 0 or 1.

Examples of the preferred fused aromatic ring groups of formula IIIa include IIIa(i); 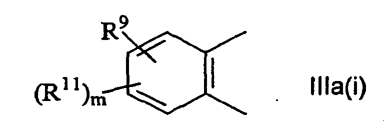 wherein R⁹ and R¹¹ are as hereinbefore defined.

Examples of the preferred fused aromatic ring group of formula IIIb include IIIb(i), IIIb(ii), IIIb(iii) and IIIb(iv).

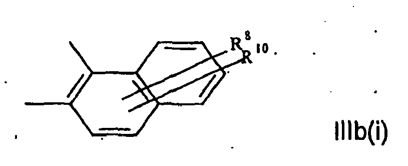

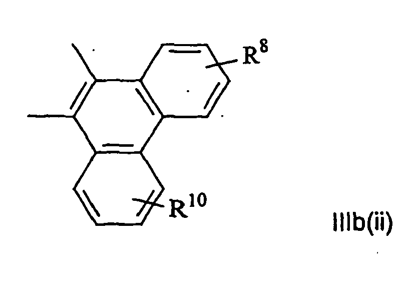

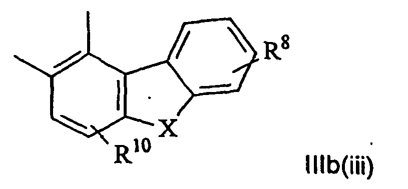

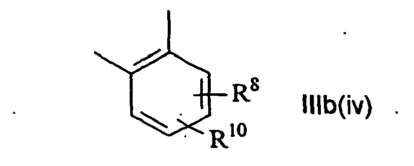

Specific examples of the group of formula IIIa(i) include

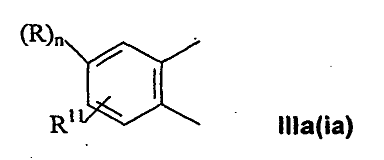

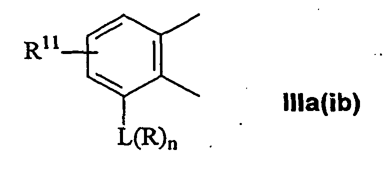

Specific examples of the group of formula IIIb include

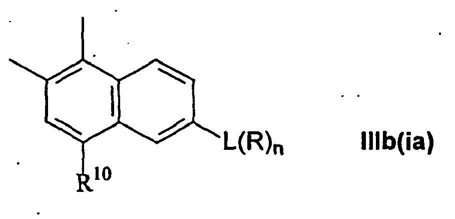

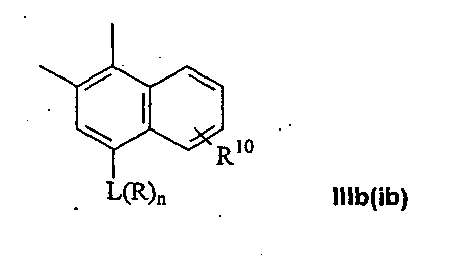

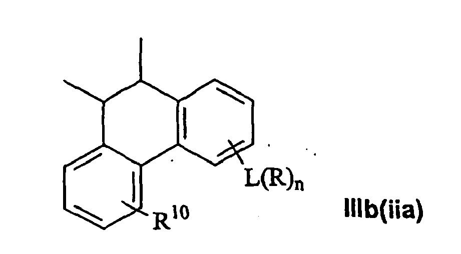

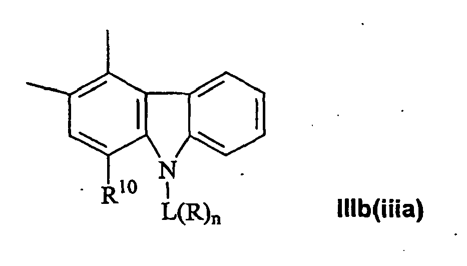

One particularly preferred embodiment of the compounds of formula IV has the formula IVa

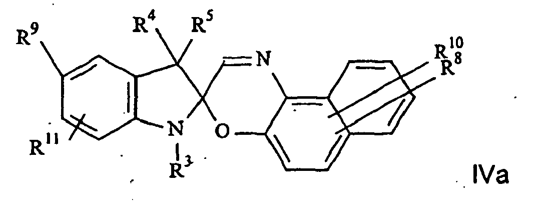

The more preferred compounds of formula IVa are compounds wherein R⁴ and R⁵ are preferably independently selected from the group consisting of C₁ to C₄ alkyl and the group wherein R⁴ and R⁵ link together to form a cycloalkyl of from 4 to 6 carbon atoms.

R⁸ and R⁹ are independently selected from the group consisting of hydrogen, halogen, cycloalkyl, cycloarylalkyl, hydroxy alkoxy, cyano, alkenyloxyalkyl, alkoxycarbenyl, aryl, aralkyl, aryloxy, alkylene, thioalkyl and the oligomer of formula L(R)ₙ wherein L, R and n are as hereinbefore defined;

R¹⁰ and R¹¹ are independently selected from the group consisting of hydrogen, halogen, cycloalkyl, cycloarylalkyl, alkoxy, cyano, alkenyloxyalkyl, alkoxycarbonyl, aryl, arylalkyl, acyloxy and alkylenethioalkyl. Most preferably R¹⁰ and R¹¹ are hydrogen; and at least one of R⁸ and R⁹ is the group L(R)ₙ wherein the total number of monomer units in R is at least 10 and more preferably at least 12.

In order to provide an increase in fade rate of the photochromic in a polymer (preferably a polymer of high Tg) article, the size of the oligomer chain must be greater than a certain size. The minimum size will depend on the nature of the oligomer chain and the linking group. It is believed that the fade is significantly accelerated where a oligomer chain may adopt a conformation in which a portion of the chain is adjacent the oxazine ring. Accordingly, linking groups which direct the oligomer chain across the molecule (such as the group of formula VI to VIII comprising at least one polymer chain R in a portion otho to the link) may enable the minimum number of effective monomer units to be reduced when compared with other linking groups.

In one preferred embodiment one of R³, R⁸ and R⁹ is L(R)ₙ where the R groups together include at least 10 monomer units. Alternatively, R⁸ and at least one of R⁹ and R³ (preferably R⁹) is L(R)ₙ and the two or more groups L(R)ₙ contain at least 10 monomer units.

Specific examples of compounds of the invention include those listed in Table 1.

**Table 1**

| | | | | | |
|---|---|---|---|---|---|
| 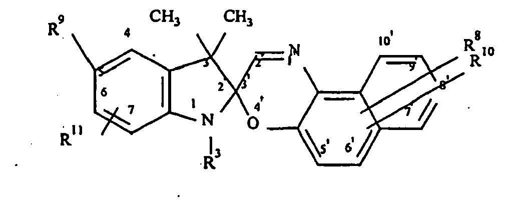 | | | | | |

| | **R⁸** | **R³** | **R⁶** | **R¹⁰** | **R¹ 1** |
|---|---|---|---|---|---|
| 1 | 9'-O(CO)(CH₂)₂CO₂(EO)₇meac | CH₃ | H | H | H |
| 2 | 9'-O(CO)(CH₂)₂CO₂(EO)₁₆meac | CH₃ | H | H | H |
| 3 | 9' -O(CO)(CH₂)₂CO₂(EO)₇meac | CH₃ | 5 -O(CO)(CH₂)₂CO₂(EO)₇₃ac | H | H |
| 4 | H | (EO)₇ CH₃ | H | H | H |
| 5 | 9'-O(CO)(CH₂)₂CO₂(EO)₁₀meac | CH₃ | H | H | H |
| 6 | 9' -OCO(CH₂)₂CO₂(EO)₂₀meac | CH₃ | H | H | H |
| 7 | 6'-OCO(CH₂)₂CO₂(EO)₁₆ac | CH₃ | H | H | H |
| 8 | 6'-N(CH₂CH₃)CH₂CH₂O(EO)₁₆meac | CH₃ | H | H | H |
| 9 | 9'-OCO(CH₂)₂CO₂(EO)₁₆meac | CH₃ | H | 6'-N(Et)₂ | H |
| 10 | H | CH₃ | 5- O(CO)(CH₂)CO₂(EO)₁₆CH₃ | H | H |
| 11 | 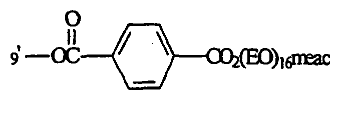 | CH₃ | H | H | H |
| 12 | 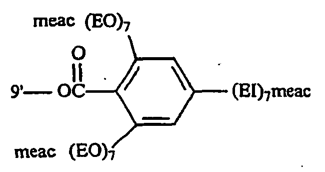 | CH₃ | H | H | H |
| 13 | H | CH₃ | 5-O(CO)(CH₂)CO₂(EO)₁₆CH₃ | H | H |
| 14 | H | CH₃ | 5-O(CO)(CH₂)₂CO₂(EO)₁₀meac | H | H |
| 15 | H | CH₃ | 5-O(CO)(CH₂)₂CO₂(EO)₂₀ac | H | H |
| 16 | H | CH₃ | 8-NH(CH₂CH₃)CH₂CH₂O(EO)₁₆meac | H | H |
| 17 | H | CH₃ | 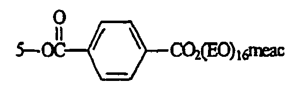 | H | H |
| 18 | H | CH₃ | 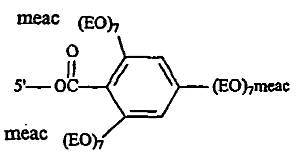 | H | H |
| 19 | H | CH₃ | 5 -O(CO)(CH₂)₂CO₂(EO)₇meac | 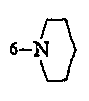 | H |
| 20 | H | CH₃ | 5 -O(CO)(CH₂)CO₂(EO)₁₆ac | 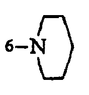 | H |
| 21 | H | CH₃ | 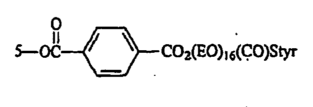 | 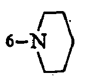 | H |
| 22 | H | CH₃ | 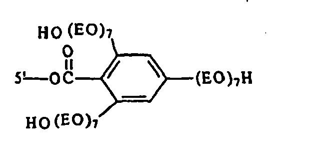 | 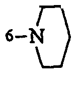 | H |
| 23 | H | CH₃ | 5-O(CO(CH₂)CO₂(EO)₇meac | 6-CN | H |
| 24 | H | CH₃ | 5-O(CO(CH₂)₂CO₂(EO)₁₆meac | 6-CN | H |
| 25 | H | CH₃ | 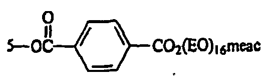 | 6-CN | H |
| 26 | H | CH₃ | 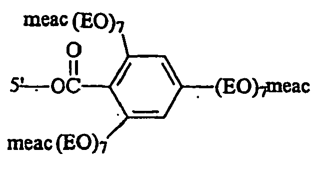 | 6-CN | H |
| 27 | H | CH₃ | 5-CH₂NH(CO)CH₂)CO₂(EO)₁₆CO Styr | 6-CN | H |
| 28 | H | CH₃ | 5-CH₂NH(CO)CH₂)₂CO₂(EO)₁₆meac | 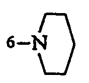 | H |
| 29 | H | CH₃ | 5-CH₂NH(CO)CH₂)₂CO₂(EO)₁₆ac | H | H |

wherein (EO) is the group (CH₂CH₂O);

The more preferred compounds of the invention are of formula (IVb) 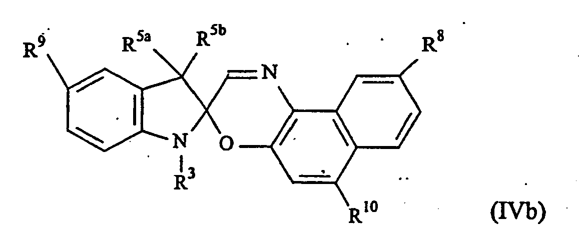 where the substituents are hereinbefore described and even more preferably R³ is C₁ to C₄ alkyl; C₃ to C₆ cycloalkyl, aryl, alkylaryl, arylalkyl and L(R)ₙ; R^{5a} and R^{5b} are independently selected from C₁ to C₆ alkyl C₃ to C₆ cycloalkyl, aryl; R⁸ and R⁹ are selected from hydrogen, hydroxy, C₁ to C₆ alkoxy; R¹⁰ is selected from the group hydrogen, hydroxy, C₁ to C₆ alkoxy -NR⁶R⁷ wherein R⁶ and R⁷ are independently hydrogen, C₁ to C₆ alkyl and wherein R⁶ and R⁷ may together form a divisional hydrocarbon chain of 4 to 6 carbon atoms.

As we have discussed above, in order to maximise the rate of colouration and fade in polar and non-polar polymers it is preferred that one of R³, R⁸ and R⁹ is L(R)ₙ comprising at least 10, more preferably at least 12 monomer units and the other two of R³, R⁸ and R⁹ are other than L(R)ₙ where L(R)ₙ contains 7 monomer units.

In compounds where more than one of R³, R⁸ and R⁹ is L(R)ₙ comprising at least 7 monomer units, the effect on the rate of colouration and fade will depend to some extent on the oligomer and type of polymer. In cases where the polymer and oligomers are compatible, the rate of fade may be decreased and when the oligomer and resin are less compatible, the effect may be less or the rate of fade may be increased.

We have found that for compounds of formula IVa (preferably IVb) if R⁸ and R⁹ are shorter chains or smaller substituents they are also useful in controlling the rate of fade though to a more limited extent.

In a further embodiment, the invention therefore provides compounds of formula IVa (preferably IVb) wherein R⁸ and R⁹ are each selected from groups of formula I and groups of formula L(R)ₙ as hereinbefore defined and the group LR¹¹ wherein R¹¹ is lower alkyl, lower haloalkyl, lower polyalkyleneoxy aryl and aryl(lower alkyl). The term lower is used to mean up to 6 carbon atoms in the chain and preferably up to 4.

In yet another embodiment we provide an intermediate for preparation of compounds of the invention, the intermediate being of formula IVa and more preferably IVb wherein R⁸ and R⁹ are selected from XH wherein X is hereinbefore defined. Preferably R⁸ and R⁹ are the same.

Compounds of the invention may be prepared by reaction of intermediates Va or Vb and VI.

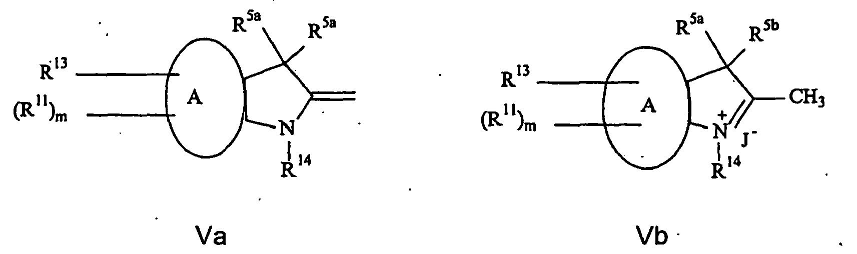

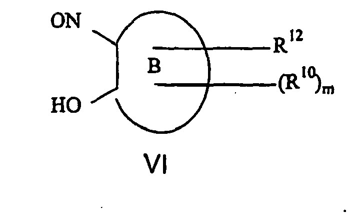

One method for preparing compounds of the invention comprises reacting a methylene indolene of formula Va or Fishers base or indolium salt of formula Vb where J is halogen, particularly the iodide salt, wherein R¹³ is R⁹ and R¹⁴ is R³ with a nitrosohydroxy compound of formula VI to provide a compound of the invention of formula IV.

Alternatively, a methylene indolene of formula Va or indolium salt of formula Vb may be reacted with a nitrosohydroxy compound of formula VI wherein R¹² and R¹³ are independently selected from the group consisting of hydrogen and -XH and at least one of R¹² and R¹³ is -XH to provide an intermediate of formula VII. 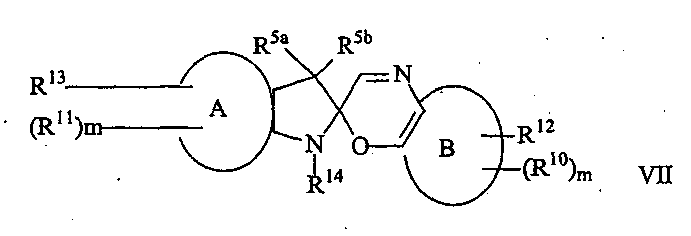 and reacting the compound of formula VIII with a compound of formula VII

JL(R)ₙ VIII

wherein J is a leaving group to form a compound of formula IV wherein at least one of R⁸ and R⁹ are the group L(R)ₙ.

Alternatively or in addition the compound of formula IV wherein R³ is L(R)ₙ may be prepared by (a) reacting the compound of formula Va or Vb with a compound of formula VIII to provide a compound of formula Va and Vb where R¹⁴ is L(R)ₙ and reacting the compound of formula Via or Vlb with a compound of formula VI to provide a compound of formula IV wherein R³ is L(R)ₙ.

Specific examples of compounds of formula VIII, include J L(R)ₙ where J is chlorine, L is of formula IIa to IIc where p is O and R is any one of the R group examples (i) to (v) shown above.

Compounds of formula IV where L is a bond may additionally be prepared by using a toluene sulfonyl leaving group for example by reaction of the compound of formula IX 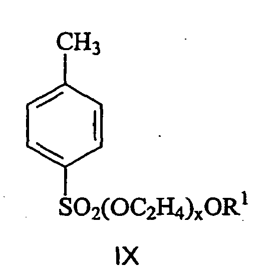 with a compound of formula IV wherein at least one of R⁸ or R⁹ is XH and/or R³ is hydrogen to provide a compound where one or more groups is alkoxylated.

Compounds of formula X 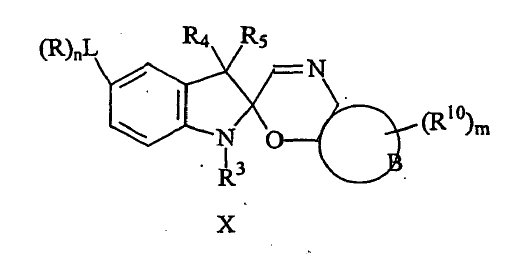 having a wide variety of the fused aromatic groups B may be prepared using the intermediate of formula Vc.

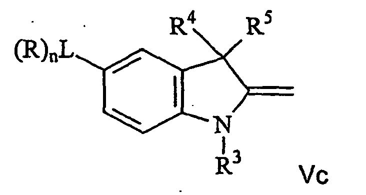

The fused aromatic group B and its substituents may be chosen to provide the desired colour of the photochromic compound. Such compounds provide a versatile method of preparation of rapid fade spiroindofineoxazines.

Examples of suitable substituted methylene indolene compounds of formula Va and Vb include 5-amino indolene compounds described by Gale & Wiltshire (J. Soc. Dye and Colourants 1974, 90, 97-00), 5-amino methylene compounds described by Gale, Lin and Wilshire (Aust. J. Chem. 1977 30 689-94) and 5-hydroxy compounds described in Tetrahedron Lett. 1973 12 903-6 and in US Patent 4062865.

One of the preferred groups of photochromics are the spiropyrans. Examples of spiropyrans include compounds of formula XX 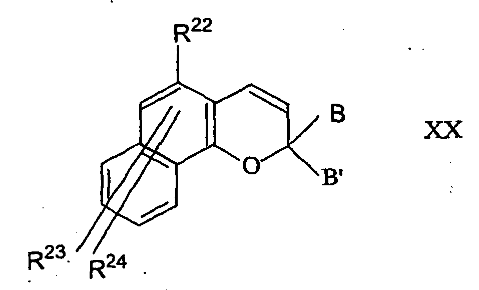 wherein
B and B' are optionally substituted aryl and heteroaryl; and
R²², R²³ and R²⁴ are independently selected from hydrogen; halogen; C₁ to C₃ alkyl; the group L(R)ₙ; and the group of formula COW wherein W is OR²⁵, NR²⁶R²⁷, piperidino or morpholino wherein R²⁵ is selected from the group consisting of C₁ to C₆ alkyl, phenyl, (C₁ to C₆ alkyl)phenyl, C₁ to C₆ alkoxyphenyl, phenyl C₁ to C₆ alkyl (C₁ to C₆ alkoxy)phenyl, C₁ to C₆ alkoxy C₂ to C₄ alkyl and the group L(R)ₙ; R²⁶ and R²⁷ are each selected from the group consisting of C₁ to C₆ alkyl, C₅ to C₇ cycloalkyl, phenyl, phenyl substituted with one or two groups selected from C₁ to C₆ alkyl and C₁ to C₆ alkoxy and the group L(R)ₙ; R²² and R²³ may optionally from a carboxylic ring of 5 or 6 ring members optionally fused with an optionally substituted benzene and wherein at least one of the substituents selected from the group of substituents consisting of B and B', R²², R²³, R²⁴, R²⁵, R²⁶ and R²⁷ is the group L(R)ₙ.

When R²² and R²³ are carbocyclic a preferred compound is of formula XX(d) 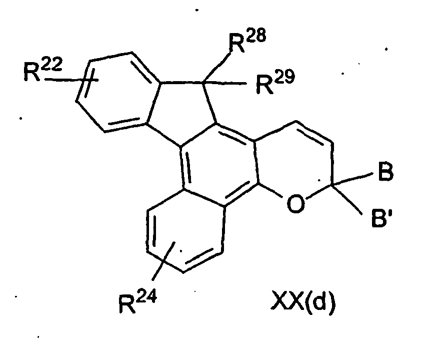 where R²², R²⁸ and R²⁹ are as defined for R²² above.

Preferably B and B' are independently selected from the group consisting of aryl optionally substituted with from **1** to 3 substituents, heteroaryl optionally substituted with from 1 to 3 substituents. The substituents where present are preferably selected from the group consisting of hydroxy, aryl, (C₁ to C₆) alkoxyaryl, (C₁ to C₆) alkylaryl, chloroaryl (C₃ to C₇) cycloalkylaryl, (C₃ to C₇) cycloalkyl, (C₃ to C₇) cycloalkoxy, (C₃ to C₇) cycloalkoxy, (C₁ to C₆) alkyl, aryl (C₁ to C₆) alkyl, aryl (C₁ to C₆) alkoxy, aryloxy, aryloxyalkyl, aryloxy (C₁ to C₆) alkoxy, (C₁ to C₆) alkylaryl, (C₁ to C₆) alkyl, (C₁ to C₆₎) alkoxyaryl, (C₁ to C₆) alkyl, (C₁ to C₆) alkoxyaryl; (C₁ to C₆) alkyl, (C₁ to C₆) alkoxyaryl, (C₁ to C₆) alkoxy, amino, N-(C₁ to C₆) alkyl ipirazino, N-aryl piperazino, indolino, piperidino, aryl pipersillins, morpholino, thiomorpholino, tetrahydro quinolino.

NR²⁹R³⁰ wherein R²⁹ and R³⁰ are independently selected from the group selected from C₁ to C₆ alkyl, phenyl, C₅ to C₇ cycloalkyl and the group wherein R²⁹ and R³⁰ form a linking group of 4 or 5 linking groups comprising methylene groups and optionally containing one or two hetero atoms and optionally further substituted by C₁ to C₃ alkyl and the group L(R)ₙ.

R²² is selected from the group consisting of hydrogen, C₁ to C₆ alkyl; COW
where
W is OR²⁵ wherein R²⁵ C₁ to C₆ alkyl; and the group NR²⁶R²⁷; wherein R²⁶ and R²⁷ are independently C₁ to C₆ alkyl; and the group L(R)ₙ.

Particularly preferred naphthopyran compounds are of formula XX(a) 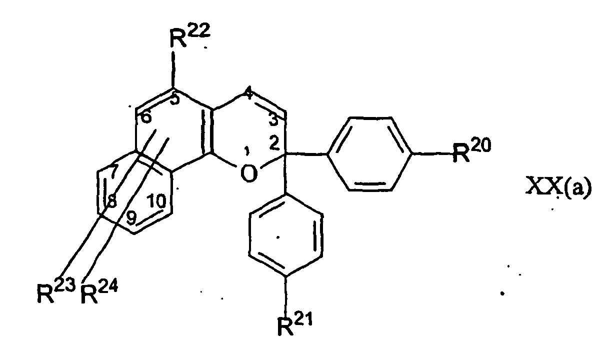
wherein R²⁰ and R²¹ are independently selected from the group consisting of hydrogen, hydroxy, alkoxy, amino, alkylamino, dialkylamino and L(R)ₙ;
R²² is the group COW where W is C₁ to C₆ alkoxy or the group L(R)ₙ;
R²³ is selected from the group consisting of hydrogen and NR²⁶R²⁷ where R²⁶ are independently selected from the group consisting of C₁ to C₆ alkyl and where R²⁶ and R²⁷ may together form an alkylene group of 4 to 6 carbon atoms;
R²⁴ is hydrogen or the group L(R)ₙ; and wherein at least one of R²² and R²⁴ is L(R)ₙ.

Specific examples of diarylperfluorocyclopentenes which may be used in compositions of the invention are of formulae XXV and XXXVI: 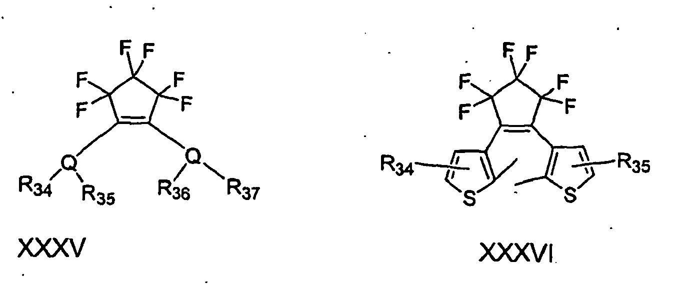 wherein
Q is selected from the group consisting of optionally substituted aromatic, optionally substituted heteroaromatic (where said aromatic/heteroaromatic may be mono or polycyclic aromatic/heteroaromatic);
R³⁴,R³⁵,R³⁶,R³⁷ independently represents a C₁ to C₄ alkyl, phenyl or phen(C₁ to C₄) alkyl or one of and R³⁴ ,R³⁵ R³⁶,R³⁷ is hydrogen and the others is one of the aforementioned groups,; and
wherein at least one of Q, R³⁴,R³⁵, R³⁶ and R³⁷ comprises the groupL(R)ₙ.

Specific example of the naphthopyran compounds of formula XX(a) include those shown in Table 2:

**Table 2**

| | **R²⁰** | **R²¹** | **R²²** | **R²³** | **R²⁴** |
|---|---|---|---|---|---|
| 1 | (CH₃)₂N | H | CO₂CH₃ | H | 6-O(CO)-CH₂CH₂-(CO)-O-(CH₂CH₂O)₁₀(CO)C(CH₃)=CH₂ |
| 2 | (CH₃)₂N | H | CO₂CH₃ | H | 9-O(CO)-CH₂CH₂-(CO)-O-(CH₂CH₂O)₁₀(CO)C(CH₃)=CH₂ |
| 3 | PDMS-prop-meac | H | CO₂CH₃ | H | H |
| 4 | OCH₃ | OCH₃ | -CO₂CH₃ | H | 6-O(CO)-CH₂CH₂-(CO)-O-(CH₂CH₂O)₁₀(CO)C(CH₃)=CH₂ |
| 5 | OCH₃ | OCH₃ | CO₂CH₃ | H | 9-O(CO)-CH₂CH₂-(CO)-O-(CH₂CH₂O)₁₀(CO)C(CH₃)=CH₂ |

Compounds of formula XX wherein R²³ and/or R²⁴ comprise the oligomer group L(R)ₙ may be prepared from a suitably substituted acetophenone, benzophenone or benzaldehyde of formula XXI(a). In this process the compound of formula XXI(a) (or a polyhydroxy compound where more than one substituent is required) is reacted with an oligomer esterified toluene sulfonate of formula XXI to provide the corresponding oligomer ether of formula XXI(b). The aromatic oligomer ether of formula XXI(b) is reacted with an ester of succinic acid such as the dialkyl succinate of formula XXI(c). A Stobbe reaction produces the condensed half ester of formula XXII which undergoes cyclo dehydration in the presence of acidic anhydride to form the naphthalene oligomer ether of formula XXIII. This compound of formula XXIII may be reacted with acid such as hydrochloride acid and an anhydrous alcohol such as methanol to form the corresponding naphthol shown in formula XXIV which is in turn coupled with the propargyl alcohol of formula XXV to form the oligomer substituted naphthopyran of the invention of formula XX(b).

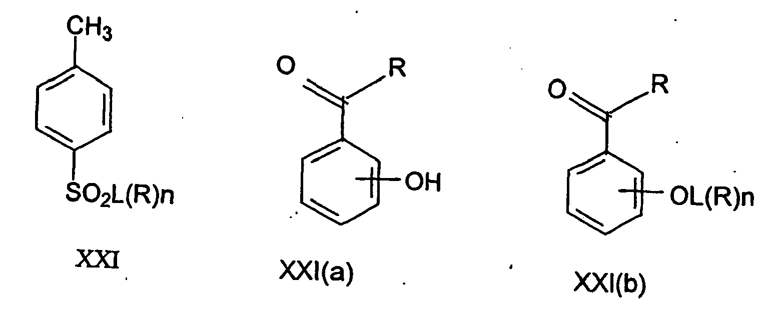

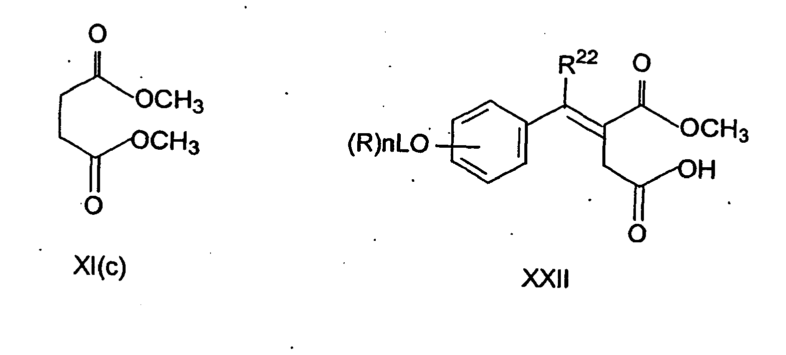

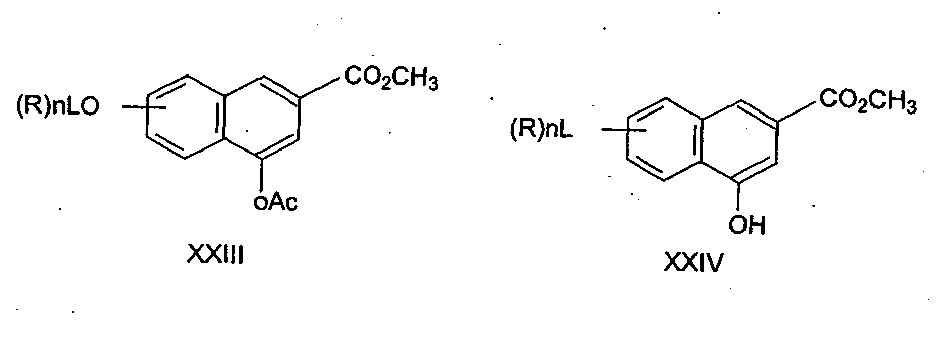

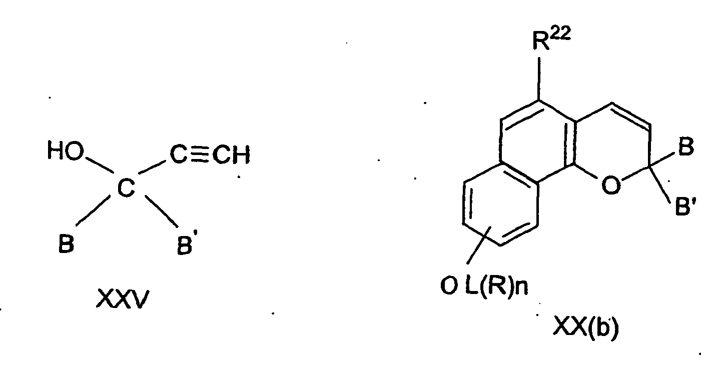

Alternatively, compounds of formula XX(c) in which at least one of the geminal phenyl groups is substituted by an oligomer may be prepared from the benzophenone of formula XXI(f). In this process the benzophenone substituted with the appropriate hydroxyl groups is reacted with the oligomer ester of toluene sulfonate of formula XXI(e) to form the corresponding oligomer substituted benzophenone of formula XXI(g). The corresponding propargal alcohol of formula XXV(a) is prepared from the benzophenone by reaction with sodium acetylide in a solvent such as THF. This propargal alcohol of formula XXV(a) is coupled with the appropriate substituted naphthol of formula XXIV(b) to form the oligomer substituted naphthopyrane of formula XX(c).

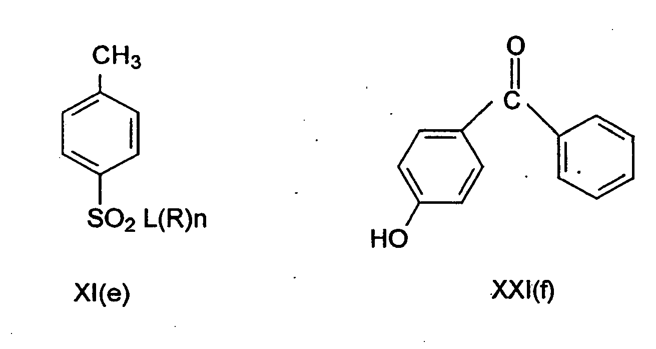

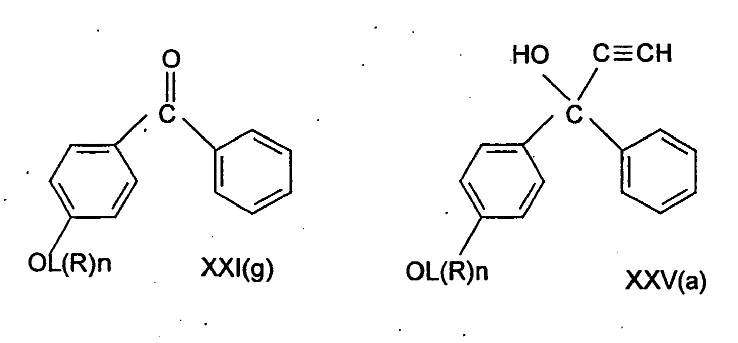

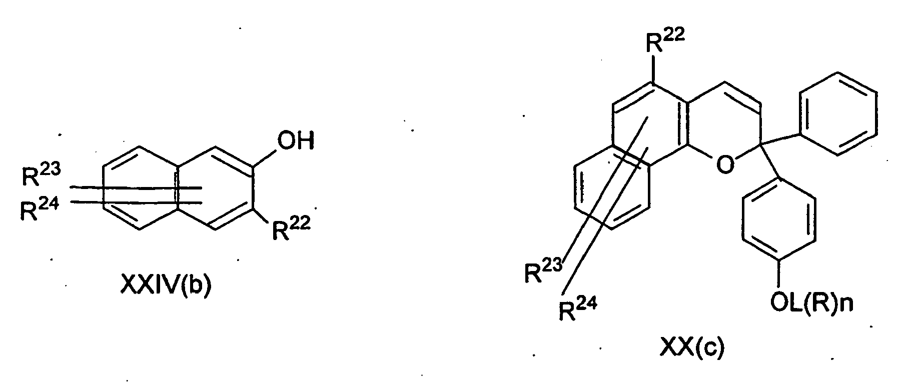

A further option for forming oligomer substituted pyrans of the invention of formula XX in which the oligomer is present in the 5-position of the naphthopyran may utilise the corresponding carboxylated naphthol of formula XXIII(a). In such a process the naphthol of formula XXIII(a) is reacted with an appropriate oligomer of formula XXI(d) (particularly where linking group L comprising oxygen) to provide an oligomer ester of formula XXIV(a). The oligomer naphthol ester of formula XXIV(a) may be reacted with propargyl alcohol of formula XXV to provide the naphtholpyran of formula XX(g) in which the oligomer is present in the five position.

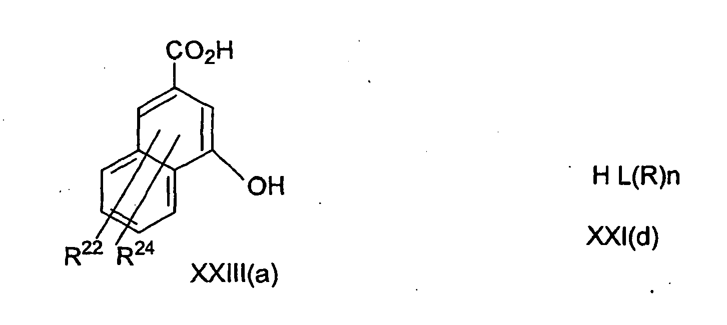

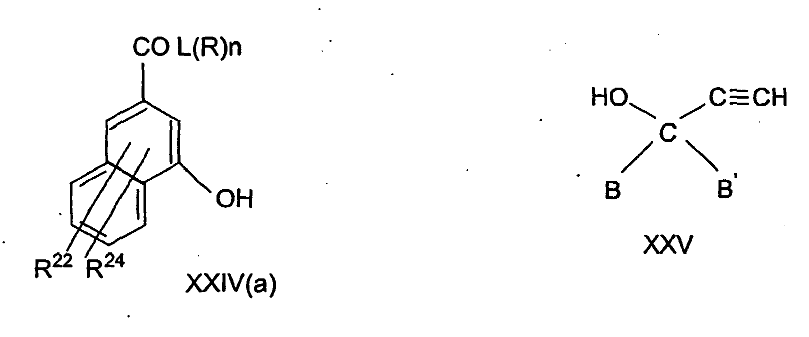

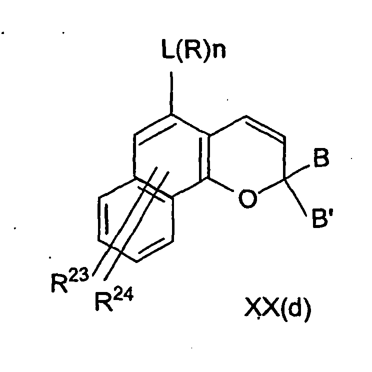

In a further alternative compounds of formula XX wherein R²² comprises the oligomer L(R)ₙ may be formed by reacting a compound of formula XX(e) with an acid chloride or anhydride substituted oligomer to provide a compound of formula XX(f):

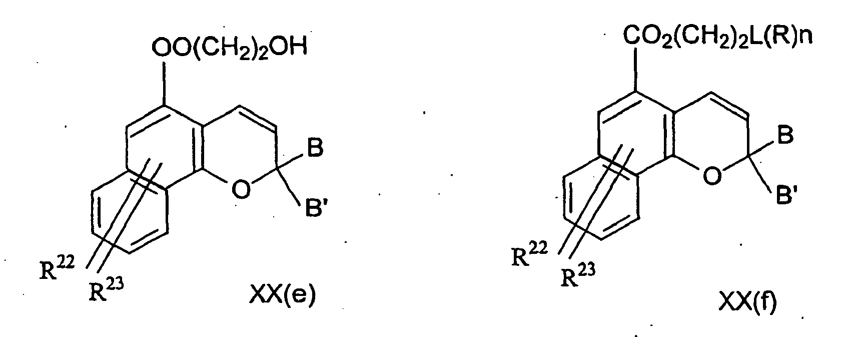

Examples of fulgides and fulgimides include compounds of formula XXX and more preferably XXXa: 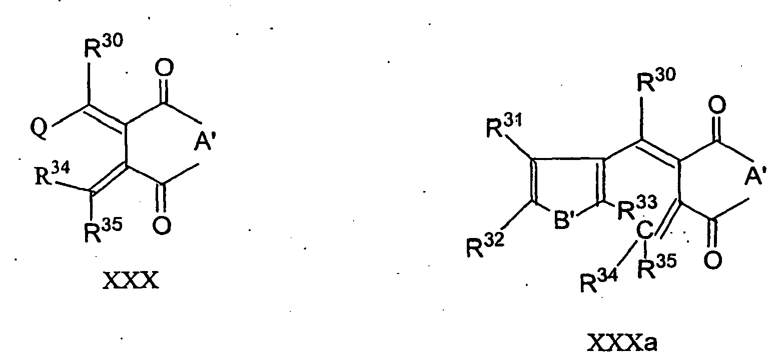 wherein
Q is selected from the group consisting of optionally substituted aromatic, optionally substituted heteroaromatic (where said aromatic/heteroaromatic may be mono or polycyclic aromatic/heteroaromatic);
R³⁰, R³² and R³³ are independentlyselected from the group consisting of a C₁ to C₄ alkyl, C₁ to C₄ alkoxy phenyl, phenoxy mono- and di(C₁-C₄) alkyl substituted phenyl or phen(C₁-C₄)alkyl and R³² and R³² optionally together form a fused benzene which may be further substituted;
A is selected from the group consisting of oxygen or =N-R³⁶, in which R³⁶ is C₁-C₄ alkyl or phenyl,
B is selected from the group consisting of oxygen or sulfur;
R³⁴ and R³⁵ independently represents a C₁-C₄ alkyl, phenyl or phen(C₁-C₄) alkyl or one of R³⁴ and R³⁵ is hydrogen and the other is one of the aforementioned groups, or R³⁴R³⁵=represents an adamantylidine group;
and wherein at least one of R³⁰, R³¹, R³², R³⁵ and R³⁶ is the group L(R)ₙ.

Examples of azo dyes include compounds of formula XL 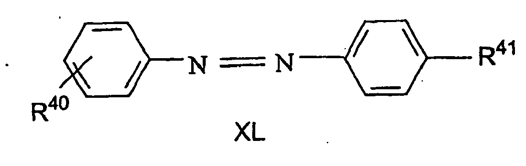 wherein:
R⁴⁰ and R⁴¹ are independently selected from the group consisting of hydrogen, C₁ to C₆ alkyl, C₁ to C6 alkoxy, -NR⁴²R⁴³ wherein R⁴² and R⁴³ are as defined for R²⁶ and R²⁷ aryl (such as phenyl) aryl substituted with one or more substituents selected from C₁ to C₆ alkyl and C₁ to C₆ alkoxy, substituted C₁ to C₆ alkyl wherein the substituent is selected from aryl and C₁ to C₆ alkoxy, substituted C₁ to C₆ alkoxy wherein the substituent is selected from C₁ to C₆ alkoxy aryl and aryloxy.

Specific examples of azo dyes include the following compounds of formula XL:

| | R⁴⁰ | R⁴¹ |
|---|---|---|
| 1. | H | OCO(CH₂)₂OCO(CH₂CH₂O)₁₀COC(CH₃)=CH₂ |
| 2. | P-OCH₃ | PDMS-prop-meac |

The reactive oligomer which characterises the photochromic compound of the invention may be prepared and attached by reaction at a suitable functional group of a photochromic moiety or precursor thereof.

For example the commercially available unsaturated polyethyleneoxy oligomers of formula LI may be used to prepare adducts with photochromics by reaction with succinic anhydride in the presence of an amine such as triethylamine to provide the unsaturated acid of formula LII (where Z is OH).

The acid of formula LII (where Z is OH) may be coupled with a nuclophilic substituted photochromic moiety of formula LIII where X is oxygen, sulphur, NH or NR¹ (where R¹ is alkyl) by converting the acid to an intermediate compound of formula LII where Z is a leaving group such as an anhydride, acid chloride or more preferably an intermediate formed in the presence of a coupling agent such as dicyclohexylcarbodimide (DCC) to provide the unsaturated oligomer adduct of formula (LVI).

Another approach is to react an acid substituted photochromic such as the compound of formula LIV with an unsaturated polyethyleneoxy oligomer of formula LV (wherein Z is OH) in the presence of a coupling agent or via an 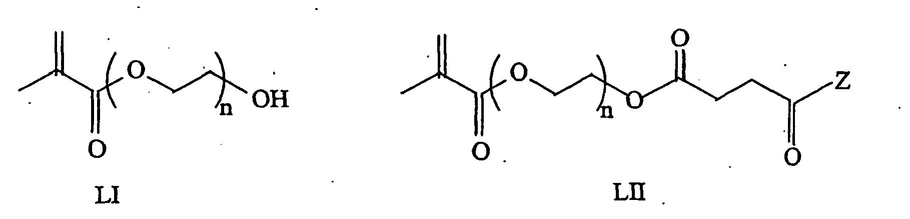 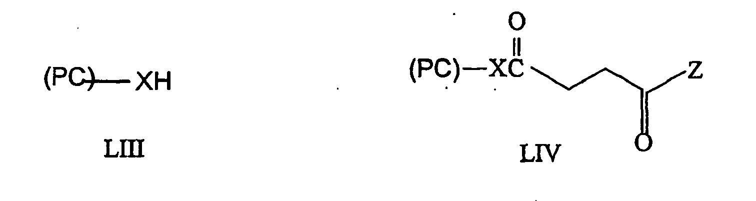 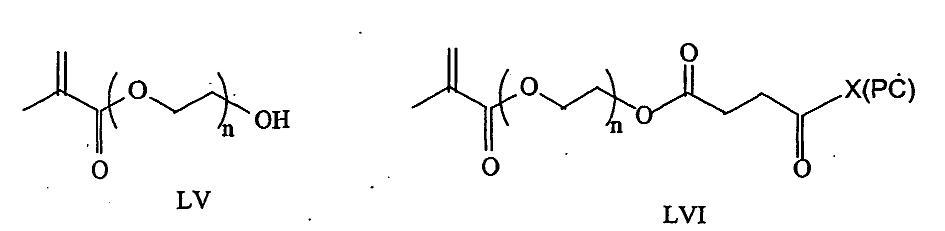 intermediate of formula LV where Z is a leaving group.

The photochromic compounds of the invention (which comprise an oligomer having a reactive functional group) tend to be non-crystalline solids or oils. This makes them more soluble in monomers and polymer matrices. It also means they are less likely to crystallise in the matrix, thus this may allow higher loading of dyes and may also prevent the crystallisation that may occur with conventional photochromic dyes.

The compounds of the invention have their own built-in nanoenvironment because the dye can never be separated from a favourable oligomer.

The compounds of the invention may be used in mixtures with conventional photochromics.

The use of compounds of the invention allows the fade speed of the photochromic to be changed without changing its colour. Thus it allows the tuning of fade speed for different coloured dyes. This is important to get a consistent colour when fading occurs. Thus, if a blue dye of a particular speed is needed, modification can be made to include an oligomer of an appropriate length in accordance with the invention.

The dye monomers may be incorporated into the polymer matrix under a range of curing conditions which will be readily appreciated by those skilled in the art having regard to the compositions disclosed above. Typical curing conditions may involve the use of suitable catalysts and or sensitisers. Examples of curing conditions include thermal curing and photopolymerisation. Monomer compositions of the present invention may be applied to a substrate to be rendered photochromic by coating (and subsequent curing) or the compositions may be shaped, for example by casting before thermal or radiation curing. Solvents or carriers may be used to facilitate application of the monomer composition as a coating. Typically the VOC (volatile organic solvent component) will comprise from 0 to 50% by weight of the composition.

The polymerisable composition according to the present invention may include a polymerisation curing agent.

The polymerisation curing agent may be selected from one or more of a UV curable (photo) initiator, radical heat cationic or radical initiator. UV photoinitation and thermal initiation are preferred. The compositions may be cured by a combination of UV radiation and heat.

The amount of curing agent may vary with the monomers selected. It has been possible to operate with a relatively low level of curing agent of between approximately 0.05 and 4%, preferably 0.05% to 3.0% by weight.

Suitable curing agents may be selected from the group consisting of azodiisobutyronitrile, AIBN (azo radical heat initiator), 2,2'-azobis(N,N'-dimethyleneisobutyramidine)dihydrochloride, 2,2'-azobis(2-amidinopropane)-dihydrochloride, 2,2'-azobis(N,N'-dimethyleneisobutyramidine), 4,4'-azobis(4-cyanopentanoic acid), 2,2'-azobis{2-methyl-N-[1,1-bis(hydroxymethyl)2-hydroxyethyl]propionamide}, 2,2'-azobis{2-methyl-N-[1,1-bis(hydroxymethyl)-ethyl]propionamide}, 2,2'-azobis[2-methyl-N-(2-hydroxyethyl)propionamide], 2,2'-azobis(isobutyramide)dihydrate, 2,2-azobis(4-methoxy-2,4-dimethylvaleronitrile), 2,2'-azobis(2,4-dimethylvaleronitrile), 2,2'-azobisisobutyronitrile, dimethyl 2,2'-azobis-isobutyrate, 2,2'-azobis(2-methylbutyronitrile), 1,1'-azobis(1-cyclohexanecarbonitrile), 2-(carbamoylazo)-isobutyronitrile, 2,2'-azobis(2,4,4-trimethylpentane), 2-phenylazo-2,4-dimethyl-4-methoxyvaleronitrile, 2,2'-azobis(2-methylpropane), Trigonox TX-29 (dialkyl peroxide radical heat initiator), 1,1-di-(-butyl peroxy-3,3,5-trimethyl cyclohexane), TBPEH (alkyl perester radical heat initiator), t-butyl per-2-ethylhexanoate (diacyl peroxide radical heat initiator), benzoyl peroxide, (peroxy dicarbonate radical heat initiator), ethyl hexyl percarbonate (ketone peroxide radical heat initiator), methyl ethyl ketone peroxide, "Cyracure UV1-6974" (cationic photoinitiator), triaryl sulfonium hexafluoroantimonate, Lucirin TPO (radical photoinitiator), 2,4,6-trimethylbenzoyidiphenylphosphine oxide, Irgacure 819, bis(2,4,6-trimethylbenzoyl)-phenyl-phosphine oxide, 1-bis(2,6-dimethoxybenzoyl)-2,4,4-trimethylpentyl phosphineoxide, Vicure 55 (radical photoinitiator), methyl phenylglycoxylate, bis(t-butylperoxide)-diisopropylbenzene, t-butyl perbenzoate, t-butyl peroxy neodecanoate, Amicure DBU, Amicure BDMA, DABCO, polycat SA-1; polycat SA-102, polycat SA-610/50, aluminium acetyl acetonate, dibutyltin dilaurate, dibutyltin oxide, Darocur 1173, Irgacure 184, Irgacure 500, Irgacure 1800 and Irgacure 1850.

The initiator may be a single component or combination of initiator components.

Other additives may be present which are conventionally used in coating compositions such as inhibitors, surfactants, UV absorbers, stabilisers and materials capable of modifying refractive index. Such additives may be selected from the group consisting of levelling agents including 3M FC 430 and 3M FC 431.

Examples of surfactants include, fluorinated surfactants or polydimethyl siloxane surfactants such as FC430, FC431 made by 3M, BYK300, BYK371 made by Mallinckrodt, SF-1066, SF-1141 and SF-1188 made by General Electric Company, L-540, L-538 sold by Union Carbide and DC-190 sold by Dow Corning.

Examples of UV absorbers include Ciba Tinuvin P-2(2'-hydroxy-5'methyl phenyl)benzotriazole, Cyanamid Cyasorb UV 531-2-hydroxy-4-n-octoxybenzophenone, Cyanamid Cyasorb UV5411-2(2-hydroxy-5-t-octylphenyl)-benzotriazole, Cyanamid UV 2098-2 hydroxy-4-(2-acryloyloxyethoxy)benzophenone, National Starch and Chemicals Permasorb MA-2 hydroxy-4-(2hydroxy-3-methacryloxy)propoxy benzophenone, Cyanamid UV24-2,2'-dihydroxy-4-methoxybenzophenone, BASF UVINUL 400-2,4 dihydroxy-benzophenone, BASF UVINUL D-49-2,2'-dihydroxy-4,4' dimethoxybenzophenone, BASF UVINUL D-50-2,2', 4,4' tetrahydroxy benzophenone, BASF UVINUL D-35-ethyl-2-cyano-3,3-diphenyl acrylate, BASF UVINUL N-539-2-ethylhexyl-2-cyano-3,3-diphenyl acrylate, Ciba Geigy Tinuvin 213;

Examples of stabilisers include hydroquinone, coating Solution Stabilizers, nitroso compounds such as Q1301 and Q1300 from Wako Hindered Amine Light Stabilisers (HALS), Including, Ciba Tinuvin765/292bis(1,2,2,6,6)pentamethyl-4-piperidyl)sebacate, Ciba Tinuvin 770-bis(2,2,6,6-tetramethyl-4-piperidinyl)- sebacat.

Examples of antioxidants include Ciba Irganox 245-triethylene glycol-bis-3-(3-tertbutyl-4-hydroxy-5-methyl phenyl)propionate, Irganox 1010-2,2-bis[[3-[3,4-bis(1,1-dimethylethyl)-4-hydroxyphenyl[-1-oxopropoxy] methyl]-1,3-propanediyl 3,5-bis(1,1-dimethyl ethyl)-4-hydroxy benzene propanoate, Irganox 1076-octadecyl 3-(3',5'-di-tert-butyl(-4'-hydroxyphenyl)propionate, hydroquinone, BHT, TBC, MEHQ (4-methoxyphenone), 2-ethoxy-5-(propenyl)phenol, Isoeugenol, 2-allyl phenol, butylated hydroxyanisole;

Examples of anticolouring agents include 10 dihydro-9-oxa-10-phosphaphenanthrene-1-oxide;

Examples of cure modifiers include dodecyl mercaptan, butyl mercaptan, thiophenol;

Examples of nitroso compounds include Q1301 from Wako Nofmer from Nippon Oils and Fats.

Other additives can be present such as viscosity modifiers, and include monomers such as methacrylic acid, vinyl silanes, and other functional monomers. Other monomeric additives may be included to improve processing and/or material properties, these include:
methacrylic acid, maleic anhydride, acrylic acid dye-enhancing, pH-adjusting monomers like Alcolac SIPOMER 2MIM a charge-reducing cationic monomer to render the material more antistatic, example Sipomer Q5-80 or Q9-75.

The composition according to the present invention may be utilised in the preparation of a coated optical article or may be used in casting optical articles.

In a preferred aspect the cured composition exhibits improved scratch resistance when compared with corresponding photochromic articles of comparable fade speed.

The composition of an optical coating may be tailored so that its refractive index substantially matches that of the optical article. The coating may have a thickness in the range of approximately 0.1 to 100 micron (µm).

When the primer coating includes a dye component the primer coating is applied to at least the front (convex) surface of the optical article.

Alternatively, when the primer coating functions to provide improved impact resistance to the optical article, the primer coating preferably has a thickness of approximately 0.7 to 5 micron.

The optical article may be a camera lens, optical lens element, video disc or the like. An optical lens element is preferred.

By the term "optical lens element" we mean all forms of individual refractive optical bodies employed in the ophthalmic arts, including, but not limited to, lenses, lens wafers and semi-finished lens blanks requiring further finishing to a particular patient's prescription. Also included are formers used in the manufacture of progressive glass lenses and moulds for the casting of progressive lenses in polymeric material.

Where the optical article is an optical lens, the optical lenses may be formed from a variety of different lens materials, and particularly from a number of different polymeric plastic resins. Medium to high index lens materials, e.g. those based on acrylic or allylic versions of bisphenols or allyl phthalates and the like are particularly preferred. Other examples of lens materials that may be suitable for use with the invention include other acrylics, other allylics, styrenics, polycarbonates, vinylics, polyesters and the like. The lens material "Spectralite" or like mid to high index lens materials are particularly preferred. A "Finalite"-type material of may also be used.("Spectratite" and "Finalite are trade marks of Sola International Holdings).

The utilisation of a coating with a Spectralite-type optical lens is particularly advantageous in improving the impact resistance of the lens. This is particularly so where an anti-reflective (AR) coating is also included. Such AR coatings may otherwise cause a plastic optical lens to exhibit increased brittleness, for example when heat is applied.

A common ophthalmic lens material is diethylene glycol bis (allyl carbonate). One such material is CR39 (PPG Industries).

The optical article may be formed from cross-linkable polymeric casting compositions, for example as described in the Applicants U.S. Pat. No. 4,912,155, U.S. Patent Application Serial No. 07/781,392, Australian Patent Applications 50581/93 and 50582/93, and European Patent Specification 453159A2, the entire disclosures of which are incorporated herein by reference.

For example, in Australian Patent Application 81216/87, the entire disclosure of which is incorporated herein by reference, the Applicant describes a cross-linkable casting composition including at least polyoxyalkylene glycol diacrylate or dimethacrylate and at least one poly functional unsaturated cross-linking agent.

Further, in Australian Patent Application 75160/91, the entire disclosure of which is incorporated herein by reference, the Applicants describe a polyoxyalkylene glycol diacrylate or dimethacrylate; a monomer including a recurring unit derived from at least one radical-polymerisable bisphenol monomer capable of forming a homopolymer having a high refractive index of more than 1.55; and a urethane monomer having 2 to 6 terminal groups selected from a group comprising acrylic and methacrylic groups.

The monomeric dye compounds may be incorporated in the polymer matrix in the process of the present invention by being mixed with a polymerizable monomeric composition that upon curing produces a solid polymeric composition of Tg typically above 30°C preferably at least 50°C, still more preferably at least 70°C and most preferably at least 80°C. The polymerizable composition can be cast as a film, sheet or lens, or injection molded or otherwise formed into a sheet or lens. Preferably the article will be optically transparent;
(a) The polymerizable composition may also be applied to the surface of a material by any convenient manner, such as spraying, brushing, spin-coating or dip-coating from a solution or dispersion of the photochromic material in the presence of a polymeric binder. For example the polymerizable composition (which may be) partly cured) can be dissolved or dispersed in a solvent which can be applied to the surface of a substrate in the form of a permanent adherent film or coating by any suitable technique such as spraying, brushing, spin-coating or dip-coating;
(b) The polymerizable composition can be cast or coated onto a substrate by the above mentioned methods and placed within a host material as a discrete layer intermediate to adjacent layers of a host material(s);
(c) The photochromic monomer of the invention may be incorporated into a dye monomeric composition by ball milling with a carrier to disperse it in a reactive binder matrix. Such a composition may be used as an ink in ink jet printing and suitable (PC) moieties may be chosen to allow security markings on documents to be visible in exposure to UV light used in photocopy;
(d) The dye monomer may be compounded with suitable resins and the resin polymerized with the dye monomer before, during or after being injection moulded to shape it to form a film, for example by blow moulding or to form more complex shaped extruded and/or blown structures.

The present invention is more particularly described in the following examples which are intended as illustrative only since numerous modifications and variations therein will be apparent to those skilled in the art.

Examples of host matrix into which the dye monomer may be incorporated include homopolymers and copolymers of polyol(allyl carbonate) monomers, homopopolymers and copolymers of polyfunctional acrylate monomers, polyacrylates, poly(alkylacrylates) such as poly(methylmethacrylate), cellulose acetate, cellulose triacetate, cellulose acetate propionate, cellulose acetate butyrate, poly(vinyl acetate), poly(vinylalcohol), poly(vinylchloride), poly(vinlylidene chloride), polyurethanes, polycarbonates, poly(ethylene-terephthalate), polystyrene, copoly(styrene-methylmethacrylate), copoly(styrene-acrylateonitrile), poly(vinylbutyral), and homopolymers and copolymers of diacylidene pentaerythritol, particularly copolymers with polyol(allylcarbonate) monomers, eg diethylene glycol bis(allyl carbonate), and acrylate monomers. Transparent copolymers and blends of the transparent polymers are also suitable as host materials.

The resulting matrix material may be an optically clear polymerized organic material prepared from a polycarbonate resin, such as the carbonate-linked resin derived from bisphenol A and phosgene which is sold under the trademark LEXAN; a poly(methylmethacrylate), such as the material sold under the trademark PLEXIGLAS; polymerizates of a polyol(allyl carbonate), especially diethylene glycol bis(allyl carbonate), which is sold under the trademark CR-39, and its copolymers such as copolymers with vinyl acetate, eg copolymers of from about 80 - 90 percent diethylene glycol bis(allyl carbonate) and 10 - 20 percent vinyl acetate, particularly 80 - 85 percent of the bis(allyl carbonate) and 15 - 20 percent vinyl acetate, cellulose acetate, cellulose propionate, cellulose butyrate, polystyrene and copolymers of styrene with methyl methacrylate, vinyl acetate and acrylonitrile, and cellulose acetate butyrate.

Polyol (allyl carbonate) monomers which can be polymerised to form a transparent host material are the allyl carbonates of linear or branched aliphatic glycol bis(allyl carbonate) compounds, or alkylidene bisphenol bis(allyl carbonate) compounds. These monomers can be described as unsaturated polycarbonates of polyols, eg glycols. The monomers can be prepared by procedures well known in the art, eg, US Pat. Nos. 2,370,567 and 2,403,113. The polyol (allyl carbonate) monomers can be represented by the graphic formula: 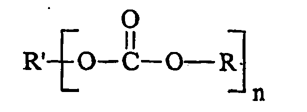 wherein R is the radical derived from an unsaturated alcohol and is commonly an allyl or substituted allyl group, R' is the radical derived from the polyol, and n is a whole number from 2-5, preferably 2. The allyl group (R) can be substituted at the 2 position with a halogen, most notably chlorine or bromine, or an alkyl group containing from 1 to 4 carbon atoms, generally a methyl or ethyl group. The R group can be represented by the graphic formula: 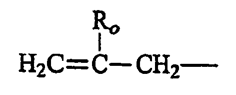 wherein R*₀* is hydrogen, halogen, or a C₁-C₄ alkyl group. Specific examples of R include the groups: allyl 2-chloroalyl, 2-bromoalyl, 2-fluoroalyl, 2-methylalyl, 2-ethylalyl, 2-isopropylalyl, 2-n-propylalyl, and 2-n-butylalyl. Most commonly R is the alyl group:

H₂C=CH-CH₂

R' is the polyvalent radical derived from the polyol, which can be an aliphatic or aromatic polyol that contains 2, 3, 4 or 5 hydroxy groups. Typically, the polyol contains 2 hydroxy groups, ie a glycol or bispenol. The aliphatic polyol can be linear or branched and contain from 2 to 10 carbon atoms. Commonly, the aliphatic polyol is an alkylene glycol having from 2 to 4 carbon atoms or a poly(C₂-C₄) alkylene glycol, ie ethylene glycol, propylene glycol, trimethylene glycol, tetramethylene glycol, or diethylene glycol, triethylene glycol etc.

In a further embodiment, the invention provides a photochromic article comprising a polymeric organic host material selected from the group consisting of poly(methyl methacrylate), poly(ethylene glycol bismethacrylate), poly(ethoxylated bisphenol A dimethacrylate) thermoplastic polycarbonate, poly(vinyl acetate), polyvinylbutyral, polyurethane, and polymers of members of the group consisting of diethylene glyco bi(allylcarbonate) monomers, diethylene glycol dimethacrylate monomers, ethoxylated phenol bismethylacrylate monomers, diisopropenyl benzene monomers and ethoxylated trimethylol propane triacrylate monomers, and a photochromic moiety covalently tethered to the matrix via an oligomer of the type herein before described.

The polymeric matrix material is selected from the group consisting of polyacrylates, polymethacryltes, poly(C₁-C₂) alkyl methacrylates, polyoxy(alkylene mathacrylates), poly(alkoxylates phenol methacrylates), cellulose acetates, cellulose triacetate, cellulose acetate propionate, cellulose acetate butyrate, poly(vinyl acetate), poly(vinyl alcohol), poly(vinyl chloride) poly(vinylidene chloride), thermoplastic polycarbonates, polyesters, polyurethanes, polythiourethanes, poly(ethylene terephthalate), polystyrene, poly(alpha methylstyrene), copoly(styrene-methylmethacrylate), copoly(styreneacrylonitrile), polyvinylbutyral and polymers of members of the group consisting of polyol(allyl carbonate) monomers, polyfunctional acrylate monomers, polyfunctional methylacrylate monomers, diethylene glycol dimethacrylate monomers, diisopropenyl benzene monomers, alkoxylateed polyhydric alcohol monomers and diallylidene pentaerythritol monomers.

The polymerizable composition of the invention may be in the form of a coating or adhesive and may comprise a binder resin and crosslinker. Binders are primarily responsible for the quality of a paint or laquer coating.Examples of binders include alkyds, polyesters, amino resins such as melamine formaldehyde, acrylics, epoxies and urethanes. The binder may be thermoplastic or thermosetting in character and max be of molecular weight from 500 to several million. Coating comprising the polymerizable composition of the invention may include a solvent to adjust the viscosity. The viscosity may for example be in the range of from 0.5 to 10Ps. Pigments and fillers may be used to conferopacity or colour. A coating composition based on the composition of the invention may utilise a range of crosslinking systems such as polyisocyanates for cross linking active hydrogen funstional groups such as hydroxy and amine; epoxy/acid; epoxy amine and carbamate melamine. The coating composition may be in two pack form, for example one pack comprising the cross linking agent and another pack comprising a binder, a dye monomer as hereinbefore described and optionally further components such as solvents,pigments,fillers and formulation aids.

The terminal reactive group of the polymerizable composition and the binder component may both comprise groups such as hydroxy, amine, alkylamine, chlorosilane, alkoxy silane epoxy unsaturated, isocyanato and carboxyl for reacting with a monomer component on curing.

In this embodiment one pack comprises the binder component and the other the cross-linker. Typically the binder component will comprise 50 to 90% by weight of the coating composition (more preferably 65 to 90%) and the crosslinker components will comprise from 10 to 50% by weight of the coating composition.

Preferred hydroxyl moieties in the binder component are derived from hydroxy monomers, such as hydroxy alkyl acrylates and (meth)acrylates wherein the alkyl group has the range of 1 to 4 carbon atoms in the alkyl group. Exemplars include hydroxy ethyl (meth)acrylate, hydroxy propyl (meth)acrylate, hydroxy butyl (meth)acrylate or a combination thereof.

The monomer mixture which may be used in preparation of an acrylic binder preferably includes one or more monomers selected from alkyl acrylates and corresponding (meth)acrylates having 1-18 carbon atoms in the alkyl group, such as methyl (meth)acrylate, ethyl (meth)acrylate, propyl (meth)acrylate, isopropyl (meth)acrylate, butyl (meth)acrylate, pentyl (meth)acrylate, hexyl (meth)acrylate, 2-ethyl hexyl (meth)acrylate, nonyl (meth)acrylate, lauryl (meth)acrylate, stearyl (meth)acrylate; cycloaliphatic (meth) acrylates, such as trimethylcyclohexyl (meth)acrylate, and isobutylcyclohexyl (meth)acrylate; aryl (meth)acrylates, such as benzyl (meth)acrylate; isobornyl (meth)acrylate; cyclohexyl (meth)acrylate; glycidyl (meth)acrylate; ethyl hexyl (meth) acrylate, benzyl (meth)acrylate or a combination thereof. Methacrylates of methyl, butyl, n-butyl, and isobornyl are preferred. Other monomers such as styrene, alkyl styrene, vinyl toluene and acrylonitrile may be used in addition.

Amine moieties where directed may be provided by alkyl amino alkyl (meth)acrylates such as tert-butylaminoethyl methacrylate.

The crosslinking component of the coating composition of the present invention preferably includes one or more crosslinking agents having at least two isocyanate groups, such as a polyisocyanate crosslinking agent. Any of the conventional aromatic, aliphatic, cycloaliphatic, isocyanates, trifunctional isocyanates and isocyanate functional adducts of a polyol and a diisocyanate can be used. Typically useful diisocyanates are 1,6-hexamethylene diisocyanate, isophorone diisocyanate, 4,4'-biphenylene diisocyanate, toluene diisocyanate, bis cyclohexyl diisocyanate, tetramethylene xylene diisocyanate, ethyl ethylene diisocyanate, 2,3-dimethyl ethylene diisocyanate, 1-methyltrimethylene diisocyanate, 1,3-cyclopentylene diisocyanate, 1,4-cyclohexylene diisocyanate, 1,3-phenylene diisocyanate, 1,5-naphthalene diisocyanate, bis(4-isocyanatocyclohexyl)-methane and 4,4-diisocyanatodiphenyl ether. Prepolymerised forms of these isocyanates are also commonly used to reduce potential exposure hazard of volatile form.

The photochromic article may comprise a polymeric organic material which is a homopolymer or copolymer of monomer(s) selected from the group consisting of acrylates, methacrylates, methyl mathacrylate, ethylene glycol bis methacrylate, ethoxylated bisphenol A dimethacrylate, vinyl acetate, vinylbutyral, urethane, thiourethane, diethylene glycol bis(allyl carbonate), diethylene glycol dimethacrylate, diisopropenyl benzene, and ethoxylated trimethyl propane triacrylates.

The photochromic composition of the invention may contain the photochromic compound in a wide range of concentrations depending on the type of photochromic moiety and its intended application. For example in the case of inks in which high colour intensity is required a relatively high concentration of up to 30 wt% photochromic may be required. On the other hand it may be desirable in some cases such as optical articles to use photochromics in very low concentrations to provide a relatively slight change in optical transparency on irradiation. For example as low as 0.01 mg/g of matrix may be used. Generally the photochromic resin will be present in an amount of from 0.01 mg/g of matrix up to 30 wt% of host matrix. More preferably the photochromic compound will be present in an amount of from 0.01 mg/g to 100 mg/g of host matrix and still more preferably from 0.05 mg/g to 100 mg/g of host matrix.

The photochromic article may contain the photochromic compound in an amount of from 0.01 to 10.0 milligram per square centimetre of polymeric organic host material surface to which the photochromic substance(s) is incorporated or applied.

The dye monomers and polymerizable compositions of the invention may be used in those applications in which the organic photochromic substances may be employed, such as optical lenses, eg, vision correcting ophthalmic lenses and piano lenses, face shields, goggles, visors, camera lenses, windows, automotive windshields, aircraft and automotive transparencies, eg, T-roofs, sidelights and backlights, plastic films and sheets, textiles and coatings, eg coating compositions. The dye monomers and photochromic compositions may also be used as a means of light activated date storage. As used herein, coating compositions include polymeric coating composition prepared from materials such as polyurethanes, epoxy resins and other resins used to produce synthetic polymers; paints, ie, a pigmented liquid or paste used for the decoration, protection and/or the identification of a substrate; and inks, ie, a pigmented liquid or paste used for writing and printing on substrates, which include paper, glass, ceramics, wood, masonry, textiles, metals and polymeric organic materials. Coating compositions may be used to produce verification marks on security documents, eg documents such as banknotes, passport and driver' licenses, for which authentication or verification of authenticity may be desired.

In a further aspect the invention relates to a polymer comprising dye monomeric units and comonomer units forming a polymer chain wherein the dye monomeric units comprise an oligomer group and a photochromic moiety wherein photochromic moiety is tethered to the polymer chain by the oligomer.

The polymer composition may be in the form of a rigid polymer matrix or may be a gel or liquid polymer composition.

In one embodiment of this aspect the polymer is a binder polymer or prepolymer of a polymerizable polymer composition such as a coating or elastomer.

In one embodiment of this aspect of the invention the photochormic polymer composition comprises a reactive prepolymer polymer comprising dye monomeric units and one or more components such as reactive monomer, solvent, polymerization initiators, fillers, pigments and stabilizers.

For example the polymer composition may be in the form of a film forming composition such as a coating composition, ink or the like. It may be adapted cure by thermal, UV or other form of initiation.

In a further embodiment the invention provides a urethane coating comprising photochromic dye monomer having active hydrogen groups (such as hydroxy, thiol or amino) and a polyisocyanate or precursor (such as a capped polyisocyanate).

In a further embodiment the inventions provides a two pack coating system comprising:
(a) a first pack comprising a photochromic monomer wherein the photochromic monomer unit comprises photochromic moiety and at least one oligomeric group having a terminal reactive group; and
(b) a second pack comprising at least one of a polymerization initiator for the photochromic monomer and monomer reactive with said terminal reactive group, to form a polymer incorporating the photochromic moiety tethered to the polymer backbone by said oligomer.

In another embodiment the invention provides a two pack coating system comprising:
(a) a first pack comprising a photochromic prepolymer comprising dye monomeric units wherein the dye monomeric units comprise an oligomer group and a photochromic moiety wherein the photochromic moiety is tethered to the prepolymer backbone by said oligomer; and
(b) a second pack comprising at least one of an initiator and optionally a monomeric component reactive with the prepolymer.

In the most preferred embodiment of this aspect the first pack may include a prepolymer having active hydrogen reactive groups (such as hydroxyl, thiol or amine) and the second pack may include a polyisocyanate (such as TDI) to provide a polyurethane coating system.

The approach to oligomer substituted photochromics is also described in our copending International Application PCT/AU03/01453 the contents of which are herein incorporated by reference.

The approach to oligomer substituted photochromics is also described in our copending International Application PCT/AU03/01453 the contents of which are herein incorporated by reference.

Throughout the description and claims of this specification, use of the word "comprise" and variations of the word, such as "comprising" and "comprises", is not intended to exclude other additives, components, integers or steps.

The discussion of documents, acts, materials, devices, articles and the like is included in this specification solely for the purpose of providing a context for the present invention. It is not suggested or represented that any or all of these matters formed part of the prior art base or were common general knowledge in the field relevant to the present invention as it existed in Australia before the priority date of each claim of this application.

**Note on poly(ethylene glycol) {PEG} methylethers.** The PEG mono methyl ethers are supplied with an average molecular weight. For example the Aldrich Chemical Company supplies them with average number molecular weights such as 350, 750 etc which approximately but not exactly correspond to 7 PEG units, 16 PEG units etc. Thus the 350 Mn PEG contains a distribution of molecular weights and therefore PEG units. They are supplied with an average molecular weight. Any number quoted as the number of repeat units of dimethyl siloxane is to interpreted as an average value. To avoid cumbersome and strictly inaccurate naming, the PEG derivatives will be named on the basis of the Mn of the PEG from which they are derived. The succinic acid derivative from 350 PEG will be "succinic acid mono-PEG(350) ester" and not the formal "Succinic acid mono-(2-{2-[2-(2-{2-[2-(2-methoxy-ethoxy)-ethoxy]-ethoxy}-ethoxy)-ethoxy]-ethoxy}-ethyl) ester" which does not indicate the distribution of chain lengths that exists.

### Example 1

### Step 1

### Succinic acid polyethylene glycol methacrylate (526 g/mole)

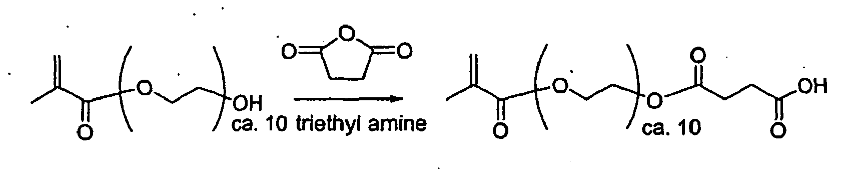

A solution of poly(ethylene)(560) glycol methacrylate (7.56g, 13.5 mmol), succinic anhydride (1.35g, 13.5 mmol), triethyl amine (1.38g, 13.6 mmol) and 4-dimethylaminopyridine (0.014g, 1.15 x 10⁻⁴ mol) in dichloromethane (50 ml) were heated at gentle reflux for 1 hour, under N₂. The solvent was removed *in vacuo,* to give the title compound a clear viscous oil of sufficient purity for further reaction (8.94g, 99%).

¹H NMR ((CD₃)₂CO) δ= 1.92 (3H, s), 2.51 (2H, d *J* 5.49), 2.55 (2H, d *J* 5.49), 3.58 (34H, bs), 3.66 (2H, t *J* 4.94), 3.72 (2H, t *J* 4.94), 4.17 (2H, t *J* 4.76), 4.25 (2H, t *J* 4.76), 5.64 (1H,s), 6.08 (1H,s).

### Step 2

### 9'-(Polyethylene glycol)(526) methacrylate-succinyloxy))-1, 3, 3-trimethylspiro- [indotine-2,3'-[3H] napth [2,1-b][1,4] oxazine]

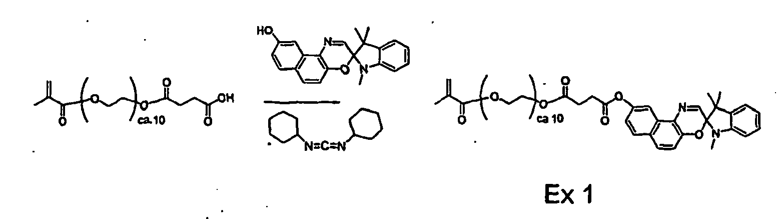

4-Dimethylaminopyridine (0.025g, 2.05 x 10⁻⁴ mol) was added to a solution of succinic acid polyethylene glycol methacrylate (0.77g, 1.23 mmol), 9'-hydroxy-1, 3, 3-trimethylspiro[indoline-2,3'-[3H] napth [2,1-b][1,4] oxazine] (0.42g, 1.21 mmol) and N,N'-dicyclohexylcarbodiimide (0.25, 1.21 mmol) in dichloromethane (20 ml). The resulting solution was stirred over night (16 hours) at room temperature, under N₂. The solution was cooled to 0°C, filtered, washed with cold dichloromethane (50 ml), and the solvent removed *in vacuo*. Column chromatography (ethyl acetate, followed by MeOH), gave a brown viscous oil which was dissolved, in dichloromethane and washed with water (6 x 50 ml), to give the title compound as a brown viscous oil contaminated with ∼20% unreacted succinic acid polyethylene glycol methacrylate (0.72g, 62%).

¹H NMR ((CD₃)₂CO) δ= 1.34 (3H, s), 1.36 (3H, s), 1.93 (3H, s), 2.77 (3H, s), 2.83 (2H, t, 6.22), 2.99 (2H, t, 6.22), 3.58 (36H, bs), 3.74 (2H, m), 4.25 (2H, m), 5.63 (1H, s), 6.08 (1H, s), 6.65 (1H, d, *J* 7.87), 6.87 (1H, dd, *J* 1.96, 7.50), 7.04 (1H, d, *J* 8.78), 7.11-7.23 (3H, m), 7.77-7.85 (2H, m), 7.88 (1H, d *J* 8.78), 8.26 (1H, d, *J* 2.20).

### Comparison Example 1.

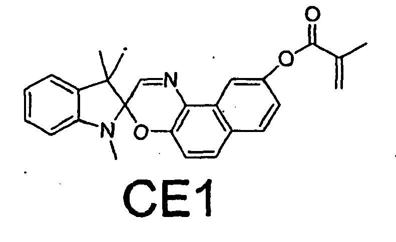

9'-Hydroxy-1,3,3-trimethylspiro[induline-2,3'-[2,1-b][1,4]oxazine (3g, 8.72mmole) and triethylamine (1.76 g, 2.4 mL) were added together in dichloromethane (50 mL) under nitrogen and methacroyl chloride (1.37g 13.1mmole) in dichloromethane (10mL) was added dropwise. The reaction was allowed to warm to room temperature and tlc analysis showed that no starting material remained. The reaction was washed with water and brine and dried with magnesium sulfate. The solvent was evaporated to give a solid. This was crystallised from methanol (100ml per 1g of crude product.) to give 1.7 g of yellow powder.

¹H NMR (CDCl₃) δ=1.36 (6H, s), 2.12 (3H, s), 2.77 (3H, s), 5.80 (1H, s), 6.42(1H, s), 6.59 (1H, d *J* 7.87), 6.91 (1H, t *J* 7.50), 7.00 (1H, d *J* 8.96), 7.10 (1H, d *J* 6.95), 7.16 -7.27 (2H, m), 7.67 (1H, d *J* 8.96), 7.72 (1H, s), 7.77 (1H, d *J* 8.78), 7.77 (1H, d *J* 8.78), 8.29 (1H, d *J* 2.20) ppm. ¹³C NMR (CDCl₃) δ= 166.4, 151.1, 150.3, 147.8, 145.0, 136.2, 136.1, 132.1, 130.3, 129.6, 128.3, 127.5, 127.5, 123.2, 121.8, 120.2, 119.7, 116.8, 113.3, 107.4, 99.0, 52.1, 29.9, 25.7, 21.0,18.7 ppm.

### Example 2

### Step 1. Succinic acid chloride polyethylene glycol (526) methacrylate

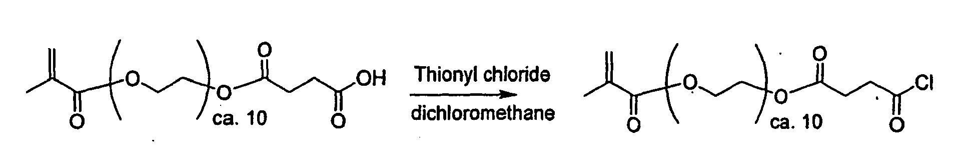

A magnetically stirred solution of polyethyleneglycol methacrylate(526 g/mole) succinic acid (4.66g, 8.09 mmol) as made in step 1 example 1, thionyl chloride (2.64g, 1.6 ml, 22.3 mmol) and three drops of DMF in dichloromethane (50 ml) were refluxed for 2 hours under nitrogen. The solvent was removed in vacuo to give the title compound as a pink gel (4.5g, 95%) of sufficient purity for further use.

1H NMR ((CH3)2O) δ1.92 (3H, s), 2.75 (2H, t J 6.0), 3.34 (2H, t J 6.0), 3.40 (2H, m), 3.59 (30H, bs), 3.67 (2H, m), 3.73 (2H, m), 4.23 (4H, m), 5.64 (1H, s), 6.08 (1H,s).

### Step 2.

### 5-Methyl carboxylate-6-(poly(ethylene glycol) (526) methacrylatesuccinoyloxy)-2,2-bis(4-methoxyphenyl)-2H-napthol[1,2-b] pyran

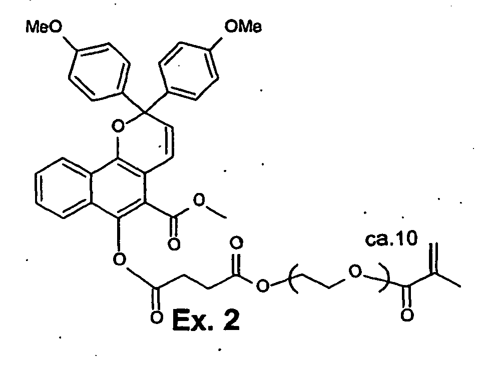

A solution of the polyethyleneglycol methacrylate(526) succinic acid chloride (as made in step 1) (0.36g, 0.766 mmol) in dichloromethane (5 ml) was slowly added to a solution of 5-methyl carboxylate-6-hydroxy-2,2-bis(4-dimethoxyphenyl)-2H-naptho[1,2-b]pyran (0.29g, 6.2 x 10-4 mol) and triethylamine (0.21g, 2.05 mmol) in dichloromethane (10 ml). The solution was stirred at room temperature under nitrogen for 30 minutes. Water (20 ml) was added and the solution was extracted with dichloromethane (3 x 20 ml). Removal of the solvent in vacuo followed by column chromatography (ethyl acetate followed by methanol) gave the title compound as a red viscous oil (0.39g, 49%).

1H NMR ((CH3)2O) δ1.92 (3H, s), 2.80 (2H, t J 6.2), 3.05 (2H, t J 6.2), 3.58 (32H, bs), 3.68 (2H, m), 3.73 (2H, m), 3.76 (3H, s), 3.96 (3H, s), 4.25 (4H, m), 5.63 (1H, s), 6.07 (1H, s), 6.41 (1H, d J 10.1), 6.89 (4H, d J 8.8), 6.97 (1H, d J 10.1), 7.45 (4H, d J 8.8), 7.54-7.70 (2H, m), 7.94 (1H, d J 8.2), 8.40 (1H, d J 8.2).

### Comparative example 2

### 5-Methyl carboxylate-6-(methacryloxy)-2,2-bis(4-methoxyphenyl)-2H-napthol[1,2-b]pyran

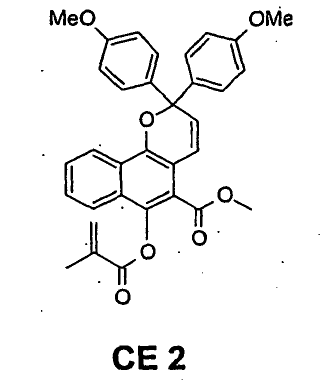

A solution of freshly distilled methacryloyl chloride (0.11 g, 1.05 mmol) in dichloromethane (5 ml) was slowly added to a solution of 5-methyl carboxylate-6-hydroxy-2,2-bis(4-dimethoxyphenyl)-2H-naptho[1,2-b]pyran (0.44 g, 0.93 mmol) and triethylamine (0.17 g, 1.68 mmol) in dichloromethane (10 ml). The solution was stirred at room temperature under nitrogen for 30 minutes. Water (20 ml) was added and the solution was extracted with dichloromethane (3 x 20 ml). Removal of the solvent in vacuo gave the title compound as a red solid (0.45g, 90%).

1H NMR ((CH3)2O) δ2.01 (3H, s), 3.76 (6H, s), 3.88 (3H, s), 5.83 (2H, d, J 8.1), 6.17 (1H, d, J 10.1), 6.24 (1H, s), 6.45 (1H, s), 6.85 (4H, d, J 8.8), 6.97 (1H, d, J 10.1), 7.41 (4H, d, J 8.8), 7.46-7.58 (2H, m), 7.73 (1H, d, J 8.2), 8.34 (1H, d, J 8.2).

### Example 3

The dyes were examined by dissolving them into a standard monomer mix followed by a simple thermal cure. The monomer mix chosen was a mix of a 1:4 weight ratio of polyethyleneglycol 400 dimethacrylate (known as 9G) and 2,2'-bis[4-methacryloxyethoxy]phenyl]propane (known as Nouryset 110) (shown below.) with 0.4% AIBN as initiator. This formulation will be referred to as monomer mix A. The dye was added to the formulation to a give a dye concentration ranging from 0.3 mg/g to 5 mg/g. The mixture was polymerized at 75 °C for 16 hours in a small gasket between microscope slides to give test lenses of approximately 14 mm diameter and 2 mm thick. Tg of a test lens made only of 9G and Nouryset 110 as described was 120 ° C.

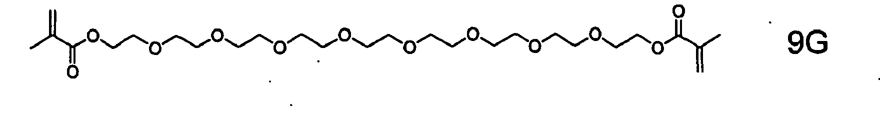

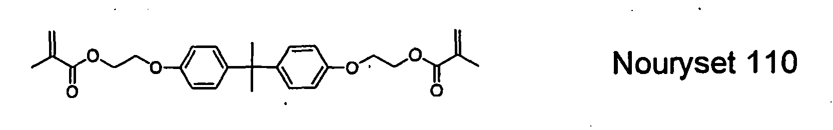

all measurements were performed on a custom built optical bench. The bench consisted of Cary 50 Bio UV-visible spectrophotometer fitted with a Cary peltier accessory for temperature control, a 280W Thermo-Oriel xenon arc lamp, an electronic shutter, a water filter acting as a heat sink for the arc lamp, a Schott WG-320 cut-off filter and a Hoya U340 band-pass filter. The solution samples were placed in quartz cuvettes and solid samples were placed at 45 degree angle to both UV lamp and light path of spectrophotometer. The resulting power of UV light at the sample was measured using an Ophir Optronics Model AN/2 power meter giving 25 mW/cm².

The change in absorbance was measured by placing the appropriate sample in the bleached state and adjusting spectrophotometer to zero absorbance. The samples were then irradiated with UV light from the xenon lamp by opening the shutter and measuring the change in absorption. The absorption spectra were recorded for both the bleached and activated (coloured) state. The wavelength of the maxima in absorbance was then recorded and used for the monitoring of kinetics of activation and fade. Test lens samples were activated with 1000 seconds UV exposure.

| Example Number | Dye (mg) | Monomer (g) | Aₒ | T_{1/2} (seconds) | T_{3/4} (seconds) |
|---|---|---|---|---|---|
| 1 | 3.0 | 1.5 | 0.9 | 33 | 267 |
| CE 1 | 1.1 | 1.017 | 1.64 | 238 | 1793 |
| 2 | 1.5 | 1.995 | 1.45 | 78 | 2800 |
| CE 2 | 1.8 | 2.251 | 0.90 | 223 | 6500 |

It can be seen from the above table that the flexible tether between the polymerizable group and the photochromic dye allows rapid switching when the dye is copolymerized into a rigid matrix of a Tg of 120°C. Example 1 has t_{½} and t_{/¾} of 33 and 267 seconds respectively while the electronically identical comparison dye that has no low Tg oligomeric tether has t_{½} and t_{¾} of 238 and 1793 seconds. Thus, the oligomeric tether has reduced the fade times (ie faster fade) by 86%. (see Figures 1 and 2) Similar effects are seen for the chromene example (Ex 2 vs CE2) (Figure 3). The advantage of this invention is that high Tg comonomers (such as as 9G, Nouryest 110, styrene etc) can be used and rapid photochromic switching, both colouration and fade, can be obtained. Thus low Tg comonomers that degrade mechanical strength and other properties of the lens or coating are not needed in order to get superior photochromic performance.

### Example 3a

The magnitude in reduction in t_{½} can be contrasted with the relatively small improvement reported in International Application WO00/15629 (PPG Application) comparison between Example 5 and Example 2 of the PPG application proposes 2,2-bis(4-methoxyphenyl)-5-methoxycarbonyl-6-(2-hydroxyethoxy)ethoxy[2H]naphtho[1,2-b].

Example 8 and table 1 shows that incorporation in a polymer formed of a monomer blend of ethoxylated tris phenol A dimethacrylate and poly(ethylene glycol) 600 dimethzcrylate gave rise to a 15% reduction in t_{½} compared with the electrically equivalent compound without the oligomer. In contrast corresponding compounds of the present inventions of Example 2 shows comprising about 10 ethylene oxide groups and an unsaturated terminal group (which is reactive with the monomers of the composition) exhibits a reduction in t_{½} from 223 seconds for the corresponding photochromic monomer without the oligomer (see Comparative Example 2) to 78 seconds which is a 65% reduction in t_{½}.

## Claims

1. A polymerizable composition for forming a photochromic article having a glass transition temperature of at least 50°C on curing the composition comprising:
(a) a polymerizable composition comprising a monomer component; and
(b) a photochromic dye monomer comprising a photochromic moiety and at least one oligomer group having at least one group reactive with the monomer component during curing wherein the oligomer group comprises at least seven polyether monomer units selected from alkyleneoxy and haloalkyleneoxy. -

2. A composition according to claim 1 wherein the polymerizable composition comprises less than 20 weight percent of the predominant alkyleneoxy or halo alkyleneoxy monomer unit constituted by the at least one oligomer group.

3. A polymerizable composition according to claim I wherein the cured composition provides a Tg of at least 50°C. and the t_{½} of the cured composition is at least 30% less than the t_{½} of the corresponding composition having a photochromic with equivalent electronic configuration in the absence of the oligomer.

4. A polymerizable composition according to claim 1 wherein the photochromic dye monomer is of formula I:
(PC)_{q}-(L(R )n)m
wherein:
PC is a photochromic moiety;
L is a bond or linking group:
R is an oligomers;
m and n are independently selected integers from 1 to 3;
q is 1 or 2;
R is independently selected from oligomers comprising at least 7 monomeric units selected from the group consisting of alkylenyloxy and fluoroalkylenyloxy and
wherein at least one oligomer R comprises at least one group for reacting with the monomer composition on curing of the polymerizable composition.

5. A polymerizable composition according to claim 1 wherein the at least one reactive group is selected from the group consisting of amino; alkylamino (including mono and di-alkylamino); hydroxyl; thio; mercapto; epoxy; carbamate; alkylhalo; unsaturated groups (such as acryloyl, methacryloyl, acryloyloxy, allyl allyloxy and methacryloyloxy), maleimides; the group of formula -SiX¹X²X³ wherein X¹, X² and X³ are independently selected from the group consisting of hydrogen, halogen, hydrocarbyl and hydrocarbyloxy and wherein at least one of X¹, X² and X³ is selected from hydrogen, halogen and hydrocarbyloxy; dithioester; trithiocarbonate; dithiocarbamate; xanthate; carboxylic acids; carboxylic esters; and C₁ to C₆ alkyl substituted with a group selected from hydroxy, thio, amino, alkyl amino, carboxyl, (C₁ to C₆ alkoxy)carboxyl, acryloyl, methacryloyl, acryloyloxy and methacryloyloxy.

6. A polymerizable composition according to claim 4 wherein at least one of the oligomers R comprises a terminal unsaturated group.

7. A polymerizable composition according to claim 4 wherein at least the one oligomer R comprises a unsaturated group selected from the group consisting of (meth)acryloyl, (meth)acryloyloxy, allyl and allyloxy.

8. A polymerizable composition according to claim 1 wherein at least one pendant oligomer group comprises at least seven monomer units selected from C₂ to C₄ alkyleneoxy and perfluoroalkyleneoxy.

9. A polymerizable composition according to claim 8 wherein the at least one oligomer is selected from groups of formula II:
-(X)ₚ(R¹)_{q}-X¹R² II
Wherein
X is selected from oxygen sulfur amino, substituted amino and C₁-C₄ alkylene;
X¹ is a bond or an attachment group for one or more reactive groups;
p is 0 or 1;
q is the number of monomer units and is at least seven;
R¹ which may be the same or different are selected from the group consisting of:
C₂ to C₄ alkyleneoxy; C₂ to C₄ haloalkyleneoxy; and
R² is selected from the group consisting of hydroxy, thio, optionally substituted amino, (meth)acrylyl, (meth)acrylyloxy, allyl, allyloxy, epoxy and isocyanato.

10. A polymerisable composition according to claim 1 wherein the at least one oligomer comprises at least three alkylene units of formula III 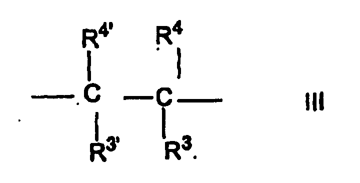 wherein
R³ is selected from the group consisting of hydrogen, halogen, hydroxy, alkoxy, aryl, aryloxy, heterocyclic, arylalkyl, alkylaryl, carboxyl, nitrile, alkoxycarbonyl, substituted alkoxycarbonyl, carbamoyl, N-alkylcarbamoyl, N,N-dialkylcarbamoyl, carbaniloyl, alkylphenylaminocarbonyl, alkoxyphenylaminocarbonyl, acyl, substituted acyl and the groups of formula:
-L'-(O)_{q}-(Z-O)ₚ-ZY';
and 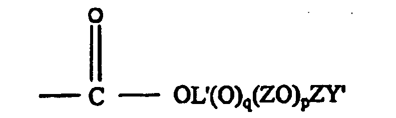 wherein
p is the number of (ZO) units and is preferably from 1 to 20 and more preferably 2 to 15, q is 0 or 1, Z is selected from the group consisting of C₂ - C₄ alkylene, dialkylsilyl, diarylsilyl and diaryloxysilyl; L' is a bond or a linking group such as C₁ to C₆ alkylene, aryl, alkaryl and aralkyl; and Y' is a terminal group selected from the group consisting of hydrogen, alkyl, hydroxyl and alkoxy, alkoxyalkoxy, hydroxyalkoxy and aryloxy, tri-(C₁ to C₆ alkyl)silane, di(C₁ to C₆ alkyl)phenyl silane;
R^{3'} is hydrogen or halogen and R³ and R^{3'} may together form a group of formula 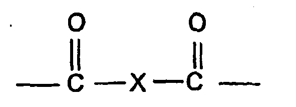 wherein
X is selected from the group consisting of oxygen and the group NR⁷R⁸ wherein R⁷ and R⁸ are independently selected from the group of hydrogen, alkyl, aryl, substituted alkyl and substituted aryl; and
R⁴ is selected from the group consisting of hydrogen, halogen, alkyl, hydroxy, hydroxy alkyl, nitrile and alkoxy.

11. A polymerisable composition according to claim 10 wherein the monomeric unit of formula III forms a block copolymer blocks or randomly distributed.

12. A polymerizable composition according to claim 4 wherein the oligomer R is selected from the groups of the following formulae (i) to (vii):
(i) -(X)ₚ(CH₂CH₂O)ₓR² 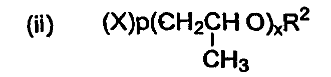 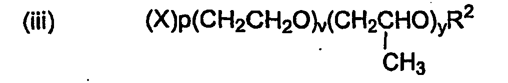
wherein the monomer units are distributed randomly or in block form
(iv) -(X)ₚCH₂O(CF₂CF₂O)ₓR²; 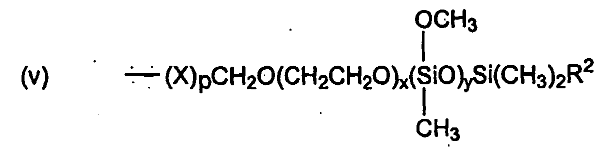
(vi) -Xₚ(CF₂CF₂O)_{z}-(CF₂)ₙR²
and
wherein X and R² and p are hereinbefore defined and x, v and y are the number of repeating units, and wherein at least one oligomer group is present wherein the total number of alkyleneoxy and fluorinated alkyleneoxy monomer units is at least 7.

13. A polymerizable composition according to claim 4 wherein the dye monomer is of formula IA to IF: 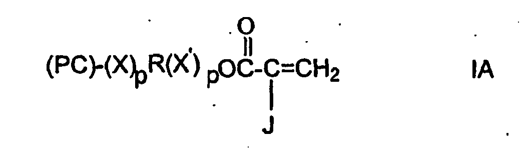
(PC)-(X)ₚR(X')ₚ-CH=CH₂ IB 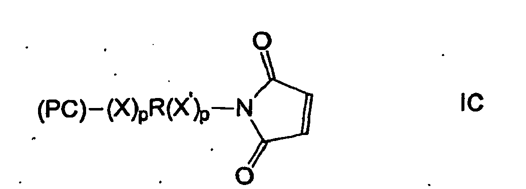 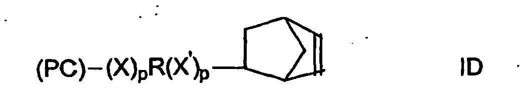
(PC)-(X)ₚR(X')ₚ(YH)_{w} IE
(PC)-XₚR(X')ₚ₍NR'R")_{w} IF
wherein:
X is a linking group for the oligomer;
X' is bond or attachment group for the one more reactive groups and is preferably selected from the group consisting of C₁ to C₄ alkylene;
where Y is oxygen or sulphur;
w is the number of hydroxy or thiol groups at the terminal end of the oligomer and is preferably 1 to 3;
p is independently selected from 0 and 1;
PC is a photochromic moiety;
J is hydrogen or C₁ to C₄ alkyl (preferably hydrogen or methyl);
R is an oligomer as defined;
R' is hydrogen, C₁ to C₆ alkyl or substituted (C₁ to C₆) alkyl; and
R" is hydrogen (C₁ to C₆) alkyl or substituted C₁ to C₆) alkyl.

14. A polymerizable composition according to claim 4 wherein the oligomer R is linked to the photochromic moiety (PC) by a linker group of any one of the formulae selected from IIa to IIp: 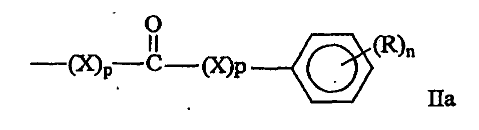 wherein n is from 1 to 3; 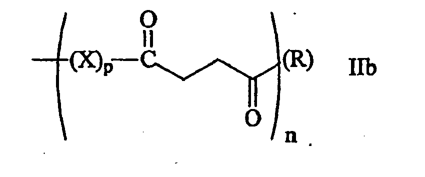 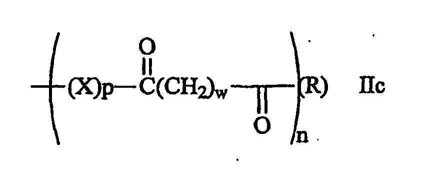
-(X)ₚ(CH₂)ₙCHR⁴(R) IId 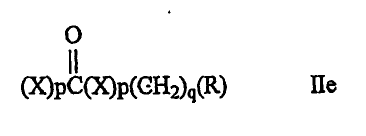 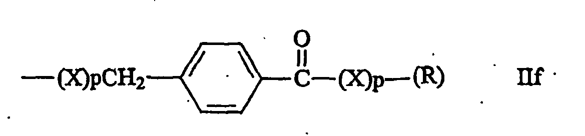
-(X)p(C₂ to C₆alkylene)-(X)ₚ-(R) IIg 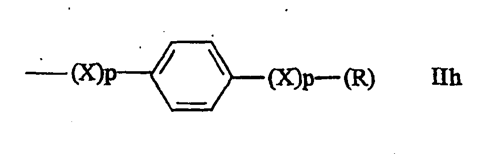 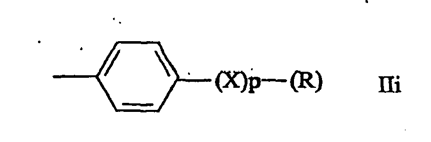 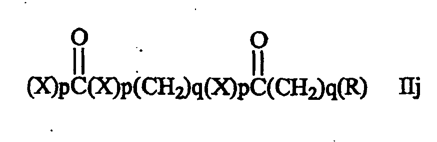 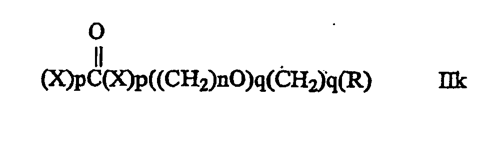 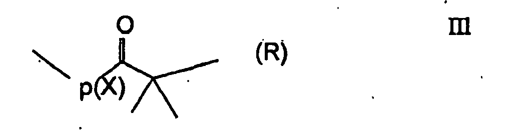 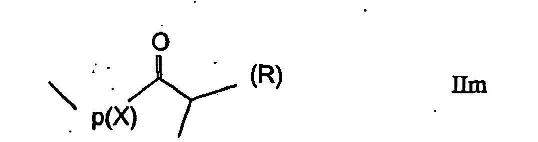 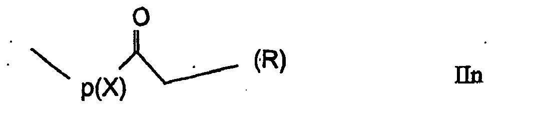 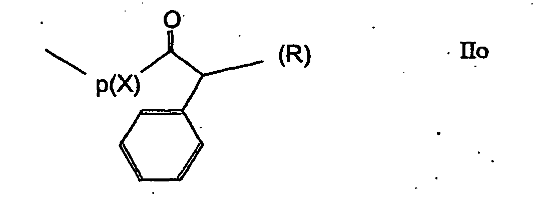 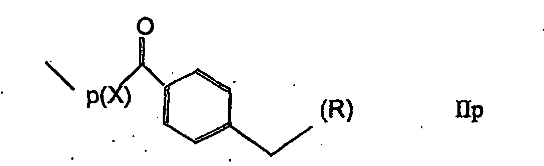
wherein in the formula IIa to IIp:
X which may be the same or different is as hereinbefore defined;
R⁴ is selected from the group consisting of hydroxy, alkoxy, amino and substituted amino such as alkyl amino;
n is an integer from 1 to 3;
w is an integer from 1 to 4;
q is an integer from 0 to 15;
p which when there is more than one may be the same or different is 0 or 1; and
(R) shows the radial for attachment of oligomer R.

15. A polymerizable composition according to claim 1 wherein the monomer component comprises at least one crosslinking monomer.

16. A polymerizable composition according to claim 1 wherein the resulting polymer comprises at least one selected from the group consisting of polyester, urethanes, polycarbonates, polyamides, epoxies and thiolene polymers.

17. A polymerizable composition according to claim 1 wherein the polymerizable matrix comprises monomers selected from the group consisting of polyol(allyl carbonate) monomers, multifunctional acrylate and methacrylate monomers, acrylates, alkylacrylates such methylmethacrylate, cellulose acetate, cellulose triacetate, cellulose acetate propionate, nitrocellulose cellulose acetate butyrate, poly(vinyl acetate),' vinylalcohol, vinylchloride, vinlylidene chloride, polyurethanes, polycarbonates, poly(ethylene-terephthalate), polystyrene, copoly(styrene-methytmethacrylate), copoly(styrene-acrylateonitrile), poly(vinylbutryal), and homopolymers and copolymers of diacylidene pentaerythritol, particularly copolymers with polyol(allylcarbonate) monomers, eg diethylene glycol bis(allyl carbonate), and acrylate monomers.

18. A polymerizable composition according to claim 1 wherein the photochromic moiety (PC) is selected from the group consisting of chromenes, spiropyrans; spiro-oxazines, fulgides, fulgimides, anils, perimidinespirocyclohexadienones, stilbenes, thioindigoids, azo dyes and diarylethenes and diarylperfluorocyclopentenes.

19. A polymerizable composition according to claim 4 wherein the photochromic moiety (PC) is selected from the group consisting of naphthopyrans, benzopyrans, indenonaphthopyrans, phenanthro- pyrans, spiro(benzindoline) naphthopyrans, spiro(indoline)- benzopyrahs, spiro(indoline) naphthopyrans, spiroquinopyrans, spiro(indoline)pyrans, spiro(indoline) naphthoxazines, spiro(indoline)pyridobenzoxazines, spiro(benzindoline)pyrido-benzoxazines, spiro(benzindoline)naphthoxazines, spiro(indoline)-benzoxazines, fulgides fulgimides and diarylperfluorocyclopentenes.

20. The polymerizable composition of claim 4 wherein the monomer component comprises diethylene glycol bis(allyl carbonate).

21. A polymerizable composition according to claim 1 wherein the monomer comprises at least one selected from the group consisting allyl diglycol carbonate monomer(s), polycarbonates forming monomers, monomers for forming polyurea urethanes and polyfunctional isocyanate(s) and polythiol or polyepisulfide monomer(s).

22. A polymerizable composition according to claim 1 wherein the photochromic compound comprises one or more reactive groups comprising active hydrogen groups (such as hydroxyl, amine and alkylamine) and the monomer composition comprises a polyisocyanate or epoxy crosslinking monomer.

23. A polymerizable composition according to claim 1 which forms a polymer having a Tg of at least 70°C on curing.

24. A photochromic article formed of a composition according to claim 1 said photochromic article having a Tg of at least 50°C.

25. A polymerizable composition according to claim 1 wherein the fade half life is reduced by at least 30% compared with the corresponding composition containing the electronically equivalent photochromic dye without the oligomer

26. A polymerizable composition according to claim 1 wherein the fade half life is reduced by at least 40% compared with the corresponding composition comprising the electronically equivalent photochromic compound without the oligomer.

27. A polymerizable composition according to claim 1 wherein t¾ is at least 30% reduced compared with the corresponding composition containing the electronically equivalent photochromic dye without the oligomer and preferablely at least 50%.

28. A photochromic article comprising a polymeric matrix formed from a monomer composition comprising a photochromic monomer comprising a photochromic moiety which is tethered to the polymer via a pendant oligomer comprising at least 7 monomeric units selected from the group consisting of alkylenyloxy, and fluoroalkylenyloxy (particularly perfluoroalkylenyloxy).

29. A photochromic article according to claim 28 wherein the photochromic dye monomeric unit is of formula I:
(PC)q-(L(R)n)m-
wherein:
PC is a photochromic moiety;
L is a bond or linking group:
R is an oligomers;
m and n are independently selected integers from 1 to 8;
q is 1 or 2;
R is independently selected from oligomers comprising and least 7 monomeric units selected from the group consisting of alkylenyloxy, fluoroalkylenyloxy (particularly perfluoroalkylenyloxy); and
wherein at least one oligomers R comprise a reactive group which is covalently Incorporated into the polymeric matrix.

30. A photochromic article according to claim 29 wherein the article has a photochromic t½ which is more than 30% less than the t½ for the corresponding article containing the electronically equivalent photochromic dye without the oligomer.

31. A photochromic article according to claim 29 wherein the photochromic moiety (PC) is selected from the group consisting of:
(a) spiro-oxazines of formula III 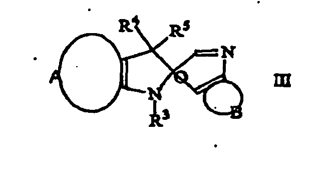 in the general formula III, R³, R⁴ and R⁵ may be the same or different and are each an alkyl group, a cycloalkyl group, a cycloarylalkyl group, an alkoxy group, an alklyleneoxyalkyl group, an alkoxycarbonyl group, a cyano, an alkoxycarbonylalkylgroup, an aryl group, an arylalkyl group, an aryloxy group, an alkylenethioalkyl group, an acyl group, an acyloxy group or an amino group, R⁴ and R⁵ may together form a ring, and R³, R⁴ and R⁵ may optionally each have a substituent(s);
(b) chromenes of formula XX or XX(d) 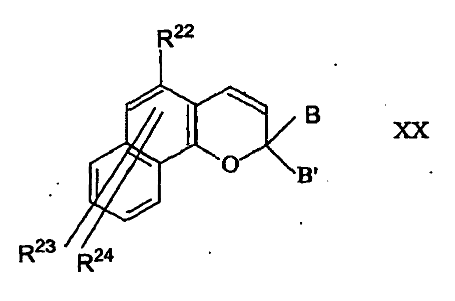 wherein
B and B' are optionally substituted phenylaryl and heteroaryl; and
R²², R²³ and R²⁴ are independently selected from hydrogen; halogen; C₁ to C₃ alkyl; the group L(R)ₙ; and the group of formula COW wherein W is OR25, NR²⁶R²⁷, piperidino or morpholino wherein R²⁵ is selected from the group consisting of C₁ to C₆ alkyl, phenyl, (C₁ to C₆ alkyl)phenyl, C₁ to C₆ alkoxyphenyl, phenyl C₁ to C₆ alkyl (C₁ to C₆ alkoxy)phenyl, C₁ to C₆ alkoxy C₂ to C₄ alkyl and the group L(R)ₙ; R₂₆ and R₂₇ are each selected from the group consisting of C₁ to C₆ alkyl, C₅ to C₇ cycloalkyl, phenyl, phenyl substituted with one or two groups selected from C₁ to C₆ alkyl and C₁ to C₆ alkoxy and the group L(R)ₙ; R²² and R²³ may optionally from a carboxylic ring of 5 or 6 ring members optionally fused with an optionally substituted benzene and wherein at least one of the substituents selected from the group of substituents consisting of B and B', R²², R²³, R²⁴, R²⁵, R²⁶ and R²⁷ is the group L(R)ₙ;
fulgides and fulgimides of formula XXX: 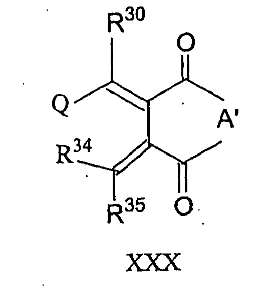 wherein
Q is selected from the group consisting of optionally substituted aromatic, optionally substituted heteroaromatic (where said aromatic/heteroaromatic may be mono or polycyclic aromatic/heteroaromatic);
R³⁰ is selected from the group consisting of a C₁ to C₄ alkyl, C₁ to C₄ alkoxy phenyl, phenoxy mono- and di(C1-C4) alkyl substituted phenyl or phen(C₁ to C₄);
A' is selected from the group consisting of oxygen or =N-R³⁶, in which R³⁶ is C₁-C₄ alkyl or optionally substituted phenyl;
R³⁴ and R³⁵ independently represents a C₁ to C₄ alkyl, phenyl or phen(C₁ to C₄) alkyl or one of and R³⁴, R³⁵ is hydrogen and the other is one of the aforementioned groups, or R³⁴R³⁵=represents an adamantylidine group;
wherein at least one of Q, R³⁰, R³⁴,R³⁵ and R³⁶ comprises the groupL(R)ₙ;
azo dyes of formula XL 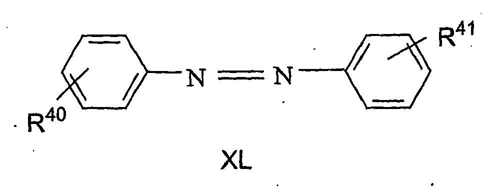 wherein
R⁴⁰ and R⁴¹ are independently selected from the group consisting of hydrogen; C₁ to C₆ alkyl; C₁ to C₆ alkoxy; -NR⁴²R⁴³ wherein R⁴² and R⁴³ are as defined for R²⁶ and R²⁷; aryl (such as phenyl) aryl substituted with one or more substituents selected from C₁ to C₆ alkyl and C₁ to C₆ alkoxy, substituted C₁ to C₆ alkyl wherein the substituent is selected from aryl and C₁ to C₆ alkoxy, substituted C₁ to C₆ alkoxy wherein the substituent is selected from C₁ to C₆ alkoxy aryl and aryloxy; and
diarylperfluoroxocyclopentenes of formulae XXV and XXXVI: 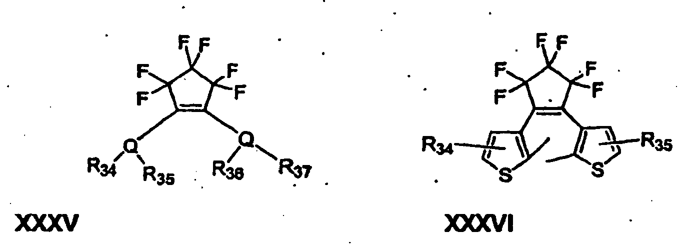 wherein
Q is selected from the group consisting of optionally substituted aromatic, optionally substituted heteroaromatic (where said aromatic/heteroaromatic may be mono or polycyclic aromatic/heteroaromatic);
R³⁴,R³⁵,R³⁶,R³⁷ independently represents a C₁ to C₄ alkyl, phenyl or phen(C₁ to C₄) alkyl or one of and R³⁴,R³⁵ R³⁶,R³⁷ is hydrogen and the others is one of the aforementioned groups; and
wherein at least one of Q, R³⁴,R³⁵,R³⁶ and R³⁷ comprises the groupL(R)ₙ.

32. A photochromic article according to claim 29 wherein at least one oligomer R is of formulae (i) to (v):
(i) -(X)_{P}(CH₂CH₂O)ₓX'R² 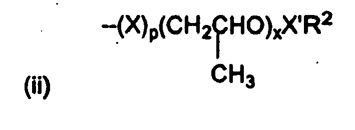 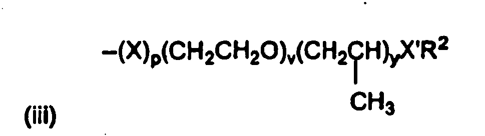
(iv) -(X)ₚCH₂(OCF₂CF₂)ₓX'R²
wherein the monomer units are distributed randomly or in block form
(v) -Xₚ(CF₂CF₂O)ₓ-(CF₂)ₙX'R²
wherein x, v and y are the number of repeating units,
X is selected from oxygen, sulphur, amino, substituted amino and C₁-C₄ alkylene;
X' is a bond or an attachment group for the one or more reactive groups;
p is 0 or 1;
n is from 1 to 3; and
R² is selected from the group consisting of hydroxy, mercapto, optionally substituted amino, (meth)acryl, (meth)acryloxy, allyl, allyloxy, epoxy and isocyanato, ketone, aldehyde, carboxylic acid, trithiocarbonates, xanthates, dithiocarbamates, dithioesters, ortho esters, (mono, di and tri) alkoxy silane, (mono, di and tri) halo silanes, (mono, di and tri) hydro silanes, alkyl halide, maleimido and other unsaturated C=C containing groups.

33. A process for preparing a photochromic article comprising:
(a) forming a polymerizable composition according to claim 1;
(b) casting the photopolymerizable composition or applying it as a coating to a substrate; and
(c) polymerizing the polymerizable composition to provide a polymeric matrix incorporating a photochromic monomeric unit comprising a photochromic moiety covalently tethered to the matrix polymer via an oligomer comprising at least 7 monomeric units selected from the group consisting of alkylenyloxy and fluoroalkylenyloxy.

## Patentansprüche

1. Polymerisierbare Zusammensetzung zur Bildung eines photochromen Gegenstandes mit einer Glasübergangstemperatur von mindestens 50° C nach Aushärten der Zusammensetzung, folgendes umfassend:
(a) eine polymerisierbare Zusammensetzung, umfassend eine Monomerkomponente; und
(b) ein photochromes Farbstoffmonomer, umfassend einen photochromen Teil und mindestens eine Oligomergruppe mit mindestens einer Gruppe, die beim Aushärten mit der Monomerkomponente reaktiv ist, wobei die Oligomergruppe mindestens sieben aus Alkylenoxy und Haloalkylenoxy ausgewählte Polyether-Monomereinheiten umfasst.

2. Zusammensetzung nach Anspruch 1, wobei die polymerisierbare Zusammensetzung weniger als 20 Gewichtsprozent der prädominanten, durch die mindestens eine Oligomergruppe dargestellte Alkylenoxy- bzw. Haloalkylenoxy-Monomereinheit umfasst.

3. Polymerisierbare Zusammensetzung nach Anspruch 1, wobei die ausgehärtete Zusammensetzung eine Tg von mindestens 50° C aufweist und die t½ der ausgehärteten Zusammensetzung mindestens 30% weniger beträgt als die t½ der entsprechenden Zusammensetzung mit einem Photochromen mit einem entsprechenden elektronischen Aufbau in Abwesenheit des Oligomers.

4. Polymerisierbare Zusammensetzung nach Anspruch 1, wobei das photochrome Farbstoffmonomer der Formel I entspricht:
(PC)_{q}-(L(R)ₙ)ₘ
wobei:
PC ein photochromer Teil ist;
L eine Bindung bzw. verbindende Gruppe ist;
R ein Oligomeres ist;
m und n unabhängig ausgewählte Ganzzahlen von 1 bis 3 sind;
q 1 oder 2 ist;
R unabhängig aus Oligomeren ausgewählt ist, die mindestens 7 monomere Einheiten umfassen, die aus der aus Alkylenyloxy und Fluor-Alkylenyloxy bestehenden Gruppe ausgewählt sind, und
wobei mindestens ein Oligomer R mindestens eine Gruppe zur Reaktion mit der Monomerzusammensetzung nach Aushärten der polymerisierbaren Zusammensetzung umfasst.

5. Polymerisierbare Zusammensetzung nach Anspruch 1, wobei die mindestens eine reaktive Gruppe ist, ausgewählt aus der Gruppe bestehend aus Amino; Alkylamino (einschließlich Mono- und Di-Alkylamino); Hydroxyl; Thio; Mercapto; Epoxy; Carbamat; Alkylhalo; ungesättigten Gruppen (wie beispielsweise Acryloyl, Methacryloyl, Acryloyloxy, Allyl Allyloxy und Methacryloyloxy), Maleimide; die Gruppe der Formel -SiX¹X²X³, wobei X¹, X² und X³ unabhängig ausgewählt sind aus der Gruppe bestehend aus Wasserstoff, Halogen, Hydrocarbyl und Hydrocarbyloxy und wobei mindestens eine von X¹, X² und X³ ausgewählt ist aus Wasserstoff, Halogen und Hydrocarbyloxy; Dithioester; Trithiocarbonat; Dithiocarbamat; Xanthat; Carbonsäuren; Carbonester; und C₁- bis C₆-Alkyl, ersetzt durch eine Gruppe ausgewählt aus Hydroxy, Thio, Amino, Alkylamino, Carboxyl, (C1- bis C6-Alkoxy)Carboxyl, Acryloyl, Methacryloyl, Acryloyloxy und Methacryloyloxy.

6. Polymerisierbare Zusammensetzung nach Anspruch 4, wobei mindestens eines der Oligomere R eine terminal ungesättigte Gruppe umfasst.

7. Polymerisierbare Zusammensetzung nach Anspruch 4, wobei mindestens das eine Oligomer R eine ungesättigte Gruppe umfasst, ausgewählt aus der Gruppe bestehend aus (Meth)Acryloyl, (Meth)Acryloyloxy, Allyl und Allyloxy.

8. Polymerisierbare Zusammensetzung nach Anspruch 1, wobei mindestens eine seitenständige Oligomergruppe mindestens sieben, aus C₂- bis C₄-Alkylenoxy und Perfluoralkylenoxy ausgewählte Monomereinheiten umfasst.

9. Polymerisierbare Zusammensetzung nach Anspruch 8, wobei das mindestens eine Oligomer aus Gruppen der Formel 11 ausgewählt ist:
-(X)_{P}(R¹)_{q}-X¹R² II
wobei
X aus Sauerstoff-Schwefel-Amino, substituiertem Amino und C₁-C₄-Akylen ausgewählt ist;
X¹ eine Bindung oder eine Haftgruppe für eine oder mehrere reaktive Gruppen ist;
p 0 oder 1 ist;
q die Anzahl der Monomereinheiten ist und mindestens sieben ist;
R¹, die gleich oder unterschiedlich sein können, ausgewählt sind aus der Gruppe bestehend aus:
C₂- bis C₄- Alkylenoxy; C₂- bis C₄-Haloalkylenoxy; und
R² ausgewählt ist aus der Gruppe bestehend aus Hydroxy, Thio, optional substituiertem Amino, (Meth)Acrylyl, (Meth)Acrylyloxy, Allyl, Allyloxy, Epoxy und Isocyanato.

10. Polymerisierbare Zusammensetzung nach Anspruch 1, wobei das mindestens eine Oligomer mindestens drei Alkyleneinheiten der Formel III umfasst: 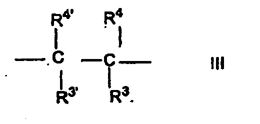 wobei
R³ ausgewählt ist aus der Gruppe bestehend aus Wasserstoff, Halogen, Hydroxy, Alkoxy, Aryl, Aryloxy, einem Heterozyklus, Arylalkyl, Alkylaryl, Carboxyl, Nitril, Alkoxycarbonyl, substituiertes Alkoxycarbonyl, Carbamoyl, N-Alkylcarbamoyl, N,N-Dialkylcarbamoyl, Carbaniloyl, Alkylphenylaminocarbonyl, Alkoxyphenylaminocarbonyl, Acyl, substituiertes Acyl und die Gruppen der Formel:
-L'-(O)_{q}-(Z-O)ₚ-ZY';
und 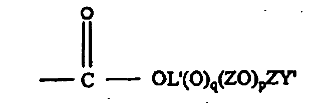 wobei
p die Anzahl der (ZO-)Einheiten ist und bevorzugt 1 bis 20 und noch bevorzugter 2 bis 15 beträgt, q 0 oder 1 ist, Z ausgewählt ist aus der Gruppe bestehend aus C₂-C₄-Alkylen, Dialkylsilyl, Diarylsilyl und Diaryloxysilyl; L' eine Bindung oder eine verbindende Gruppe ist wie beispielsweise C₁- bis C₆-Alkylen, Aryl, Alkaryl und Aralkyl; und Y' eine Endgruppe ist, ausgewählt aus der Gruppe bestehend aus Wasserstoff, Alkyl, Hydroxyl und Alkoxy, Alkoxyalkoxy, Hydroxyalkoxy und Aryloxy, Tri-(C₁- bis C₆-Alkyl)Silane, Di(C₁- bis C₆-Alkyl)Phenylsilan;
R^{3'} Wasserstoff oder Halogen ist und R³ und R^{3'} zusammen eine Gruppe der Formel 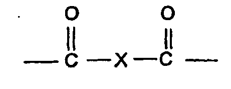 bilden können,
wobei
X ausgewählt ist aus der Gruppe bestehend aus Sauerstoff und der Gruppe NR⁷R⁸, wobei R⁷ und R⁸ unabhängig ausgewählt sind aus der Gruppe aus Wasserstoff, Alkyl, Aryl, substituiertem Alkyl und substituiertem Aryl; und
R⁴ ausgewählt ist aus der Gruppe bestehend aus Wasserstoff, Halogen, Alkyl, Hydroxy, Hydroxyalkyl, Nitril und Alkoxy.

11. Polymerisierbare Zusammensetzung nach Anspruch 10, wobei die monomerische Einheit der Fromel III ein Block-Copolymer bildet.

12. Polymerisierbare Zusammensetzung nach Anspruch 4, wobei das Oligomer R ausgewählt ist aus den Gruppen der nachstehenden Formeln (i) bis (vii):
(i) -(X)ₚ(CH₂CH₂O)ₓR² 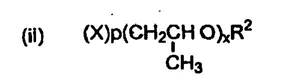 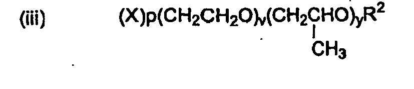
wobei die Monomereinheiten willkürlich oder in Block-Form verteilt sind
(iv) -(X)ₚCH₂O(CF₂CF2O)ₓR²; 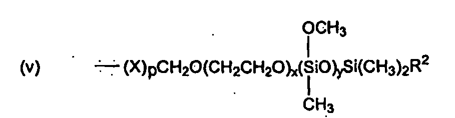
(vi) -Xₚ(CF₂CF₂O)_{z}-(CF₂)ₙR²
und
wobei X und R² und p vorstehend definiert sind und x, v und y die Anzahl der wiederholenden Einheiten sind, und wobei mindestens eine Oligomergruppe vorliegt, wobei die Gesamtzahl der Alkylenoxy- und fluorinierten Alkylenoxy-Monomereinheiten mindestens 7 beträgt.

13. Polymerisierbare Zusammensetzung nach Anspruch 4, wobei das Farbstoffmonomer der Formel IA bis IF entspricht: 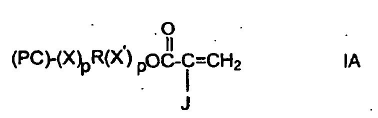
(PC)-(X)ₚR(X')ₚ-CH=CH₂ IB 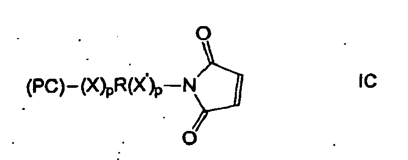 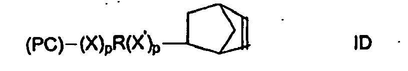
(PC)-(X)ₚR(X')ₚ(YH)_{w} IE
(PC)-XₚR(X')ₚ(NR'R")_{w} IF
wobei:
X eine verbindende Gruppe für das Oligomer ist;
X' eine Bindung oder Haftgruppe für die eine oder mehrere reaktiven Gruppen ist und bevorzugt aus der aus C₁- bis C₄-Alkylen bestehenden Gruppe ausgewählt ist;
wobei Y Sauerstoff oder Schwefel ist;
w die Anzahl der Hydroxy- oder Thiol-Gruppen am endständigen Ende des Oligomers ist und bevorzugt 1 bis 3 ist;
p unabhängig aus 0 und 1 ausgewählt ist;
PC ein photochromer Teil ist;
J Wasserstoff oder C₁- bis C₄-Alkyl ist (bevorzugt Wasserstoff oder Methyl);
R ein Oligomer gemäß Definition ist;
R' Wasserstoff, C₁- bis C₆-Alkyl oder substituiertes (C₁- bis C₆-) Alkyl ist; und
R" Wasserstoff (C₁- bis C₆-)Alkyl oder substituiertes (C₁- bis C₆-)Alkyl ist.

14. Polymerisierbare Zusammensetzung nach Anspruch 4, wobei das Oligomer R verbunden ist mit dem photochromen Teil (PC) durch eine Linkergruppe aus einer der aus IIa bis IIp aus gewählten Formeln: 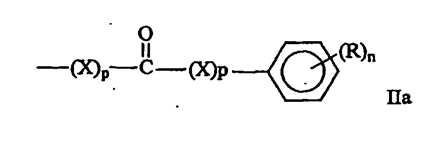 wobei n 1 bis 3 ist; 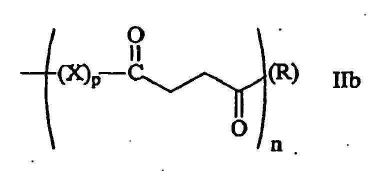 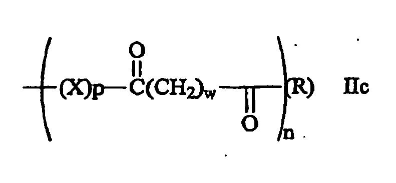
-(X)ₚ(CH₂)ₙCHR⁴(R) I Id 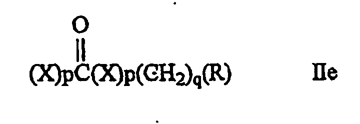 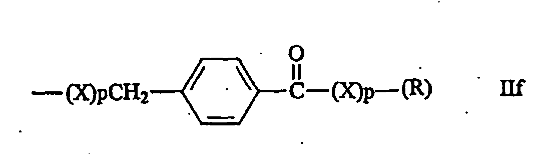
-(X)p(C₂ to C₆ alkylene)-(X)p-(R) IIg 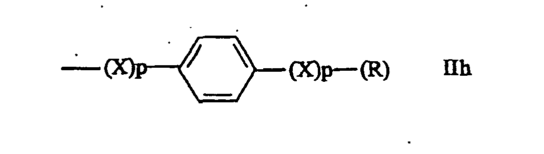 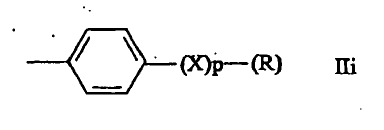 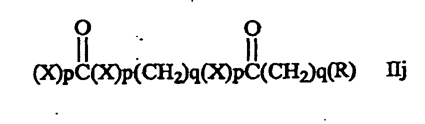 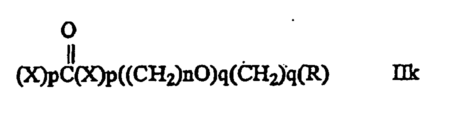 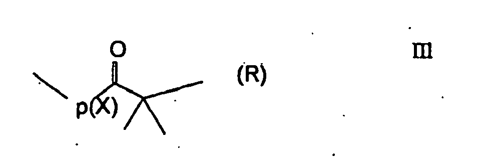 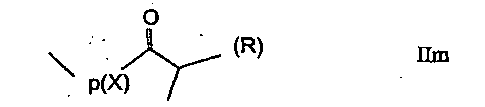 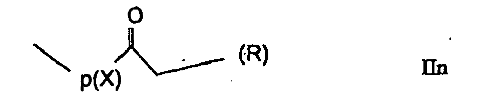 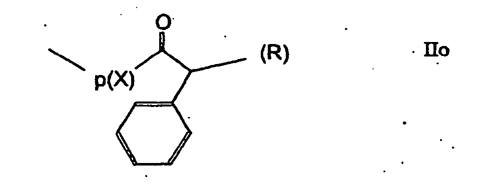 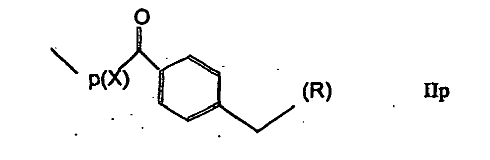
wobei in den Formeln IIa bis IIp
X, das gleich oder unterschiedlich sein kann, der vorstehenden Definition entspricht;
R⁴ aus der aus Hydroxy, Alkoxy, Amino und substituiertem Amino wie beispielsweise Alkylamino bestehenden Gruppe ausgewählt ist;
n eine Ganzzahl von 1 bis 3 ist;
w eine Ganzzahl von 1 bis 4 ist;
q eine Ganzzahl von 0 bis 15 ist;
p, das bei Vorliegen von mehr als einem gleich oder unterschiedlich sein kann, 0 oder 1 ist; und
(R) die Radiale zur Anlagerung des Oligomers R darstellt.

15. Polymerisierbare Zusammensetzung nach Anspruch 1, wobei die Monomerkomponente mindestens ein quervernetzendes Monomer umfasst.

16. Polymerisierbare Zusammensetzung nach Anspruch 1, wobei das resultierende Polymer mindestens eines umfasst, das aus der aus Polyestern, Urethanen, Polycarbonaten, Polyamiden, Epoxyden und Thiolen-Polymeren bestehenden Gruppe ausgewählt ist.

17. Polymerisierbare Zusammensetzung nach Anspruch 1, wobei die polymerisierbare Matrix Monomere umfasst, die ausgewählt sind aus der Gruppe bestehend aus Polyol(allyl-carbonat)monomeren, multifunktionalen Akrylat- und Methacrylatmonomeren, Akrylaten, Alkylakrylaten wie Methylmethacrylat, Zelluloseazetat, Zellulosetriazetat, Zelluloseazetatpropionat, Nitrozellulose Zelluloseazetat-Butyrat, Poly(Vinylazetat), Vinylalkohol, Vinylchlorid, Vinylidenchlorid, Polyurethanen, Polycarbonaten, Poly(ethylen-terephthalat), Polystyren, Copoly-(styren-Methylmethacrylat), Copoly(styren-Akrylatonitrile), Poly(vinylbutryal), und Homopolymeren und Copolymeren von Diacylidene-Pentaerythritol, insbesondere Comopolymeren mit Polyol(allylcarbonat)monomeren, wie z.B. Diethylenglycol-bis(allyl-carbonat), und Akrylatmonomeren.

18. Polymerisierbare Zusammensetzung nach Anspruch 1, wobei der photochrome Teil (PC) ausgewählt ist aus der Gruppe bestehend aus Chromenen, Spiropyranen; Spirooxazinen, Fulgiden, Fulgimiden, Anilen, Perimidinspirocyclohexadienonen, Stilbenen, Thioindigoiden, Azofarbstoffen und Diarylethenen und Diaryl-Perfluor-Cyclopentenen ausgewählt ist.

19. Polymerisierbare Zusammensetzung nach Anspruch 4, wobei der photochrome Teil (PC) aus der Gruppe bestehend aus Naphthopyranen, Benzopyranen, Indenonaphthopyranen, Phenanthropyranen, Spiro(benzindolinen)-Naphthopyranen, Spiro(indolin)benzopyranen, Spiro(indolin)naphthopyranen, Spiroquinopyranen, Spiro(indolin)pyranen, Spiro(indolin)naphthoxazinen, Spiro-(indolin)pyridobenzoxazinen, Spiro(benzindolin)pyridobenzoxazinen, Spiro(benzindolin)naphthoxazinen, Spiro(indolin)benzoxazinen, Fulgiden, Fulgimiden und Diaryl-Perfluor-Cyclopentenen ausgewählt ist.

20. Die polymerisierbare Zusammensetzung des Anspruchs 4, wobei die Monomerkomponente Diethylenglycolbis(allylcarbonat) umfasst.

21. Polymerisierbare Zusammensetzung nach Anspruch 1, wobei das Monomer mindestens eines umfasst, das aus der Gruppe bestehend aus Allyldiglycolcarbonatmonomer(en), Monomere-bildenden Polycarbonaten, Monomeren zur Bildung von Polyurea-Urethanen und polyfunktionalen Isocyanate(n) und Polythiol- oder Polyepisulfidmonomer(en) ausgewählt ist.

22. Polymerisierbare Zusammensetzung nach Anspruch 1, wobei die photochrome Verbindung eine oder mehrere reaktive Gruppen umfasst, welche aktive Wasserstoffgruppen (wie z.B. Hydroxyl, Amine und Alkylamine) umfassen, und die Monomerzusammensetzung ein Polyisocyanat- oder ein Epoxy-quervernetzendes Monomer umfassen.

23. Polymerisierbare Zusammensetzung nach Anspruch 1, welche ein Polymer mit einer Tg von mindestens 70° C nach dem Aushärten bildet.

24. Ein aus einer Zusammensetzung nach Anspruch 1 gebildeter photochromer Gegenstand mit einer Tg von mindestens 50° C.

25. Polymerisierbare Zusammensetzung nach Anspruch 1, wobei die Ausbleich-Halbwertzeit gegenüber der entsprechenden, den elektronisch äquivalenten photochromen Farbstoff ohne das Oligomer enthaltenden Zusammensetzung um mindestens 30% verkürzt ist.

26. Polymerisierbare Zusammensetzung nach Anspruch 1, wobei die Ausbleich-Halbwertzeit gegenüber der entsprechenden, die elektronisch äquivalenten photochrome Verbindung ohne das Oligomer umfassenden Zusammensetzung um mindestens 40% verkürzt ist.

27. Polymerisierbare Zusammensetzung nach Anspruch 1, wobei t¾ gegenüber der entsprechenden, den elektronisch äquivalenten photochromen Farbstoff ohne das Oligomer enthaltenden Zusammensetzung um mindestens 30% und bevorzugt um mindestens 50% verkürzt ist.

28. Photochromer Gegenstand umfassend eine polymerische Matrix gebildet aus einer Monomerzusammensetzung umfassend ein photochromes Monomer umfassend einen photochromen Teil, der an das Polymer über ein seitenständiges Oligomer angebunden ist, das mindestens 7 monomere Einheiten umfasst, die aus der aus Alkylenyloxy und Fluor-Alkylenyloxy (insbesondere Perfluor-Alkylenyloxy) bestehenden Gruppe ausgewählt sind.

29. Photochromer Gegenstand nach Anspruch 28, wobei die photochrome Farbstoff-monomerische Einheit der Formel I entspricht:
(PC)q-(L(R)n)m-
wobei:
PC ein photochromer Teil ist;
L eine Bindung bzw. verbindende Gruppe ist;
R ein Oligomer ist;
m und n unabhängig ausgewählte Ganzzahlen von 1 bis 8 sind;
q 1 oder 2 ist;
R unabhängig aus Oligomeren ausgewählt ist, die mindestens 7 monomere Einheiten umfassen, die aus der aus Alkylenyloxy, Fluor-Alkylenyloxy (insbesondere Perfluor-Aalkylenyloxy) bestehenden Gruppe ausgewählt sind; und
wobei mindestens ein Oligomer R eine reaktive Gruppe umfasst, die kovalent in die polymerische Matrix eingebunden ist.

30. Photochromer Gegenstand nach Anspruch 29, wobei der Gegenstand eine photochrome t½ hat, die mehr als 30% weniger beträgt als die t½ für den entsprechenden, den elektronisch äquivalenten photochromen Farbstoff ohne das Oligomer enthaltenden Gegenstand.

31. Photochromer Gegenstand nach Anspruch 29, wobei der photochromer Teil (PC) ausgewählt ist aus der Gruppe bestehend aus:
(a) Spirooxazinen der Formel III 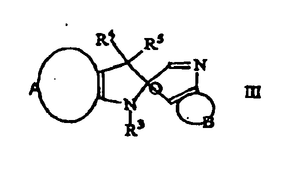 in der allgemeinen Formel III können R³, R⁴ und R⁵ gleich oder unterschiedlich sein und sie sind jeweils eine Alkylgruppe, eine Cycloalkylgruppe, eine Cycloarylalkylgruppe, eine Alkoxygruppe, eine Alklyleneoxyalkylgruppe, eine Alkoxycarbonylgruppe, eine Cyano-, eine Alkoxycarbonylalkylgruppe, eine Arylgruppe, eine Arylalkylgruppe, eine Aryloxygruppe, eine Alkylenthioalkylgruppe, eine Acylgruppe, eine Acyloxygruppe oder eine Aminogruppe, R⁴ und R⁵ können zusammen einen Ring bilden, und R³, R⁴ und R⁵ können optional jeweils (einen) Substituente(n) haben;
(b) Chromenen der Formel XX oder XX(d) 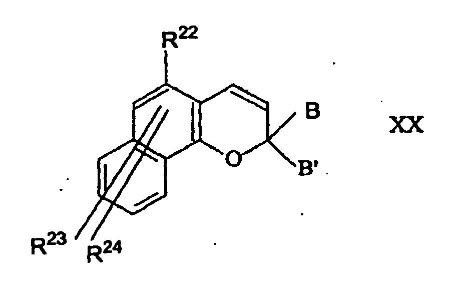 wobei
B und B' optional substituiertes Phenylaryl und Heteroaryl sind; und R²², R²³ und R²⁴ unabhängig ausgewählt sind aus Wasserstoff; Halogen; C₁- bis C₃-Alkyl; der Gruppe L(R)ₙ; und der Gruppe der Formel COW, wobei W gleich OR25, NR²⁶R²⁷ ist,
Piperidino oder Morpholino, wobei R²⁵ ausgewählt ist aus der Gruppe bestehend aus der aus C₁- bis C₆-Alkyl, Phenyl, (C₁- bis C₆-Alkyl)Phenyl, C1- bis C6-Alkoxyphenyl, Phenyl C₁- bis C₆-Alkyl (C₁- bis C₆-Alkoxy)Phenyl, C₁- bis C₆-Alkoxy C₂- bis C₄-Alkyl und der Gruppe L(R)ₙ; R₂₆ und R₂₇ sind jeweils ausgewählt aus der Gruppe bestehend aus C₁- bis C₆-Alkyl, C₅- bis C₇-Cycloalkyl, Phenyl, Phenyl substituiert durch ein oder zwei Gruppen ausgewählt aus C₁- bis C₆-Alkyl und C₁- bis C₆-Alkoxy und der Gruppe L(R)ₙ; R²² und R²³ können optional einen Carboxylring mit 5 oder 6 Ringliedern bilden, optional anelliert mit einem optional substituierten Benzen, und wobei mindestens eines der Substituenten ausgewählt aus der Gruppe von Substituenten bestehend aus B und B', R²², R²³, R²⁴, R²⁵, R²⁶ und R²⁷ die Gruppe L(R)ₙ ist;
Fulgiden und Fulgimiden der Formel XXX: 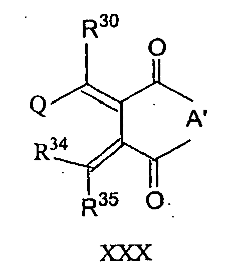 wobei
Q ausgewählt ist aus der Gruppe bestehend aus optional substituierten Aromaten, optional substituierten Heteroaromaten (wobei die Aromaten/Heteroaromaten mono- oder polycyclische Aromaten/Heteroaromaten sein können);
R³⁰ ausgewählt ist aus der Gruppe bestehend aus einem C₁- bis C₄-Alkyl, C₁- bis C₄ Alkoxyphenyl, Phenoxy-Mono- und Di(C1-C4)-Alkyl-substituiertes Phenyl oder Phen(C₁ bis C₄);
A' ausgewählt ist aus der Gruppe bestehend aus Sauerstoff oder =N-R³⁶, in der R³⁶ ein C₁-C₄-Alkyl oder ein optional substituiertes Phenyl ist;
R³⁴ und R³⁵ unabhängig ein C₁- bis C₄-Alkyl, Phenyl oder Phen(C₁ bis C₄)-Alkyl darstellen oder eine von und R³⁴, R³⁵ Wasserstoff ist und die andere eine der vorgenannten Gruppen ist, oder R³⁴R³⁵= eine Adamantylidingruppe darstellt;
wobei mindestens eine von Q, R³⁰, R³⁴ , R³⁵ und R³⁶ die Gruppe L(R)ₙ umfasst;
Azofarbstoffen der Formel XL 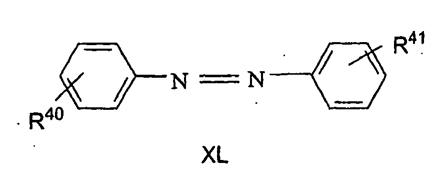 wobei
R⁴⁰ und R⁴¹ unabhängig ausgewählt sind aus der Gruppe bestehend aus Wasserstoff; C₁- bis C₆-Alkyl; C₁- bis C₆-Alkoxy; -NR⁴²R⁴³ wobei R⁴² und R⁴³ so sind wie für R²⁶ und R²⁷ definiert; Aryl (wie z.B. Phenyl) Aryl ersetzt durch einen oder mehrere Substituenten ausgewählt aus C₁- bis C₆-Alkyl und C₁- bis C₆-Alkoxy, substituiertes C₁- bis C₆-Alkyl wobei der Substituent ausgewählt ist aus Aryl und C₁- bis C₆-Alkoxy, substituiertem C₁- bis C₆-Alkoxy, wobei der Substituent ausgewählt ist aus C₁- bis C₆-Alkoxy, Aryl und Aryloxy; und
Diarylperfluorxocyclopentene der Formeln XXV und XXXVI: 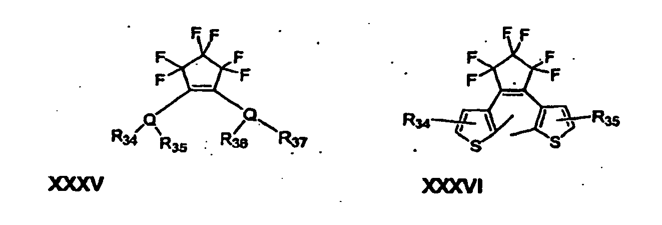 wobei
Q ausgewählt ist aus der Gruppe bestehend aus optional substituierten Aromaten, optional substituierten Heteroaromaten (wobei die Aromaten/Heteroaromaten mono- oder polycyclische Aromaten/Heteroaromaten sein können);
R³⁴, R³⁵ , R³⁶ , R³⁷ unabhängig ein C₁- bis C₄-Alkyl, Phenyl oder Phen(C₁- bis C₄-)Alkyl darstellen oder eine von und R³⁴, R³⁵ , R³⁶, R³⁷ Wasserstoff ist und die anderen eine der vorgenannten Gruppen ist; und
wobei mindestens eine von Q, R³⁴, R³⁵, R³⁶ und R³⁷ die Gruppe L(R)ₙ umfasst.

32. Photochromer Gegenstand nach Anspruch 29, wobei mindestens ein Oligomer R aus den Formeln (i) bis (v) entspricht:
(i) -(X)p(CH₂CH₂O)ₓX'R² 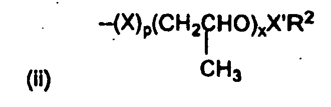 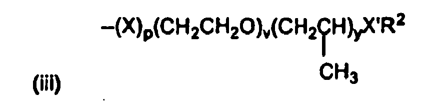
(iv) -(X)ₚCH₂(OCF₂CF₂)xX'R²
wobei die Monomereinheiten willkürlich oder in Blockform verteilt sind
(v) -Xₚ(CF₂CF₂O)ₓ- (CF₂)ₙX'R²
wobei x, v und y die Anzahl der wiederholenden Einheiten sind,
X ausgewählt ist aus Sauerstoff, Schwefel, Amino, substituiertem Amino und C₁-C₄-Alkylen;
X' eine Bindung oder eine Haftgruppe für eine oder mehrere reaktive Gruppen ist;
p 0 oder 1 ist;
n 1 bis 3 ist; und
R² ausgewählt ist aus der Gruppe bestehend aus Hydroxy, Mercapto, optional substituiertem Amino, (Meth)Acryl, (Meth)Acryloxy, Allyl, Allyloxy, Epoxy und Isocyanato, Keton, Aldehyd, Carbonsäure, Trithiocarbonate, Xanthate, Dithiocarbamate, Dithloester; Orthoester, (Mono-, Di- und Tri-)Alkoxysilane, (Mono-, Di- und Tri-)Halosilane, (Mono-, Di- und Tri-)Hydrosilane, Alkylhalid, Maleimido und weitere ungesättigte C=C enthaltende Gruppen.

33. Verfahren zur Vorbreitung eines photochromen Gegenstandes, folgendes umfassend:
(a) Bilden einer polymerisierbaren Zusammensetzung nach Anspruch 1;
(b) Gießen der photopolymerisierbaren Zusammensetzung oder Auftragen als Beschichtung auf ein Substrat; und
(c) Polymerisieren der polymerisierbaren Zusammensetzung zur Bereitstellung einer polymerischen Matrix, die eine photochrome monomerische Einheit enthält, umfassend einen photochromen Teil kovalent gebunden an das Matrixpolymer über ein Oligomer, das mindestens 7 aus der aus Alkylenyloxy und Fluor-Alkylenyloxy bestehenden Gruppe ausgewählte monomere Einheiten umfasst.

## Revendications

1. Composition polymérisable pour former un article photochromique possédant une température de transition vitreuse d'au moins 50 °C lors du durcissement de la composition comprenant :
(a) une composition polymérisable comprenant un composant monomère ; et
(b) un monomère colorant photochromique comprenant un fragment photochromique et au moins un groupe oligomère possédant au moins un groupe réactif avec le composant monomère pendant le durcissement, le groupe oligomère comprenant au moins sept motifs monomères de polyéther choisis parmi les groupes alkylénoxy et halogénoalkylénoxy.

2. Composition polymérisable selon la revendication 1, dans laquelle la composition polymérisable comprend moins de 20 % en poids du motif monomère alkylénoxy ou halogénoalkylénoxy prédominant constitué par le ou les groupes oligomères.

3. Composition polymérisable selon la revendication 1, dans laquelle la composition durcie offre une Tg d'au moins 50 °C et le t½ de la composition durcie est au moins 30 % inférieur au t½ de la composition correspondante possédant une configuration photochromique avec une équivalence électronique en l'absence de l'oligomère.

4. Composition polymérisable selon la revendication 1, dans laquelle le monomère colorant photochromique a la formule I :
(PC)_{q}-(L(R)ₙ)ₘ
dans laquelle
PC est un fragment photochromique ;
L est une liaison ou un groupe liant ;
R est un ou plusieurs oligomères ;
m et n sont des nombres entiers indépendamment choisis compris dans la plage allant de 1 à 3 ;
q vaut 1 ou 2 ;
R est indépendamment choisi parmi les oligomères comprenant au moins 7 motifs monomères choisis dans le groupe constitué par les groupes alkylényloxy et fluoroalkylényloxy, et
au moins un des oligomères R comprend au moins un groupe destiné à réagir avec la composition de monomère lors du durcissement de la composition polymérisable.

5. Composition polymérisable selon la revendication 1, dans laquelle le ou les groupes réactifs sont choisis dans le groupe constitué par un groupe amino ; un groupe alkylamino (y compris les groupes mono- et di-alkylamino) ; un groupe hydroxyle ; un groupe thio ; un groupe mercapto ; un groupe époxy ; un groupe carbamate ; un groupe alkylhalogène ; les groupes insaturés (tels que les groupes acryloyle, méthacryloyle, acryloyloxy, allyloxy et méthacryloyloxy); les groupes maléimides ; le groupe de formule -SiX¹X²X³ où X¹, X² et X³ sont indépendamment choisis dans le groupe constitué par un atome d'hydrogène, un atome d'halogène, un groupe hydrocarbyle et un groupe hydrocarbyloxy et où au moins un de X¹, X² et X³ est choisi parmi un atome d'hydrogène, un atome d'halogène et un groupe hydrocarbyloxy ; un groupe dithioester ; un groupe trithiocarbonate ; un groupe dithiocarbamate ; un groupe xanthate ; des acides carboxyliques ; des esters carboxyliques ; et un groupe alkyle en C₁-C₆ substitué par un groupe choisi parmi les groupes hydroxy, thio, amino, alkylamino, carboxyle, (alcoxy en C₁-C₆)carboxyle, acryloyle, méthacryloyle, acryloyloxy et méthacryloyloxy.

6. Composition polymérisable selon la revendication 4, dans laquelle au moins un des oligomères R comprend un groupe insaturé terminal.

7. Composition polymérisable selon la revendication 4, dans laquelle au moins un des oligomères R comprend un groupe insaturé choisi dans le groupe constitué par les groupes (méth)acryloyle, (méth)acryloyloxy, allyle et allyloxy.

8. Composition polymérisable selon la revendication 1, dans laquelle au moins un groupe oligomère pendant comprend au moins sept motifs monomères choisis parmi les groupes alkylénoxy en C₂-C₄ et perfluoroalkylénoxy.

9. Composition polymérisable selon la revendication 8, dans laquelle le ou les oligomères sont choisis dans les groupes de formule II :
-(X)ₚ(R¹)_{q}-X¹R² II
dans laquelle
X est choisi parmi un atome d'oxygène, un atome de soufre, un groupe amino, un groupe amino substitué et un groupe alkylène en C₁-C₄ ;
X¹ est une liaison ou un groupe d'attachement pour un ou plusieurs groupes réactifs ;
p vaut 0 ou 1 ;
q est le nombre de motifs monomères et vaut au moins sept ;
R¹, qui peuvent être identiques ou différents, sont choisis dans le groupe constitué par :
un groupe alkylénoxy en C₂-C₄ et un groupe halogénoalkylénoxy en C₂-C₄ ; et
R² est choisi dans le groupe constitué par les groupes hydroxy, thio, amino éventuellement substitué, (méth)acrylyle, (méth)acrylyloxy, allyle, allyloxy, époxy et isocyanato.

10. Composition polymérisable selon la revendication 1, dans laquelle le ou les oligomères comprennent au moins trois motifs alkylène de formule III : 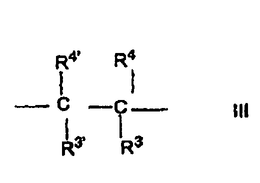 dans laquelle
R³ est choisi dans le groupe constitué par un atome d'hydrogène, un atome d'halogène, les groupes hydroxy, alcoxy, aryle, aryloxy, hétérocyclique, arylalkyle, alkylaryle, carboxyle, nitrile, alcoxycarbonyle, alcoxycarbonyle substitué, carbamoyle, N-alkylcabamoyle, N,N-dialkylcarbamoyle, carbaniloyle, alkylphénylaminocarbonyle, alcoxyphénylaminocarbonyle, acyle, acyle substitué et les groupes de formules :
-L'-(O)_{q}-(Z-O)ₚ-ZY' ;
et 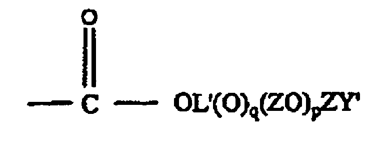 dans lesquelles
p est le nombre de motifs (ZO) et vaut de préférence de 1 à 20 et plus préférablement de 2 à 15, q vaut 0 ou 1, Z est choisi dans le groupe constitué par les groupes alkylène en C₂-C₄, dialkylsilyle, diarylsilyle et diaryloxysilyle ; L' est une liaison ou un groupe liant tel que les groupes alkylène en C₁-C₆, aryle, alkaryle et aralkyle ; et Y' est un groupe terminal choisi dans le groupe constitué par un atome d'hydrogène, les groupes alkyle, hydroxyle et alcoxy, alcoxyalcoxy, hydroxyalcoxy et aryloxy, tri(alkyle en C₁-C₆)silane, di(alkyle en C₁-C₆)phénylsilane ;
R^{3'} est un atome d' hydrogène ou un atome d'halogène et R³ et R^{3'} peuvent former ensemble un groupe de formule : 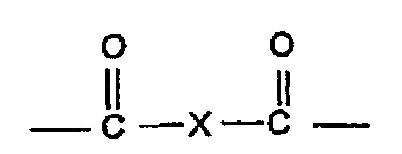 dans laquelle
X est choisi dans le groupe constitué par un atome d'oxygène et le groupe NR⁷R⁸ où R⁷ et R⁸ sont indépendamment choisis dans le groupe constitué par un atome d'hydrogène, les groupes alkyle, aryle, alkyle substitué et aryle substitué ; et
R⁴ est choisi dans le groupe constitué par un atome d'hydrogène, un atome d'halogène, les groupes alkyle, hydroxy, hydroxyalkyle, nitrile et alcoxy.

11. Composition polymérisable selon la revendication 10, dans laquelle le motif monomère de formule III forme un copolymère séquencé.

12. Composition polymérisable selon la revendication 4, dans laquelle l'oligomère R est choisi parmi les groupes de formules (i) à (vii) suivantes :
(i) -(X)_{P}(CH₂CH₂O)ₓR² 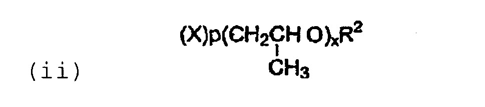 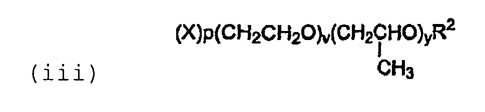
où les motifs monomères sont distribués de manière statistique ou sous la forme d'une séquence
(iv) -(X)ₚCH₂O(CF₂CF₂O)ₓR²; 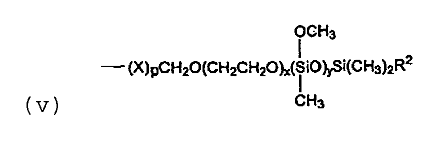
(vi) -Xₚ(CF₂CF₂O)_{z}-(CF₂)ₙR²
et
où X et R² et p sont tels que définis ci-dessus et x, v et y sont le nombre de motifs répétitifs, et où au moins un groupe oligomère est présent dans lequel le nombre total de motifs monomères alkylénoxy et alkylénoxy fluoré est au moins 7.

13. Composition polymérisable selon la revendication 4, dans laquelle le monomère colorant est de formule IA à IF : 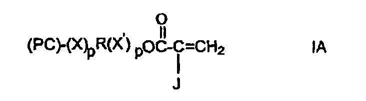
(PC)-(X)ₚR(X')ₚ-CH=CH₂ IB 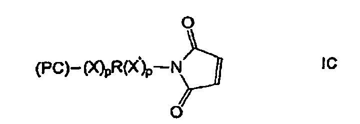 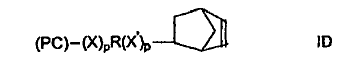
(PC)-(X)ₚR(X')ₚ(YH)_{w} IE
(PC)-XₚR(X')ₚ(NR'R")_{w} IF
où
X est un groupe liant pour l'oligomère ;
X' est une liaison ou un groupe d'attachement pour le ou les groupes réactifs et est de préférence choisi dans le groupe constitué par un groupe alkylène en C₁-C₄ ;
Y est un atome d'oxygène ou de soufre ;
w est le nombre de groupes hydroxy ou thiol en l'extrémité terminal de l'oligomère et est de préférence compris dans la plage allant de 1 à 3 ;
p vaut indépendamment 0 ou 1 ;
PC est un fragment photochromique ;
J est un atome d'hydrogène ou un groupe alkyle en C₁-C₄ (de préférence un atome d'hydrogène ou un groupe méthyle) ;
R est un oligomère tel que défini ;
R' est un atome d'hydrogène, un groupe alkyle en C₁-C₆ ou un groupe alkyle en C₁-C₆ substitué ; et
R" est un atome d'hydrogène, un groupe alkyle en C₁-C₆ ou un groupe alkyle en C₁-C₆ substitué.

14. Composition polymérisable selon la revendication 4,
dans laquelle l'oligomère R est lié au fragment photochromique (PC) par un groupe liant de l'une quelconque des formules IIa à IIp 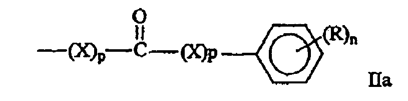 où n vaut 1 à 3 ; 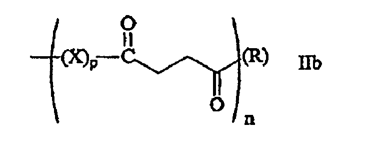 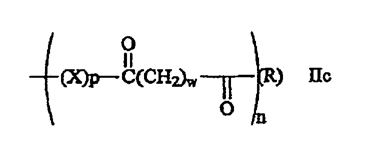
-(X)ₚ(CH₂)ₙCHR⁴(R) IId 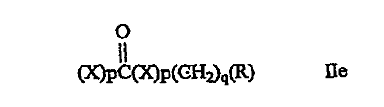 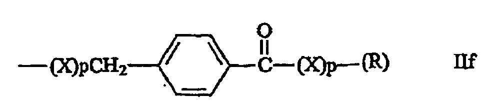
-(X)ₚ(C₂ to C₆ alkylene)-(X)ₚ-(R) IIg 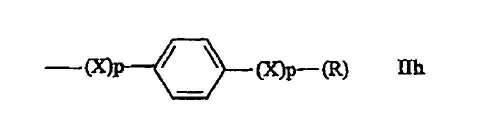 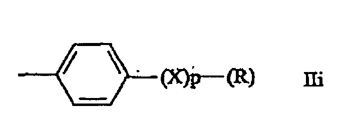 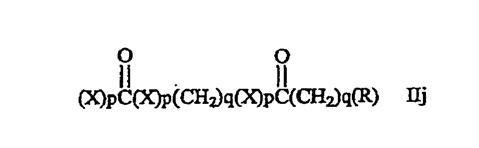 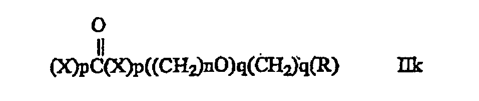 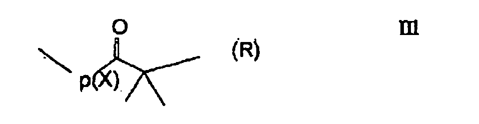 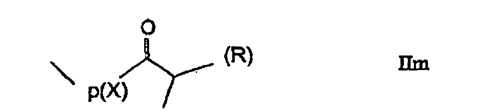 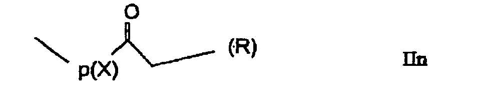 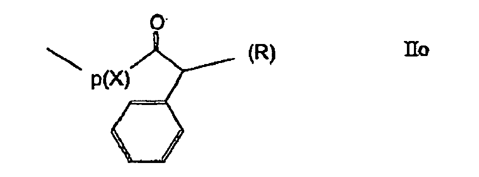 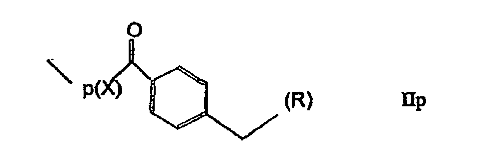
où dans les formules IIa à IIp :
X, qui peut être identique ou différent, est tel que défini ci-dessus ;
R⁴ est choisi dans le groupe constitué par les groupes hydroxy, alcoxy, amino et amino substitué tel qu'un groupe alkylamino ;
n est un entier compris dans la plage allant de 1 à 3 ;
w est un entier compris dans la plage allant de 1 à 4 ;
q est un entier compris dans la plage allant de 0 à 15 ;
p, qui lorsqu'il y en a plus d'un peut être identique ou différent, vaut 0 ou 1 ; et
(R) montre le radical pour l'attachement de l'oligomère R.

15. Composition polymérisable selon la revendication 1, dans laquelle le composant monomère comprend au moins un monomère de réticulation.

16. Composition polymérisable selon la revendication 1, dans laquelle le polymère résultant comprend au moins un polymère choisi dans le groupe constitué par les polyesters, les uréthanes, les polycarbonates, les polyamides, les époxy et les polymères de thiolène.

17. Composition polymérisable selon la revendication 1, dans laquelle la matrice polymérisable comprend des monomères choisis dans le groupe constitué par les monomères de polyol(carbonate d'allyle), les monomères d'acrylate et de méthacrylate multifonctionnels, les acrylates, les acrylates d'alkyle tels que le méthacrylate de méthyle, l'acétate de cellulose, le triacétate de cellulose, l'acétopropionate de cellulose, la nitrocellulose, l'acétobutyrate de cellulose, le poly(acétate de vinyle), l'alcool vinylique, le chlorure de vinyle, le chlorure de vinylidène, les polyuréthanes, les polycarbonates, le poly(téréphtalate d'éthylène), le polystyrène, le copoly(styrène-méthacrylate de méthyle), le copoly(styrène-acrylatéonitrile), le poly(vinylbutryal) et les homopolymères et les copolymères de diacylidène pentaérythritol, en particulier les copolymères ayant des monomères de polyol(carbonate d'allyle), par exemple le bis(carbonate d'allyle) de diéthylène glycol, et les monomères d'acrylate.

18. Composition polymérisable selon la revendication 1, dans laquelle le fragment photochromique (PC) est choisi dans le groupe constitué par les chromènes, les spiropyranes, les spiro-oxazines, les fulgides, les fulgimides, les anils, les périmidinespirocyclohexadiénones, les stilbènes, les thioindigoïdes, les colorants azo et les diaryléthènes et les diarylperfluorocyclopentènes.

19. Composition polymérisable selon la revendication 4, dans laquelle le fragment photochromique (PC) est choisi dans le groupe constitué par les naphtopyranes, les benzopyranes, les indénonaphtopyranes, les phénanthropyranes, les spiro-(benzindoline)naphtopyranes, les spiro(indoline)benzopyranes, les spiro(indoline)naphtopyranes, les spiroquinopyranes, les spiro(indoline)pyranes, les spiro(indoline)naphtoxazines, les spiro(indoline)pyridobenzoxazines, les spiro(benzindoline)-pyridobenzoxazines, les spiro(benzindoline)naphtoxazines, les spiro(indoline)benzoxazines, les fulgides, les fulgimides et les diarylperfluorocyclopentènes.

20. Composition polymérisable selon la revendication 4, dans laquelle le composant monomère comprend le bis(carbonate d'allyle) de diéthylène glycol.

21. Composition polymérisable selon la revendication 1, dans laquelle le monomère comprend au moins un monomère choisi dans le groupe constitué par les monomères de carbonate d'allyldiglycol, les monomères formant des polycarbonates, les monomères pour la formation de polyurée-uréthanes et les isocyanates polyfonctionnels et les monomères de polythiol ou de polyépisulfure.

22. Composition polymérisable selon la revendication 1, dans laquelle le composé photochromique comprend un ou plusieurs groupes réactifs comprenant des groupes à hydrogène actif (tels que les groupes hydroxyle, amine et alkylamine) et la composition de monomère comprend un monomère de réticulation polyisocyanate ou époxy.

23. Composition polymérisable selon la revendication 1, qui forme un polymère possédant une Tg d'au moins 70 °C lors du durcissement.

24. Article photochromique formé à partir d'une composition selon la revendication 1, ledit article photochromique possédant une Tg d'au moins 50 °C.

25. Composition polymérisable selon la revendication 1, dans laquelle la demi-vie du fondu est réduite par au moins 30 % par comparaison à la composition correspondante contenant le colorant photochromique électroniquement équivalent sans oligomère.

26. Composition polymérisable selon la revendication 1, dans laquelle la demi-vie du fondu est réduite par au moins 40 % par comparaison à la composition correspondante contenant le composé photochromique électroniquement équivalent sans oligomère.

27. Composition polymérisable selon la revendication 1, dans laquelle t¾ est réduit par au moins 30 % par comparaison à la composition correspondante contenant le colorant photochromique électroniquement équivalent sans oligomère, et de préférence par au moins 50 %.

28. Article photochromique comprenant une matrice polymère formée à partir d'une composition de monomère comprenant un monomère photochromique comprenant un fragment photochromique qui est attaché au polymère par l'intermédiaire d'un oligomère pendant comprenant au moins 7 motifs monomères choisis dans le groupe constitué par les groupes alkylényloxy et fluoroalkylényloxy (en particulier le groupe perfluoroalkylényloxy).

29. Article photochromique selon la revendication 28, dans lequel le motif monomère colorant photochromique a la formule I :
(PC)_{q}-(L(R)ₙ)ₘ
dans laquelle
PC est un fragment photochromique ;
L est une liaison ou un groupe liant ;
R est un ou plusieurs oligomères ;
m et n sont des nombres entier indépendamment choisis dans la plage allant de 1 à 3 ;
q vaut 1 ou 2 ;
R est indépendamment choisi parmi les oligomères comprenant au moins 7 motifs monomères choisis dans le groupe constitué par les groupes alkylényloxy et fluoroalkylényloxy (en particulier le groupe perfluoroalkylényloxy) ; et
au moins un des oligomères R comprend un groupe réactif qui est incorporé de manière covalente dans la matrice polymère.

30. Article photochromique selon la revendication 29, dans lequel l'article a un t½ photochromique qui est plus de 30 % inférieur au t½ de l'article correspondant contenant le colorant photochromique électroniquement équivalent sans oligomère.

31. Article photochromique selon la revendication 29, dans lequel le fragment photochromique (PC) est choisi dans le groupe constitué par :
(a) les spiro-oxazines de formule III : 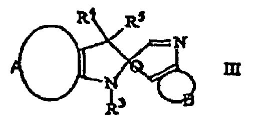 dans laquelle R³, R⁴ et R⁵ peuvent être identiques ou différents et sont chacun un groupe alkyle, un groupe cycloalkyle, un groupe cycloarylalkyle, un groupe alcoxy, un groupe alkylénoxyalkyle, un groupe alcoxycarbonyle, un groupe cyano, un groupe alcoxycarbonylalkyle, un groupe aryle, un groupe arylalkyle, un groupe aryloxy, un groupe alkylènethioalkyle, un groupe acyle, un groupe acyloxy ou un groupe amino, R⁴ et R⁵ peuvent ensemble former un cycle, et R³, R⁴ et R⁵ peuvent éventuellement comprendre chacun un ou plusieurs substituants ;
(b) les chromènes de formule XX ou XX(d) : 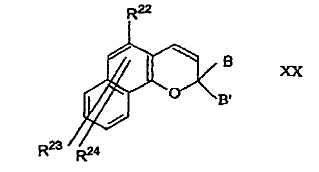 dans laquelle
B et B' sont des groupes phénylaryle et hétéroaryle éventuellement substitués ; et
R²², R²³ et R²⁴ sont indépendamment choisis parmi un atome d'hydrogène ; un atome d'halogène ; un groupe alkyle en C₁-C₃; le groupe L(R)ₙ ; et le groupe de formule COW où W est OR²⁵, NR²⁶R²⁷, pipéridino ou morpholino, où R²⁵ est choisi dans le groupe constitué par les groupes alkyle en C₁-C₆, phényle, (alkyle en C₁-C₆)phényle, (alcoxy en C₁-C₆)phényle, phényl (alkyle en C₁-C₆) (alcoxy en C₁-C₆) phényle, (alcoxy en C₁-C₆) alkyle en C₂-C₄ et le groupe L(R)ₙ ; R₂₆ et R₂₇ sont chacun choisis dans le groupe constitué par les groupes alkyle en C₁-C₆, cycloalkyle en C₅-C₇, phényle, phényle substitué par un ou deux groupes choisis parmi les groupes alkyle en C₁-C₆ et alcoxy en C₁-C₆ et le groupe L(R)ₙ ;
R²² et R²³ peuvent éventuellement former un cycle carboxylique de 5 ou 6 éléments du cycle éventuellement condensé à un benzène éventuellement substitué ; et
dans laquelle au moins un des substituants choisis dans le groupe des substituants constitués par B, B', R²², R²³, R²⁹, R²⁵, R²⁶ et R²⁷ est le groupe L(R)ₙ ;
(c) les fulgides et les fulgimides de formule XXX : 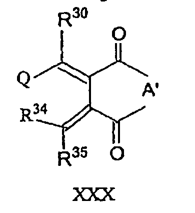 dans laquelle
Q est choisi dans le groupe constitué par un groupe aromatique éventuellement substitué, un groupe hétéroaromatique éventuellement substitué (où ledit groupe aromatique/hétéroaromatique peut être un groupe aromatique/hétéroaromatique mono- ou polycyclique) ;
R³⁰ est choisi dans le groupe constitué par un groupe alkyle en C₁-C₄, un groupe (alcoxy en C₁-C₄)phényle, un groupe phénoxy, un groupe phényle substitué par un groupe mono- et dialkyle en C₁-C₄ ou un groupe phénalkyle en C₁-C₄ ;
A' est choisi dans le groupe constitué par un atome d'oxygène ou =NR³⁶, où R³⁶ est un groupe alkyle en C₁-C₄ ou un groupe phényle éventuellement substitué ;
R³⁹ et R³⁵ représentent indépendamment un groupe alkyle en C₁-C₄, un groupe phényle ou un groupe phénalkyle en C₁-C₄ ou un de R³⁴ et R³⁵ est un atome d' hydrogène et l'autre est l'un des groupes susmentionnés, ou R³⁴R³⁵ représente un groupe adamantylidine ;
dans laquelle au moins un de Q, R³⁰, R³⁴, R³⁵ et R³⁶ comprend le groupe L(R)ₙ ;
(d) les colorants azo de formule XL : 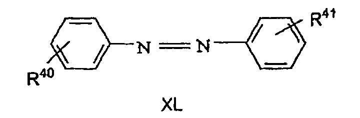 dans laquelle R⁴⁰ et R⁴¹ sont indépendamment choisis dans le groupe constitué par un atome d'hydrogène ; un groupe alkyle en C₁-C₆ ; un groupe alcoxy en C₁-C₆ ; -NR⁴²R⁴³ où R⁴² et R⁴³ sont tels que définis pour R²⁶ et R²⁷ ; un groupe aryle (tel qu'un groupe phényle) ou un groupe aryle substitué par un ou plusieurs substituants choisis parmi les groupes alkyle en C₁-C₆, alcoxy en C₁-C₆ et alkyle en C₁-C₆ substitué où le substituant est choisi parmi les groupes aryle, alcoxy en C₁-C₆ et alcoxy en C₁-C₆ substitué où le substituant est choisi parmi les groupes (alcoxy en C₁-C₈)aryle et aryloxy ; et
(e) les diarylperfluoroxocyclopentènes de formules XXV et XXXVI : 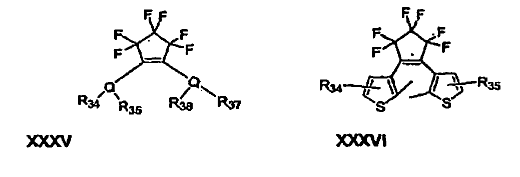 dans lesquelles
Q est choisi dans le groupe constitué par un groupe aromatique éventuellement substitué, un groupe hétéroaromatique éventuellement substitué (où ledit groupe aromatique/hétéroaromatique peut être un groupe aromatique/hétéroaromatique mono- ou polycyclique) ;
R³⁴, R³⁵, R³⁶ et R³⁷ représentent indépendamment un groupe alkyle en C₁-C₄, un groupe phényle ou un groupe phénalkyle en C₁-C₄ ou l'un de R³⁴, R³⁵, R³⁶ et R³⁷ est un atome d' hydrogène et les autres sont l'un des groupes susmentionnés ; et
dans lesquelles au moins un de Q, R³⁴, R³⁵, R³⁶ et R³⁷ comprend le groupe L(R)ₙ.

32. Article photochromique selon la revendication 29, dans lequel au moins un oligomère R est de formule (i) à (v) :
(i) -(X)p(CH₂CH₂O)ₓX'R² 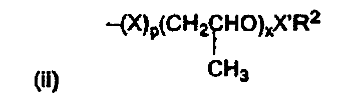 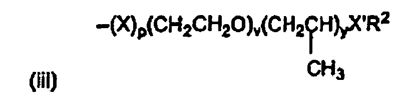
(iv) -(X)ₚCH₂(OCF₂CF₂)ₓX'R²
où les motifs monomères sont distribués statistiquement ou sous la forme d'une séquence
(v) -Xₚ(CF₂CF₂O)ₓ- (CF₂)nX'R²
où x, v et y sont le nombre de motifs répétitifs,
X est choisi parmi un atome d'oxygène, un atome de soufre, un groupe amino, un groupe amino substitué et un groupe alkylène en C₁-C₄ ;
X' est une liaison ou un groupe d'attachement pour le ou les groupes réactifs ;
p vaut 0 ou 1 ;
n est compris dans la plage allant de 1 à 3 ; et
R² est choisi dans le groupe constitué par les groupes hydroxy, mercapto, amino éventuellement substitué, (méth)acryle, (méth)acryloxy, allyle, allyloxy, époxy et isocyanato, cétone, aldéhyde, acide carboxylique, trithiocarbonate, xanthate, dithiocarbamate, dithioester, orthoester, (mono, di et tri)alcoxysilane, (mono, di et tri)halogénosilane, (mono, di et tri)hydrosilane, halogénure d'alkyle, maléimido et d'autres groupes contenant une liaison C=C insaturée.

33. Procédé de préparation d'un article photochromique comprenant :
(a) la formation d'une composition polymérisable selon la revendication 1 ;
(b) le coulage de la composition photopolymérisable ou son application en tant que revêtement sur un substrat ; et
(c) la polymérisation de la composition polymérisable pour offrir une matrice polymère incorporant un motif monomère photochromique comprenant un fragment photochromique attaché de manière covalente au polymère de la matrice par l'intermédiaire d'un oligomère comprenant au moins 7 motifs monomères choisis dans le groupe constitué par les groupes alkylényloxy et fluoroalkylényloxy.
